# EUROPÄISCHE PATENTSCHRIFT

(11) **EP 3 485 472 B1**
(45) Veröffentlichungstag und Bekanntmachung des Hinweises auf die Patenterteilung: **01.04.2020**
(21) Anmeldenummer: 17730169.4
(22) Anmeldetag: 15.06.2017
(51) Int. Cl.: G08B 17/00, G08B 29/18

(54) **SYSTEM UND VERFAHREN ZUR VERIFIZIERTEN BESTIMMUNG EINES BRANDZUSTANDS SOWIE FAHRZEUG UND ZENTRALEINHEIT DAFÜR**
SYSTEM AND METHOD FOR THE VERIFIED DETERMINING OF A FIRE STATUS, AS WELL AS VEHICLE AND CENTRAL UNIT FOR THIS PURPOSE
SYSTÈME ET PROCÉDÉ DE DÉTERMINATION VÉRIFIÉE D'UN ÉTAT D'INCENDIE AINSI QUE VÉHICULE ET UNITÉ CENTRALE ASSOCIÉS

(30) Priorität: 12.07.2016 DE 102016212643
(43) Veröffentlichungstag der Anmeldung: 22.05.2019
(73) Patentinhaber: Minimax GmbH & Co. KG, 23840 Bad Oldesloe (DE)
(72) Erfinder: LEHNING, Ralf, 23843 Bad Oldesloe (DE)
(74) Vertreter: Eisenführ Speiser
(86) Internationale Anmeldenummer: PCT/EP2017/064664
(87) Internationale Veröffentlichungsnummer: WO 2018/010909

(56) Entgegenhaltungen:
- WO-A1-2015/029007
- KR-A- 20130 098 592
- KR-A- 20140 127 574

## Beschreibung

Die Erfindung betrifft ein System und ein Verfahren zur Bestimmung eines verifizierten Brandzustands, sowie ein unbemanntes Fahrzeug und eine Zentraleinheit, die jeweils für das genannte System verwendet werden können.

Aus dem Stand der Technik sind Brandmeldeanlagen, die auch als Brandmeldesysteme bezeichnet werden, bekannt. Die Brandmeldeanlagen dienen zur frühzeitigen Erkennung eines Brandes, um basierend hierauf Gegenmaßnahmen einzuleiten.

Zur Erkennung eines Brands werden sogenannte Brandmelder eingesetzt. Hierbei handelt es sich vorzugsweise um sogenannte automatische Brandmelder. Von dem Brandmelder kann ein zu dem erkannten Brand korrespondierendes Signal an eine Brandmelderzentrale übermittelt werden. Daraufhin kann die Brandmelderzentrale ein Alarmsignal auslösen und/oder Folgeaktionen einleiten. Anschließend kann der erkannte Brand mittels einer Löschanlage gelöscht werden.

Brandmelder werden oftmals in gefährdeten Gebäuden und/oder Bereichen installiert. So kann ein Brandmelder beispielsweise in einer Fabrikhalle installiert sein. Dabei kann es zu Rauch- und/oder Wärmeentwicklungen kommen, die auf übliche Produktionsprozesse zurückzuführen sind. Es kann deshalb vorkommen, dass von dem Brandmelder ein scheinbarer Brand erkannt wird, obwohl tatsächlich kein Brand besteht. Mit anderen Worten kann eine fehlerhafte Erkennung mittels eines Brandmelders auftreten. Dies führt nach der Übermittlung eines entsprechenden Signals von dem Brandmelder an die Brandmelderzentrale sodann zu einem sogenannten Fehlalarm. In der Praxis wurde festgestellt, dass Brandmelder nicht selten einen Brand fälschlicherweise erkennen, obwohl kein Brand vorliegt. Somit kann es in entsprechender Häufigkeit zu Fehlalarmen kommen.

Wird aufgrund eines Fehlalarms eine Löschaktion mittels einer Löschanlage eingeleitet, so können Schäden in dem Bereich entstehen, der von der Löschanlage fälschlicherweise gelöscht wird. Um derartige Schäden zu vermeiden, findet nach dem Eingang des Alarmsignals in der Brandmelderzentrale oftmals eine Begehung eines Bereichs statt, für den der Brandmelder den Brand erkannt hat, um zu verifizieren, ob der Brand von dem Brandmelder korrekterweise oder ggf. fälschlicherweise erkannt wurde. Die begehende Person meldet sodann das Ergebnis der Überprüfung an eine weitere Person, die mittels einer Eingabeeinheit Zugriff auf die Brandmelderzentrale hat. Wurde der Brand durch den zuvor erläuterten Ablauf verifiziert bzw. bestätigt, findet basierend hierauf erst eine Folgeaktion, wie beispielsweise das Löschen des Brands, statt. Wird hingegen durch die begehende Person der von dem Brandmelder angeblich erkannte Brand nicht bestätigt, handelt es sich also um eine fehlerhafte Erkennung, so wird auch diese Information an die weitere Person an der Brandmelderzentrale übermittelt, so dass die Folgeaktion, wie die Löschung des angeblichen Brands, verhindert werden kann. Dies bietet den Vorteil, dass mögliche Folgeschäden durch eine nicht notwendige Löschung verhindert werden können.

Zwischen dem Eintreffen eines Signals von einem Brandmelder über einen erkannten Brand und dem Eintreffen der Person an dem Ort, für den der Brandmelder den Brand erkannt hat, kann eine bestimmte Zeit vergehen. Dabei kann die Dauer der bestimmten Zeit unterschiedlich lang sein, insbesondere je nachdem, für welchen Ort der Brand erkannt wurde und wer für die genannte Begehung zuständig ist. Um Sach- und/oder Personenschäden bei einem tatsächlichen Brand möglichst zu vermeiden, wäre jedoch eine zeitnahe Brandbekämpfung wünschenswert, da ein tatsächlicher Brand mit fortlaufender Zeit oftmals zu exponentiell ansteigenden Sach- und/oder Personenschäden führen kann.

Vor diesem Hintergrund ist es aus dem Stand der Technik bekannt, fest installierte Kameras zur Überwachung von Bereichen vorzusehen, die ebenfalls von Brandmeldern überwacht werden. Wird nun von einem Brandmelder ein Brand erkannt, kann mittels einer Kamera überprüft werden, ob ein entsprechender Brand tatsächlich vorherrscht oder nicht. Aufgrund des hohen Aufwands zur Anschaffung und/oder Installation von entsprechenden, fest installierten Kameras sowie aufgrund rechtlicher Beschränkungen im Hinblick auf den Schutz der entsprechenden Videodaten kommen derartige Kameras nur selten zum Einsatz.

KR 102 014 012 7574 A offenbart ein Brandüberwachungssystem, das ein unbemanntes Luftfahrzeug (UAV) verwendet, um falsche Brandmeldungen zu reduzieren. Das Brandüberwachungssystem weist eine Brandüberwachungseinheit auf, die einen vermuteten Brandbereich durch Analysieren eines Bildes eines umgebenden Bereichs bestimmt und ein UAV-Steuersignal entsprechend der Bildanalyse generiert. Das UAV-Steuersignal wird von einem Steuersignal-Erzeugungsmodul erzeugt.

Eine UAV-Steuereinheit, die das UAV-Steuersignal von der Brandüberwachungseinheit empfängt, steuert das UAV auf der Basis des empfangenen UAV-Steuersignals. Das UAV des Systems, bewegt sich mittels der Steuerung der UAV-Steuereinheit zu dem vermuteten Brandbereich, um ein Bild zu erhalten, Flammen zu detektieren und zu bestimmen, ob ein Feuer in dem entsprechenden vermuteten Brandbereich ausgebrochen ist, wobei die Brandüberwachungseinheit ein erstes Kameramodul aufweist um ein Bild zu erhalten. Ein Bildanalysemodul, das einen vermuteten Brandbereich auf der Basis des durch das erste Kameramodul erhaltenen Bildes bestimmt berechnet die Ortsinformation des vermuteten Brandbereichs auf der Grundlage einer elektronischen Karte, die in einer geographischen Ortsinformationsdatenbank enthalten ist.

Ferner offenbart KR 102 014 012 7574 A ein erstes Kommunikationsmodul, das von einem Steuerungsserver ein Steuersignal bezüglich der Brandüberwachung empfängt und überträgt das erhaltenen Bild einschließlich des vermuteten Brandbereichs und der von dem Bildanalyse-Modul analysierten Information an den Steuerungsserver und überträgt das erhaltenen Bild einschließlich des vermuteten Feuerbereichs und des von dem signalgenerierenden Modul erzeugten UAV-Steuersignals zur UAV-Steuerung.
Nachteilig an dieser Lösung ist die Beschränkung auf Bilddatenanalyse zur Branderkennung und die fehlende Einbindung in Brandmeldesysteme, die eine Zentraleinheit und stationäre Brandmelder aufweisen.

Der Erfindung liegt deshalb die Aufgabe zugrunde, ein System, ein Verfahren und/oder eine Vorrichtung bereitzustellen, das bzw. die eine kostengünstige, schnelle und/oder vielseitig einsetzbare Überprüfung eines von einem Brandmelder erkannten Brands ermöglicht.

Gemäß einem ersten Aspekt der Erfindung wird die genannte Aufgabe gelöst durch ein System mit den Merkmalen des Anspruchs 1. Vorteilhafte Ausgestaltungen des Systems und bevorzugte Ausführungsformen des Systems sind in den zugehörigen Unteransprüchen und in der nachfolgenden Beschreibung wiedergegeben.

Es wird ein System zur Bestimmung eines verifizierten Brandzustands, der vorzugsweise als verifizierter Referenzbrandzustand bezeichnet wird, vorgeschlagen. Das System weist eine Zentraleinheit, einen stationären Brandmelder und ein unbemanntes Fahrzeug auf. Der stationäre Brandmelder wird auch als Brandmelder bezeichnet. Der Brandmelder weist eine Brandmeldersensoreinheit auf, die zur Erfassung einer Referenzbrandkenngröße eines Brandmelderüberwachungsbereichs ausgebildet ist. Der Brandmelder ist zur Bestimmung eines Referenzbrandzustands durch Auswertung der Referenzbrandkenngröße ausgebildet. Der Brandmelder ist zur Übertragung eines Brandmeldersignals, das den Referenzbrandzustand repräsentiert, an die Zentraleinheit ausgebildet. Die Zentraleinheit ist dazu konfiguriert, in dem Fall, dass das von dem Brandmelder übertragene Brandmeldersignal einen Referenzbrandzustand repräsentiert, der einer Verifizierung bedarf, ein Instruktionssignal an das Fahrzeug zu übertragen. Das Fahrzeug weist eine Fahrzeugsensoreinheit auf, die zur Erfassung einer Brandkenngröße eines Fahrzeugüberwachungsbereichs ausgebildet ist. Das Instruktionssignal repräsentiert zumindest einen Zielort für das Fahrzeug. Der Fahrzeugüberwachungsbereich ist in hinreichender Überlappung mit dem Brandmelderüberwachungsbereich, wenn das Fahrzeug an dem Zielort ist. Das Fahrzeug ist dazu ausgebildet, basierend auf dem übertragenen Instruktionssignal, insbesondere selbstständig, zu dem Zielort zu navigieren, so dass sich der Fahrzeugüberwachungsbereich und der Brandmelderüberwachungsbereich hinreichend überlappen. Das Fahrzeug ist dazu konfiguriert, an dem Zielort die Brandkenngröße mittels der Fahrzeugsensoreinheit als eine Verifikationsbrandkenngröße des Brandmelderüberwachungsbereichs zu erfassen. Das Fahrzeug ist zur Bestimmung eines Verifikationsbrandzustands durch Auswertung der Verifikationsbrandkenngröße ausgebildet.

Gemäß einer ersten Ausgestaltungsvariante des Systems ist es vorgesehen, dass das Fahrzeug zur Übertragung eines Verifikationssignals, das den Verifikationsbrandzustand repräsentiert, an die Zentraleinheit ausgebildet ist, und die Zentraleinheit dazu konfiguriert ist, den Referenzbrandzustand als verifizierten Referenzbrandzustand zu bestimmen, für den Fall, dass der Referenzbrandzustand und der Verifikationsbrandzustand zumindest hinreichend übereinstimmen.

Gemäß einer zweiten Ausgestaltungsvariante des Systems ist es vorgesehen, dass das Instruktionssignal außerdem den Referenzbrandzustand repräsentiert, das Fahrzeug dazu konfiguriert ist, den Referenzbrandzustand als verifizierten Referenzbrandzustand zu bestimmen, für den Fall, dass der Referenzbrandzustand und der Verifikationsbrandzustand zumindest hinreichend übereinstimmen, und das Fahrzeug zur Übertragung eines Verifikationssignals, das den verifizierten Referenzbrandzustand repräsentiert, an die Zentraleinheit ausgebildet ist.

Bevorzugt bilden die zuvor erläuterten, beiden Ausgestaltungsvarianten des Systems alternative Ausgestaltungen für das System, wie es zuvor erläutert wurde.

Das System bietet den Vorteil, dass ein von einem Brandmelder bestimmter Referenzbrandzustand mittels eines von einem Fahrzeug bestimmten Verifikationsbrandzustands überprüft werden kann, und sofern die genannten Zustände zumindest hinreichend überstimmen, ein verifizierter Referenzbrandzustand bestimmbar ist. Somit erlaubt das System eine Bestimmung eines verifizierten Brandzustands, nämlich des verifizierten Referenzbrandzustands. Auf eine Übermittlung von Sensordaten von dem Fahrzeug zu der Zentraleinheit kann deshalb verzichtet werden. Eine Signalverbindung zwischen dem Fahrzeug und der Zentraleinheit, die vorzugsweise als Funkverbindung ausgebildet ist, muss deshalb nicht dazu geeignet sein, hohe Datenmengen in kurzer Zeit übertragen zu können. Denn vielmehr kann der verifizierte Referenzbrandzustand mittels des Fahrzeugs am Zielort bestimmt werden oder das Fahrzeug überträgt ein Verifikationssignal, das den Verifikationsbrandzustand repräsentiert, an die Zentraleinheit, so dass die Zentraleinheit gegebenenfalls den verifizierten Referenzbrandzustand bestimmen kann.

Ein weiterer Vorteil des Systems ist die automatische Bestimmung des verifizierten Referenzbrandzustands als solches. Denn der Verifikationsbrandzustand kann von dem Fahrzeug selbst bestimmt werden und basierend hierauf kann eine automatische Überprüfung des Referenzbrandzustands stattfinden, so dass der verifizierte Referenzbrandzustand bei einer hinreichenden Übereinstimmung automatisch bestimmbar ist. Dies kann ohne menschlichen Eingriff erfolgen, so dass die Bestimmung des verifizierten Referenzbrandzustands besonders schnell und sicher erfolgen kann.

Darüber hinaus ist das System kostengünstig und zugleich besonders flexibel und/oder vielseitig einsetzbar. Denn das Fahrzeug kann zu beliebigen Zielorten navigieren, insbesondere fahren. Somit kann das Fahrzeug des Systems dazu verwendet werden, um eine Verifikationsbrandkenngröße eines Brandmelderüberwachungsbereichs eines beliebigen Brandmelders zu erfassen. Denn das Fahrzeug ist mobil, und somit nicht stationär gebunden bzw. angeordnet. Es ist deshalb nicht mehr notwendig, für jeden Brandmelder oder für einen Gruppe von Brandmeldern in einem Überwachungsbereich ein zusätzliches Überwachungssystem, wie beispielsweise ein stationär installiertes Kamerasystem, vorzusehen, um einen von dem jeweiligen Brandmelder bestimmten Referenzbrandzustand zu überprüfen bzw. zu verifizieren. Aufgrund des geringeren Aufwands für nur ein Fahrzeug und aufgrund der Mobilität des Fahrzeugs ist das System besonders kostengünstig und flexible einsetzbar.

Außerdem ist das System zum automatischen Bestimmung des verifizierten Referenzbrandzustands geeignet und/oder ausgebildet. Denn der verifizierte Referenzbrandzustand wird nur dann bestimmt, wenn der von dem Fahrzeug bestimmte Verifikationsbrandzustand zumindest hinreichend mit dem von dem Brandmelder bestimmten Referenzbrandzustand übereinstimmt. Mit anderen Worten ist das System dazu geeignet, den von dem Brandmelder bestimmte Referenzbrandzustand mittels des von dem Fahrzeug bestimmten Verifikationsbrandzustands zu überprüfen und als verifiziert zu bestimmen, wenn aus der Überprüfung eine entsprechende Übereinstimmung resultiert. Der verifizierte Referenzbrandzustand kann deshalb verlässlich dazu verwendet werden oder als Basis dienen, um eine Folgeaktion einzuleiten, wie beispielsweise ein Löschen eines Brands in dem Brandmelderüberwachungsbereich.

Das System kann zumindest einen Teil eines Brandmeldesystems bilden. Ein Brandmeldesystem wird vorzugsweise auch als Brandmeldeanlage bezeichnet. Das System bzw. das Brandmeldesystem kann deshalb auch zum vorbeugenden Brandschutz dienen.

Die Zentraleinheit kann als eine Vorrichtung ausgebildet sein. Die Zentraleinheit kann einer Brandmelderzentrale zugeordnet sein, einen Teil einer Brandmelderzentrale bilden oder die Brandmelderzentrale sein. Der Brandmelderzentrale kann dabei eine Löschsteuerzentrale zugeordnet sein. Die Brandmelderzentrale und die Löschsteuerzentrale können dabei zumindest teilweise gemeinsam und/oder integral ausgebildet sein. Die Brandmelderzentrale und/oder die Löschsteuerzentrale können jeweils als eine Vorrichtung, vorzugsweise zumindest teilweise als eine integrale Vorrichtung, ausgebildet sein. Außerdem kann es vorgesehen sein, dass die Zentraleinheit einer Leitstellenanlage, die auch als Leitstelle bezeichnet sein kann, zugeordnet ist. Eine Leitstellenanlage kann zur Koordination oder Steuerung von Brandbekämpfungsaktionen dienen und/oder ausgebildet sein. Die zuvor erläuterten Ausgestaltungen bieten den Vorteil, dass die Zentraleinheit in ein bestehendes System und/oder eine bestehende Anlage integriert werden kann. Dies ist beispielsweise dann der Fall, wenn die Zentraleinheit von einer Brandmelder- und/oder Löschsteuerzentrale gebildet wird.

Brandmelder sind grundsätzlich aus dem Stand der Technik bekannt. Für das System ist es vorgesehen, dass mindestens ein Brandmelder stationär installiert ist. Ein derartiger Brandmelder kann beispielsweise in einem Gebäude, an einem Gebäude oder an einem zu schützenden Objekt oder in dessen Nähe fest installiert sein. Der stationäre Brandmelder wird im Weiteren auch als Brandmelder bezeichnet. Der Brandmelder kann beispielsweise als ein Brandgasmelder, ein Rauchmelder, ein Wärmemelder, ein Flammenmelder, ein Melder zur Erkennung einer elektromagnetischen Strahlung aus einem vorbestimmten Spektrum, das vorzugsweise auf einen Brand schließen lässt, oder einer Kombination der zuvor genannten Melder gebildet sein.

Der Brandmelder weist eine Brandmeldersensoreinheit auf. Vorzugsweise ist die Brandmeldersensoreinheit nach Art eines Sensors bzw. einer Sensoreinheit ausgebildet.

Die Brandmeldersensoreinheit ist außerdem zur Erfassung einer Brandkenngröße eines Brandmelderüberwachungsbereichs ausgebildet. Die von der Brandmeldersensoreinheit erfasste Brandkenngröße wird als Referenzbrandkenngröße bezeichnet. Eine Brandkenngröße kann dabei grundsätzlich mindestens eine physikalische und/oder chemische Eigenschaft eines Verbrennungsvorgangs repräsentierten und/oder charakterisieren. Für eine bevorzugte Ausgestaltung kann es vorgesehen sein, dass die Brandmeldersensoreinheit nach Art einer Multisensoreinheit bzw. mit mehreren, insbesondere unterschiedlichen Sensoren ausgebildet ist. Die Sensorsignale und/oder Sensordaten des Multisensors bzw. der mehreren Sensoren können mittels einer Vorverarbeitungseinheit, insbesondere basierend auf gespeicherten Signalmustern bzw. - daten, ausgewertet werden, um daraus resultierend eine entsprechende Anzahl von Brandkenngrößen zu erfassen, die als Referenzbrandkenngrößen bezeichnet werden. Bei der Auswertung können insbesondere neuronale Netze eingesetzt werden. Hierzu kann die Brandmeldersensoreinheit entsprechend ausgebildet und/oder konfiguriert sein. Ist der Brandmelder stationär installiert, handelt es sich bei dem Brandmelderüberwachungsbereich ebenfalls vorzugsweise um einen stationären Brandmelderüberwachungsbereich. Bei dem Brandmelderüberwachungsbereich handelt es sich vorzugsweise um einen dem Brandmelder zugeordneten Bereich, der von dem Brandmelder vorzugsweise auf einen Brand, eine Brandvorstufe und/oder einen Schwelbrand zu überwachen ist. Vorzugsweise handelt es sich bei dem Brandmelder um einen sogenannten automatischen Brandmelder. Denn mit der Brandmeldersensoreinheit kann die Referenzbrandkenngröße des Brandmelderüberwachungsbereichs automatisch erfasst werden. Die Erfassung kann dabei kontinuierlich oder diskret, beispielsweise in vorbestimmten Zeitabständen, erfolgen.

Je nach Einsatzzweck kann die Brandmeldersensoreinheit zur Erfassung unterschiedlicher Referenzbrandkenngrößen ausgebildet sein. Ein Beispiel für eine Referenzbrandkenngröße ist beispielsweise die Temperatur. In diesem Fall kann die Brandmeldersensoreinheit zur Erfassung der Temperatur des Brandmelderüberwachungsbereichs ausgebildet sein. Die Brandmeldersensoreinheit kann in diesem Fall als eine Temperatursensoreinheit oder als ein Temperatursensor ausgebildet sein. Entsprechendes gilt für die folgenden, möglichen Brandkenngrößen. So kann eine Brandkenngröße beispielsweise eine Rauchkonzentration, die auch als Rauchpartikelkonzentration bezeichnet wird, eine Konzentration eines vorbestimmten Gases, eine Konzentration mehrerer vorbestimmter Gase, eine Konzentration von mindestens einem thermischen Zersetzungsprodukt oder eine, insbesondere mittlere, Amplitude eines vorbestimmten elektromagnetischen Spektralbereichs sein. Eine Brandkenngröße kann auch ein Änderungs- und/oder Steigungswert mindestens einer der vorgenannten Brandkenngrößen sein. So kann die Brandkenngröße beispielsweise ein Temperaturgradient oder ein Konzentrationsgradient sein. Zur Erfassung einer Konzentration eines Gases kann die Brandmeldersensoreinheit beispielsweise als eine Gassensoreinheit oder als ein Gassensor ausgebildet sein. Dient die Brandmeldersensoreinheit zur Erfassung einer Amplitude eines vorbestimmten elektromagnetischen Spektralbereichs, kann die Brandmeldersensoreinheit als eine optische und/oder fotoelektrische Sensoreinheit zur Erfassung einer entsprechenden, insbesondere mittleren, Amplitude des vorbestimmten elektromagnetischen Spektralbereichs ausgebildet sein. Dieser Spektralbereich kann beispielsweise aus dem ultravioletten, dem infraroten und/oder aus dem nahinfraroten Bereich stammen.

Die erfasste Referenzbrandkenngröße gibt also Auskunft darüber, ob in dem Brandmelderüberwachungsbereich ein Brand, eine Brandvorstufe oder ein Schwelbrand vorherrscht. Unter einem Brand kann dabei ein mit einer Lichterscheinung, wie beispielsweise ein Feuer, eine Flamme, eine Glut, ein Glimmern und/oder Funken, verbundener Verbrennungsvorgang verstanden sein. Unter einem Schwelbrand kann dabei ein Verbrennungsvorgang ohne eine Lichterscheinung verstanden sein. Unter einer Brandvorstufe kann dabei ein Vorgang verstanden werden, bei dem thermische Zersetzungsprodukte entstehen, und zwar beispielsweise mittels einer Reduktionsreaktion und/oder einer homolytischen Spaltung. Bei der entsprechenden thermischen Zersetzung findet vorzugsweise keine Oxidation bzw. keine Oxidationsreaktion statt. In der Praxis kann es vorkommen, dass der zuvor bezeichnete Brand, der Schwelbrand und die Brandvorstufe übergreifend als "Brand" bezeichnet werden.

Basierend auf der erfassten Referenzbrandkenngröße, und zwar vorzugsweise basierend auf der mindestens einen erfassten Referenzbrandkenngröße, ist der Brandmelder zur Bestimmung eines Referenzbrandzustands ausgebildet. Dazu wird die Referenzbrandkenngröße von dem Brandmelder ausgewertet. Zur Auswertung kann der Brandmelder eine Auswerteeinheit aufweisen. Die Auswerteeinheit kann nach Art einer Datenverarbeitungseinheit zur Auswertung der Referenzbrandkenngröße ausgebildet sein. Wird von der Brandmeldersensoreinheit beispielsweise die Temperatur des Brandmelderüberwachungsbereichs erfasst, kann der Referenzbrandzustand durch Auswertung der Temperatur mittels des Brandmelders bestimmt werden. Überschreitet die Temperatur beispielsweise einen vorbestimmten Schwellwert, so kann dies als ein Brand für den Referenzbrandzustand bestimmt werden. Insbesondere bei einem Schwelbrand oder bei einem Verbrennungsvorgang ohne eine Lichterscheinung kann beispielsweise durch Erfassung der Konzentration eines vorbestimmten Gases darauf geschlossen werden, dass eine Brandvorstufe oder ein Schwelbrand als Referenzbrandzustand zu bestimmen ist. Wird von der Brandmeldersensoreinheit eine Referenzbrandkenngröße erfasst, die zu keinem Brand und außerdem nicht zu einer Brandvorstufe oder ein Schwelbrand korrespondiert, so wird kein Referenzbrandzustand bestimmt. Der Brandmelder kann dazu entsprechend ausgebildet und/oder konfiguriert sein.

Für eine bevorzugte Ausgestaltung kann es vorgesehen sein, dass die Brandmeldersensoreinheit nach Art einer Multisensoreinheit bzw. mit mehreren, insbesondere unterschiedlichen Sensoren ausgebildet ist. Die Sensoren bzw. die Multisensoreinheit können zur Ermittlung mehrerer Brandkenngrößen ausgebildet sein, wobei diese Brandkenngrößen als Referenzbrandkenngrößen bezeichnet werden. Basierend auf den zuvor genannten, erfassten Referenzbrandkenngrößen kann der Brandmelder zur Bestimmung eines Referenzbrandzustands ausgebildet sein. Dazu werden die Referenzbrandkenngrößen von dem Brandmelder ausgewertet. Zur Auswertung kann der Brandmelder eine Auswerteeinheit aufweisen. Die Auswerteeinheit kann nach Art einer Datenverarbeitungseinheit zur Auswertung der Referenzbrandkenngrößen ausgebildet sein. Bei der Auswertung können insbesondere neuronale Netze eingesetzt werden.

Wenn ein Referenzbrandzustand von dem Brandmelder bestimmt wurde, kann der Brandmelder ein Brandmeldersignal, das den Referenzbrandzustand repräsentiert, an die Zentraleinheit übertragen. Hierzu kann der Brandmelder eine Signalsendeeinheit aufweisen. Die Zentraleinheit kann dazu eine Signalempfangseinheit aufweisen. Somit kann das Brandmeldersignal mittels der Sendeeinheit des Brandmelders an die Signalempfangseinheit der Zentraleinheit übertragen werden, so dass der Zentraleinheit das Brandmeldersignal bzw. der Referenzbrandzustand zur Verfügung gestellt wird. Dabei kann die Sendeeinheit als Funk-Sendeeinheit und die Signalempfangseinheit als Funk-Signalempfangseinheit ausgebildet sein. Alternativ oder ergänzend kann zwischen der Signalsendeeinheit und der Signalempfangseinheit eine leitungsgebundene Signalverbindung ausgebildet sein.

Mit anderen Worten können die Zentraleinheit und der Brandmelder mittels einer kabelgebundenen Signalverbindung und/oder mittels einer Funkverbindung miteinander verbunden sein, um die Übertragung des Brandmeldersignals zu ermöglichen. Wird eine kabelgebundene Signalverbindung zur Übertragung des Brandmeldersignals verwendet, so kann das Brandmeldersignal durch ein Stromsignal und/oder Spannungssignal repräsentiert und/oder modelliert sein. Dazu kann beispielsweise die Stromstärke und/oder das Spannungspotential von dem Brandmelder angepasst werden, um das Brandmeldersignal zu übertragen. Die kabelgebundene Signalverbindung kann von der Zentraleinheit zu einer Mehrzahl von Brandmeldern führen, wobei die Brandmelder mittels der kabelgebundenen Signalverbindung in Serie geschaltet sind. In diesem Fall wird auch von einer Brandmelderlinie gesprochen. Die kabelgebundene Signalverbindung kann auch als eine Busleitung ausgebildet sein. In diesem Fall bildet jeder der Mehrzahl der Brandmelder jeweils einen Busteilnehmer. Jeder Busteilnehmer kann eine eigene Adresse, die auch als Busadresse bezeichnet wird, aufweisen. Insgesamt kann deshalb von den Busteilnehmern und der Busleitung ein Bussystem zur Übertragung von Informationen ausgebildet sein. Vorzugsweise ist das Bussystem als ein Ringbussystem ausgebildet. Die Informationen sind oder betreffen beispielsweise das Brandmeldersignal. So kann ein Brandmelder das Brandmeldersignal mittels der Busleitung bzw. des Bussystems zu der Zentraleinheit senden. Dies kann beispielsweise in bitserieller Form und im Halbduplex-Verfahren erfolgen. Dabei wird das Brandmeldersignal bzw. die zugehörigen Dateninformationen von dem Brandmelder auf eine von der Zentraleinheit bereitgestellte Busversorgungsspannung aufmoduliert. Die Zentraleinheit demoduliert die entsprechenden Signale, so dass das Brandmeldersignal der Zentraleinheit zur Verfügung steht.

Für eine vorteilhafte Ausgestaltung kann es vorgesehen sein, dass der Brandmelder oder mindestens einer der Brandmelder, vorzugsweise jeder der Brandmelder, von der Zentraleinheit mit elektrischer Energie versorgt wird. Dies kann mittels der zuvor genannten, kabelgebundenen Signalverbindung erfolgen. Diese kann nämlich außerdem zur Übertragung von elektrischer Leistung von der Zentraleinheit zu dem jeweiligen Brandmelder dienen und/oder dazu ausgebildet sein. So kann die Zentraleinheit beispielsweise eine Gleichspannung bereitstellen, wobei Signale mittels einer Wechselspannung aufmoduliert werden.

Die Zentraleinheit ist dazu konfiguriert und/oder ausgebildet, um ein Instruktionssignal an das Fahrzeug zu übertragen. Somit ist die Zentraleinheit vorzugsweise zum Senden des Instruktionssignals an das Fahrzeug ausgebildet. Das Fahrzeug kann entsprechend zum Empfang des Instruktionssignals ausgebildet sein. Dazu kann das Fahrzeug eine Signalempfangseinheit, insbesondere eine Funk-Signalempfangseinheit, aufweisen. Die Zentraleinheit kann zum Senden des Instruktionssignals eine Signalsendeeinheit, insbesondere eine Funk-Signalsendeeinheit, aufweisen. Somit können die Zentraleinheit und das Fahrzeug vorzugsweise mittels einer Funk-Signalverbindung miteinander verbunden sein, um das Instruktionssignal von der Zentraleinheit an das Fahrzeug zu übertragen. Das Instruktionssignal wird jedoch nur in dem Fall an das Fahrzeug übertragen, wenn das von dem Brandmelder übertragene Brandmeldersignal einen Referenzbrandzustand repräsentiert, der einer Verifizierung bedarf. Der Referenzbrandzustand bedarf vorzugsweise dann einer Verifizierung, wenn der Referenzbrandzustand einen Brand repräsentiert.

Außerdem kann es vorgesehen sein, dass der Referenzbrandzustand vorzugsweise dann einer Verifizierung bedarf, wenn dieser zu einem Brand, einer Brandvorstufe oder einem Schwelbrand korrespondiert.

Eine vorteilhafte Ausgestaltung des Systems zeichnet sich dadurch aus, dass die Zentraleinheit dazu konfiguriert ist, dass ein Referenzbrandzustand, also ein aktueller Referenzbrandzustand, einer Verifizierung bedarf, wenn zuvor, und zwar höchstens mit einem vorbestimmten, maximalen Zeitabstand, mindestens ein Referenzbrandzustand von dem Brandmelder oder einem anderen Brandmelder an die Zentraleinheit übertragen wurde.

Somit kann es vorgesehen sein, dass ein an die Zentraleinheit übertragener Referenzbrandzustand zunächst keiner Verifizierung bedarf, bis mindestens ein weiterer Referenzbrandzustand an die Zentraleinheit übertragen wird. Die beiden Referenzbrandzustände können dabei von dem gleichen Brandmelder stammten. Alternativ kann es vorgesehen sein, dass die beiden Referenzbrandzustände von unterschiedlichen Brandmeldern stammen, wobei jeder Brandmelder zur Erfassung einer zugehörigen Referenzbrandkenngröße des gleichen Brandmelderüberwachungsbereichs ausgebildet ist. Wenn nun beispielsweise ein erster Brandmelder eine erste Referenzbrandkenngröße für einen Brandmelderüberwachungsbereich erfasst und basierend auf der ersten Referenzbrandkenngröße beispielsweise eine Brandvorvorstufe als ersten Referenzbrandzustand bestimmt wird, so kann ein erstes Brandmeldersignal an die Zentraleinheit übertragen werden, wobei das erste Brandmeldersignal den ersten Referenzbrandzustand repräsentiert. Aufgrund der bevorzugten Konfiguration der Zentraleinheit ist für den ersten Referenzbrandzustand keine Verifikation vorgesehen. Ein Instruktionssignal wird sodann noch nicht an das Fahrzeug übertragen. Erfasst nun aber der erste Brandmelder oder ein zweiter Brandmelder für den gleichen Brandmelderüberwachungsbereich eine zweite Referenzbrandkenngröße und wird basierend auf der zweiten Brandkenngröße ein zweiter Referenzbrandzustand bestimmt, so kann ein zweites Brandmeldersignal an die Zentraleinheit übertragen werden, wobei das zweite Brandmeldersignal den zweiten Referenzbrandzustand repräsentiert. Dabei kann der zweite Referenzbrandzustand beispielsweise zu einem Brand korrespondieren. Werden das erste Brandmeldersignal und das zweite Brandmeldersignal innerhalb des vorbestimmten, maximalen Zeitabstands zueinander an die Zentraleinheit übertragen, so ist es aufgrund der bevorzugten Konfiguration der Zentraleinheit vorgesehen, dass der zweite Referenzbrandzustand einer Verifizierung bedarf. Deshalb erfolgt sodann auch die Übertragung des Instruktionssignals an das Fahrzeug.

Bedarf der Referenzbrandzustand nun einer Verifizierung, wird das Instruktionssignal von der Zentraleinheit an das Fahrzeug übertragen. Das Instruktionssignal repräsentiert dabei zumindest einen Zielort für das Fahrzeug. Der Zielort kann dabei eine Ortskoordinate sein, eine Ortskoordinate aufweisen, einen begrenzten Raum repräsentieren, und/oder einen Bereich repräsentieren. Außerdem kann der Zielort auch weitere Ortsinformationen aufweisen, wie beispielsweise Informationen zur Ausrichtung für das Fahrzeug und/oder für die Fahrzeugsensoreinheit des Fahrzeugs. Dabei ist das Fahrzeug dazu ausgebildet, basierend auf dem übertragenen Instruktionssignal zu dem Zielort zu navigieren. Das Instruktionssignal kann gleichzeitig als Befehl zum Starten der Navigation zum Zielort dienen und/oder in entsprechender Weise von dem Fahrzeug und/oder der Navigationseinheit gewertet und/oder interpretiert werden. Ein weiterer Befehl zum Starten der Navigation mittels der Navigationssteuereinheit zu dem Zielort kann somit entfallen. Mit dem Navigieren ist vorzugsweise ein Lenken, Bewegen, Fahren oder Fliegen gemeint.

Das Fahrzeug kann dazu eine Navigationssteuereinheit aufweisen, um mittel dieser gesteuert zu dem Zielort zu navigieren. Besonders bevorzugt ist das Fahrzeug dazu ausgebildet, basierend auf dem übertragenen Instruktionssignal bzw. dem von dem Instruktionssignal repräsentierten Zielort selbstständig zu dem tatsächlichen Zielort zu navigieren. Vorzugsweise ist der Zielort in einem vorbestimmten Abstand zu dem Brandmelderüberwachungsbereich. Alternativ kann vorgesehen sein, dass der Zielort in dem Brandmelderüberwachungsbereich ist. Außerdem kann die Navigationssteuereinheit zum Empfang von Signalen von einem Navigationssatelliten und/oder von einem Pseudolit ausgebildet sein. Basierend auf diesen Signalen und dem Instruktionssignal, oder von diesem repräsentierten Zielort, ist die Navigationssteuereinheit vorzugsweise zum gesteuerten Navigieren des Fahrzeugs zu dem Zielort ausgebildet. Somit kann das Fahrzeug nach Empfang des Instruktionssignals vorzugsweise selbstständig und/oder eigenständig zu dem Zielort navigieren.

Außerdem weist das Fahrzeug eine Fahrzeugsensoreinheit auf. Die Fahrzeugsensoreinheit ist zur Erfassung, insbesondere mindestens, einer Brandkenngröße eines Fahrzeugüberwachungsbereichs ausgebildet. Für die Brandkenngröße wird in analoger Weise auf die Erläuterungen für die Referenzbrandkenngröße Bezug genommen. Für eine bevorzugte Ausgestaltung kann es vorgesehen sein, dass die Fahrzeugsensoreinheit nach Art einer Multisensoreinheit bzw. mit mehreren, insbesondere unterschiedlichen Sensoren ausgebildet ist. Die Sensorsignale und/oder Sensordaten des Multisensors bzw. der mehreren Sensoren können mittels einer Vorverarbeitungseinheit, insbesondere basierend auf gespeicherten Signalmustern bzw. -daten, ausgewertet werden, um daraus resultierend eine entsprechende Anzahl von Brandkenngrößen zu erfassen. Bei der Auswertung können insbesondere neuronale Netze eingesetzt werden. Hierzu kann die Fahrzeugsensoreinheit entsprechend ausgebildet und/oder konfiguriert sein. Somit kann die Fahrzeugsensoreinheit dazu ausgebildet sein, eine, insbesondere mittlere, Amplitude eines vorbestimmten elektromagnetischen Spektralbereichs, eine Rauchkonzentration, eine Konzentration eines vorbestimmten Gases, eine Konzentration mehrerer vorbestimmter Gase, eine Temperatur und/oder eine Konzentration von mindestens einem thermischen Zersetzungsprodukt zu erfassen, und zwar als die Brandkenngröße. Dabei ist die Fahrzeugsensoreinheit zur Erfassung der Brandkenngröße eines Fahrzeugüberwachungsbereichs ausgebildet. Der Fahrzeugüberwachungsbereich kann dabei ortsfest der Fahrzeugsensoreinheit und/oder dem Fahrzeug zugeordnet sein. Bewegt sich das Fahrzeug, so erfolgt eine entsprechende Bewegung des Fahrzeugüberwachungsbereichs.

Ist eine Navigation, also vorzugsweise eine geführte Bewegung, des Fahrzeugs zu dem Zielort erfolgt, so sind der Fahrzeugüberwachungsbereich und der Brandmelderüberwachungsbereich in hinreichender Überlappung. Denn an dem Zielort ist das Fahrzeug bevorzugt in einem vorbestimmten Abstand zu dem Brandmelderüberwachungsbereich oder sogar in dem Brandmelderüberwachungsbereich. Da sich der Fahrzeugüberwachungsbereich mit der Navigation des Fahrzeugs entsprechend mitbewegt, findet die hinreichende Überlappung des Fahrzeugüberwachungsbereichs mit dem Brandmelderüberwachungsbereich statt, wenn das Fahrzeug an dem Zielort ist. Somit kann der Fahrzeugüberwachungsbereich auch als fahrzeugfester oder fahrzeugsensoreinheitsfester Überwachungsbereich bezeichnet werden. Der Fahrzeugüberwachungsbereich kann deshalb dadurch charakterisiert sein, dass dieser von der Fahrzeugsensoreinheit erfassbar ist.

Vorzugsweise ist es vorgesehen, dass sich der Fahrzeugüberwachungsbereich und der Brandmelderüberwachungsbereich dann hinreichend überlappen, wenn mindestens 30%, mindestens 40%, mindestens 50%, mindestens 60%, mindestens 70%, mindestens 80%, mindestens 90% oder 100% des Fahrzeugüberwachungsbereichs in Überlappung mit dem Brandmelderüberwachungsbereich ist. In dem Bereich, in dem sich der Fahrzeugüberwachungsbereich und der Brandmelderüberwachungsbereich überlappen, kann sowohl von dem Brandmelder ein entsprechender Referenzbrandzustand als auch von dem Fahrzeug ein entsprechender Verifikationsbrandzustand bestimmt werden. Dabei ist das Fahrzeug dazu konfiguriert, an dem Zielort die Brandkenngröße mittels der Fahrzeugsensoreinheit als die Verifikationsbrandkenngröße des Brandmelderüberwachungsbereichs, und zwar zumindest für den Teil des Brandmelderüberwachungsbereichs, der mit dem Fahrzeugüberwachungsbereich in Überlappung ist, zu erfassen, wobei das Fahrzeug zur Bestimmung eines Verifikationsbrandzustands durch Auswertung der Verifikationsbrandkenngröße ausgebildet ist. Die Verifikationsbrandkenngröße bildet also eine weitere bzw. zweite Brandkenngröße für den Brandmelderüberwachungsbereich. Basierend hierauf wird von dem Fahrzeug der Verifikationsbrandzustand bestimmt. Mit anderen Worten ist das Fahrzeug zur Bestimmung des Verifikationsbrandzustands basierend auf der, insbesondere mindestens einen, Verifikationsbrandkenngröße ausgebildet. Der Verifikationsbrandzustand bildet also einen zweiten Brandzustand für den Brandmelderüberwachungsbereich. Dies bietet den Vorteil, dass für den Brandmelderüberwachungsbereich zwei Brandzustände, nämlich der Referenzbrandzustand und der Verifikationsbrandzustand, bestimmbar sind.

Für eine bevorzugte Ausgestaltung kann es vorgesehen sein, dass die Fahrzeugsensoreinheit nach Art einer Multisensoreinheit bzw. mit mehreren, insbesondere unterschiedlichen Sensoren ausgebildet ist. Die Sensoren bzw. die Multisensoreinheit können zur Ermittlung mehrerer Brandkenngrößen ausgebildet sein, wobei diese Brandkenngrößen als Verifikationsbrandkenngrößen bezeichnet werden. Basierend auf den zuvor genannten, erfassten Verifikationsbrandkenngrößen kann das Fahrzeug zur Bestimmung eines Verifikationsbrandzustands ausgebildet sein. Dazu werden die Verifikationsbrandkenngrößen von dem Fahrzeug ausgewertet. Zur Auswertung kann das Fahrzeug eine Auswerteeinheit aufweisen. Die Auswerteeinheit kann nach Art einer Datenverarbeitungseinheit zur Auswertung der Verifikationsbrandkenngrößen ausgebildet sein. Bei der Auswertung können insbesondere neuronale Netze eingesetzt werden.

Gemäß der bereits genannten, ersten Ausgestaltungsvariante des Systems ist es vorgesehen, dass das Fahrzeug zur Übertragung eines Verifikationssignals, das den Verifikationsbrandzustand repräsentiert, an die Zentraleinheit ausgebildet ist, und dass die Zentraleinheit dazu konfiguriert ist, den Referenzbrandzustand als verifizierten Referenzbrandzustand zu bestimmen, für den Fall, dass der Referenzbrandzustand und der Verifikationsbrandzustand zumindest hinreichend übereinstimmen. Zum Übertragen des Verifikationssignals kann das Fahrzeug eine Signalsendeeinheit, insbesondere eine Funk-Signalsendeeinheit, aufweisen. Zum Empfang des Verifikationssignals durch die Zentraleinheit kann diese eine, insbesondere weitere, Signalempfangseinheit aufweisen, die vorzugsweise als eine Funk-Signalempfangseinheit ausgebildet ist. Die Signalsendeeinheit und die Signalempfangseinheit des Fahrzeugs können als eine Kommunikationseinheit des Fahrzeugs ausgebildet sein. Entsprechendes gilt für die Zentraleinheit. Dabei können die mindestens eine Signalsendeeinheit und die mindestens eine Signalempfangseinheit als eine Kommunikationseinheit der Zentraleinheit ausgebildet sein. Somit können das Fahrzeug und die Zentraleinheit mittels einer Signalverbindung, insbesondere einer kabellosen Signalverbindung oder Funksignalverbindung, miteinander verbunden sein, um das Verifikationssignal von dem Fahrzeug an die Zentraleinheit zu übertragen.

Der Zentraleinheit wurde bereits zuvor der Referenzbrandzustand mittels des Brandmeldersignals übertragen. Somit kann die Zentraleinheit zur Auswertung des Referenzbrandzustands und des Verifikationsbrandzustands ausgebildet sein. Dies gilt insbesondere zur Auswertung, ob der Referenzbrandzustand und der Verifikationsbrandzustand zumindest hinreichend übereinstimmen. Eine Übereinstimmung, bzw. hinreichende Übereinstimmung, kann bezüglich des Referenzbrandzustands und des Verifikationsbrandzustands beispielsweise dann vorliegen, wenn der Referenzbrandzustand und der Verifikationsbrandzustand übereinstimmen und/oder wenn der Verifikationsbrandzustand zu einem Brand korrespondiert. In dem zweiten Fall kann der Referenzbrandzustand beispielsweise zu einem Schwelbrand oder einer Brandvorstufe korrespondieren. Somit kann eine hinreichende Übereinstimmung zwischen dem Referenzbrandzustand und dem Verifikationsbrandzustand vorliegen, wenn der Verifikationsbrandzustand zu einem Brand korrespondiert und der Referenzbrandzustand zu einem Schwelbrand, einer Brandvorstufe und/oder einem Brand korrespondiert. Auch wenn der Referenzbrandzustand und der Verifikationsbrandzustand nicht exakt übereinstimmen, kann jedoch von einer hinreichenden Übereinstimmung ausgegangen werden, wenn der Verifikationsbrandzustand einen Brand repräsentiert, da sich der Brandvorgang in einer Übergangszeit, während das Fahrzeug zu dem Zielort navigiert, weiterentwickelt haben kann.

Sofern der Referenzbrandzustand und der Verifikationsbrandzustand zumindest hinreichend übereinstimmen, wird von der Zentraleinheit der verifizierte Referenzbrandzustand bestimmt. Der verifizierte Referenzbrandzustand kann dabei zu einem Brand, einer Brandvorstufe und/oder einem Schwelbrand korrespondieren bzw. den Brand, die Brandvorstufe und/oder den Schwelbrand repräsentieren. Der verifizierte Referenzbrandzustand bietet deshalb eine verlässliche Information darüber, ob in dem Brandmelderüberwachungsbereich ein Brand, eine Brandvorstufe oder ein Schwelbrand vorherrscht. Basierend auf dem verifizierten Referenzbrandzustand können deshalb Folgeaktionen, wie beispielsweise das Löschen eines Brands, einer Brandvorstufe und/oder eines Schwelbrands in dem Brandmelderüberwachungsbereich eingeleitet werden. Eine Fehlalarmierung, insbesondere einer Feuerwehr, und/oder ein fehlerhaftes Einleiten eines Löschvorgangs kann somit effektiv verhindert oder zumindest deutlich verringert werden. Somit können insbesondere Sachschäden, die durch einen fehlerhaften Alarm ausgelöst werden, entsprechend verringert oder sogar vermieden werden.

Außerdem bietet das System den Vorteil, dass nicht Sensordaten an die Zentraleinheit übermittelt werden, sondern nur Signale, die Brandzustände repräsentieren, so dass eine schnelle und besonders einfache Signalverbindung zwischen der Zentraleinheit und dem Fahrzeug sowie zwischen der Zentraleinheit und dem mindestens einen Brandmelder ausreichend sind, um den verifizierten Referenzbrandzustand zu bestimmen. Dies ist insbesondere dann von besonderem Vorteil, wenn der Brandmelderüberwachungsbereich weit von der Zentraleinheit entfernt ist. Denn in diesem Fall kann eine Funksignalverbindung mit einer großen Reichweite zwischen der Zentraleinheit und dem Fahrzeug vorgesehen sein. Je größer eine Reichweite einer Funkverbindung ist, desto geringer fällt oftmals eine Datenübertragungsrate aus. Eine entsprechend kleine Datenübertragungsrate kann deshalb entstehen, wenn das Fahrzeug am Zielort, also zumindest in der Nähe zu dem Brandmelderüberwachungsbereich, ist. Dies ist für das System aber nicht oder kaum nachteilig. Denn zur Übertragung des Verifikationssignals, das einen Verifikationszustand repräsentiert, bedarf es nur einer sehr kleinen Datenmenge, in einem einfachen Fall nur weniger Bit. Auf eine flächendeckende Funk-Infrastruktur zur Übertragung von großen Datenmengen, die beispielsweise bei einer Übertragung von Sensordaten anfallen können, kann effektiv verzichtet werden.

Für das System kann außerdem oder alternativ die bereits genannte, zweite Ausgestaltungsvariante vorgesehen sein. Die zweite Ausgestaltungsvariante ist allerdings vorzugsweise eine alternative Ausgestaltungsvariante zu der zuvor erläuterten, ersten Ausgestaltungsvariante des Systems. Grundsätzlich kann es jedoch vorgesehen sein, dass das System derart ausgebildet ist, dass beide Ausgestaltungsvarianten für das System vorgesehen sind.

Gemäß der zweiten Ausgestaltungsvariante des Systems ist es vorgesehen, dass das Instruktionssignal außerdem den Referenzbrandzustand repräsentiert, das Fahrzeug dazu konfiguriert ist, den Referenzbrandzustand als verifizierten Referenzbrandzustand zu bestimmen, für den Fall, dass der Referenzbrandzustand und der Verifikationsbrandzustand zumindest hinreichend übereinstimmen, und das Fahrzeug zur Übertragung des Verifikationssignals, das den verifizierten Brandzustand repräsentiert, an die Zentraleinheit ausgebildet ist. Das Instruktionssignal kann somit zumindest den Zielort und den Referenzbrandzustand repräsentieren. Dem Fahrzeug werden somit die Informationen über den Referenzbrandzustand und den Zielort zur Verfügung gestellt. Das Fahrzeug kann dabei derart ausgebildet und/oder konfiguriert sein, um den Referenzbrandzustand und den Verifikationsbrandzustand auszuwerten. Dazu kann das Fahrzeug eine entsprechend ausgebildete und/oder konfigurierte Auswerteeinheit aufweisen. Insbesondere kann das Fahrzeug und/oder die Auswerteeinheit derart zur Auswertung konfiguriert sein, um zu bestimmen, ob der Referenzbrandzustand und der Verifikationsbrandzustand zumindest hinreichend übereinstimmen. Bezüglich der hinreichenden Übereinstimmung wird auf die Erläuterungen zu der ersten Ausgestaltungsvariante des Systems in analoger Weise Bezug genommen. Liegt die hinreichende Übereinstimmung vor, wird von dem Fahrzeug und/oder der Auswerteeinheit der verifizierte Referenzbrandzustand bestimmt. Auch bezüglich des verifizierten Referenzbrandzustands wird auf die entsprechenden, vorangegangenen Erläuterungen in analoger Weise Bezug genommen. Außerdem ist das Fahrzeug zur Übertragung des Verifikationssignals an die Zentraleinheit ausgebildet. Allerdings repräsentiert das Verifikationssignal in diesem Fall den verifizierten Brandzustand und nicht den Verifikationsbrandzustand. Hinsichtlich der Ausbildungen des Fahrzeugs und der Zentraleinheit zur Übertragung des Verifikationssignals wird auf die entsprechenden Erläuterungen zu der ersten Ausgestaltungsvariante des Systems in analoger Weise Bezug genommen. Dies gilt insbesondere für die entsprechende Signalsendeeinheit und/oder Signalempfangseinheit. Darüber hinaus gelten die erläuterten Vorteile und/oder Effekte, wie sie zu der ersten Ausgestaltungsvariante erläutert worden sind, in analoger Weise für die zweite Ausgestaltungsvariante des Systems. Denn auch in diesem Fall dient das Verifikationssignal zur Übertragung eines Zustands, nämlich des verifizierten Referenzbrandzustands, so dass eine schnelle und einfache Übertragung von dem Fahrzeug an die Zentraleinheit gewährleistet werden kann.

Indem die Zentraleinheit den verifizierten Referenzbrandzustand bestimmt und/oder der Zentraleinheit die Information über den verifizierten Referenzbrandzustand zur Verfügung gestellt wird, kann die Zentraleinheit nunmehr Folgeaktionen einleiten, wie beispielsweise das Einleiten eines Löschvorgangs eines Brands in dem Brandmelderüberwachungsbereich.

Zusammenfassend soll noch einmal darauf hingewiesen werden, dass ein besonderer Vorteil des Systems aus der dezentralen Bestimmung von zwei unabhängigen Brandzuständen für den Brandmelderüberwachungsbereich resultiert. Denn einerseits ist der Brandmelder dazu ausgebildet, eine Referenzbrandkenngröße des Brandmelderüberwachungsbereichs zu erfassen und basierend hierauf den Referenzbrandzustand zu bestimmen und an die Zentraleinheit zu übertragen. Andererseits ist das Fahrzeug dazu ausgebildet und/oder konfiguriert, zu dem Zielort in, vorzugsweise unmittelbarer, Nähe zu dem Brandmelderüberwachungsbereich zu navigieren, um von hier aus eine weitere Brandkenngröße, nämlich die Verifikationsbrandkenngröße des Brandmelderüberwachungsbereichs, zu erfassen und basierend hierauf die Verifikationsbrandkenngröße zu bestimmen. Somit können für den gleichen Brandmelderüberwachungsbereich zwei unabhängige Brandzustandsgrößen bestimmt werden, und zwar jeweils dezentral, nämlich einerseits von dem Brandmelder und andererseits von dem Fahrzeug. Dies verhindert, dass große Sensordatenmengen von dem Brandmelder bzw. dem Fahrzeug an die Zentraleinheit übermittelt werden müssen, um sodann dort womöglich eine Überprüfung hinsichtlich eines möglichen Brands in dem Brandmelderüberwachungsbereich auszuführen. Vielmehr erlaubt das System, dass nur die Zustände, nämlich der Referenzbrandzustand und der Verifikationsbrandzustand, an die Zentraleinheit übermittelt werden, so dass diese bei einer hinreichenden Übereinstimmung der genannten Zustände den verifizierten Referenzbrandzustand bestimmen kann. Alternativ ist es vorgesehen, dass der Referenzbrandzustand ebenfalls an das Fahrzeug übermittelt wird, so dass das Fahrzeug dezentral den verifizierten Referenzbrandzustand bestimmen kann, wenn eine hinreichende Übereinstimmung zwischen dem Referenzbrandzustand und dem Verifikationsbrandzustand vorliegt. Außerdem bedarf es in diesem Fall nur einer einfachen Übertragung des Verifikationsbrandzustands mittels des Verifikationssignals an die Zentraleinheit, um dieser die verlässlichen Informationen über einen möglichen Brand in dem Brandmelderüberwachungsbereich zur Verfügung zu stellen.

Die im Folgenden erläuterten vorteilhaften Ausgestaltungen des Systems beziehen sich auf das System, das (auch) die Merkmale nach der ersten Ausgestaltungsvariante und/oder der zweiten Ausgestaltungsvariante aufweist.

Eine vorteilhafte Ausgestaltung des Systems zeichnet sich dadurch aus, dass das Fahrzeug und/oder die Zentraleinheit dazu ausgebildet ist bzw. sind, ein Alarmsignal basierend auf dem verifizierten Referenzbrandzustand zu bestimmen. Wie zuvor erläutert, wird der verifizierte Referenzbrandzustand nur für den Fall bestimmt, dass der Referenzbrandzustand und der Verifikationsbrandzustand zumindest hinreichend übereinstimmen, so dass daraus beispielsweise auf einen Brand in dem Brandmelderüberwachungsbereich verlässlich geschlossen werden kann. Das Alarmsignal kann deshalb zum Einleiten einer ggf. notwenigen Folgeaktion dienen. Eine Folgeaktion kann beispielsweise ein Löschen eines Brands in dem Brandmelderüberwachungsbereich und/oder eine Abschaltung von einer Vorrichtung in dem Brandmelderüberwachungsbereich und/oder in unmittelbarer Nähe zu dem Brandmelderüberwachungsbereich sein. Alternativ oder ergänzend kann das Alarmsignal dazu verwendet werden, um eine weitere Einheit über den verifizierten Referenzbrandzustand zu informieren. So kann das Fahrzeug und/oder die Zentraleinheit dazu ausgebildet sein, das Alarmsignal an eine weitere Einheit zu senden. Eine weitere Einheit kann beispielsweise eine Löschsteuerzentrale und/oder eine Leitstelle sein. Weiterhin kann es bevorzugt vorgesehen sein, dass das Alarmsignal, oder ein auf dem Alarmsignal basierendes Signal, akustisch und/oder optisch, insbesondere von dem Fahrzeug und/oder von der Zentraleinheit, ausgegeben wird. Hierzu kann für das Fahrzeug bzw. die Zentraleinheit mindestens eine entsprechende Ausgabeeinheit vorgesehen sein. Das Alarmsignal bietet deshalb den Vorteil, dass ein entsprechender Alarm, der auf einen Brand, eine Brandvorstufe und/oder einen Schwelbrand in dem Brandmelderüberwachungsbereich hinweist, akustisch und/oder optisch ausgegeben werden kann und/oder weitere Einheiten darüber informiert werden können und/oder Folgeaktionen eingeleitet werden könen. Somit kann gewährleistet werden, dass eine möglichst schnelle und zeitnahe Bekämpfung eines Brands vorgenommen wird.

Eine weitere vorteilhafte Ausgestaltung des Systems zeichnet sich dadurch aus, dass das Fahrzeug und/oder die Zentraleinheit dazu ausgebildet ist bzw. sind, ein Fehlalarmsignal zu bestimmen, das eine fehlerhafte Bestimmung des Referenzbrandzustands und/oder einen nicht verifizierten Referenzbrandzustand repräsentiert, für den Fall, dass der Referenzbrandzustand nicht als verifizierter Referenzbrandzustand bestimmt wurde. Der Referenzbrandzustand wird vorzugsweise dann nicht als verifizierter Referenzbrandzustand bestimmt, wenn der Referenzbrandzustand und der Verifikationsbrandzustand nicht übereinstimmen oder nicht hinreichend übereinstimmen. Dies kann beispielsweise dann der Fall sein, wenn der Referenzbrandzustand zu einem Brand korrespondiert, wohingegen der Verifikationsbrandzustand zu keinem Brand, zu keinem Schwelbrand oder zu einer möglicherweise nicht relevanten Brandvorstufe korrespondiert. Der Verifikationsbrandzustand weist in diesem Fall bzw. in den Fällen darauf hin, dass in dem Brandmelderüberwachungsbereich kein Brand, kein Schwelbrand bzw. keine relevante Brandvorstufe vorherrscht. Dies lässt darauf schließen, dass der Referenzbrandzustand fehlerhaft bestimmt sein kann. Eine Verifizierung des Referenzbrandzustands sollte deshalb nicht erfolgen. In diesem Fall kann von dem Fahrzeug bzw. von der Zentraleinheit das Fehlalarmsignal bestimmt werden. Das Fehlalarmsignal bietet deshalb die Information, dass der Referenzbrandzustand fehlerhaft bestimmt wurde oder dass der Referenzbrandzustand nicht verifiziert werden konnte. Somit kann davon ausgegangen werden, dass der Brandmelder fehlerhafterweise einen Brand, eine Brandvorstufe und/oder einen Schwelbrand detektiert hat, obwohl in dem Brandmelderüberwachungsbereich gar kein tatsächlicher Brand, keine relevante Brandvorstufe und/oder kein relevanter Schwelbrand vorliegt. Das Fehlalarmsignal kann akustisch und/oder optisch, insbesondere von dem Fahrzeug und/oder der Zentraleinheit, ausgegeben werden. Hierzu kann eine entsprechende Ausgabeeinheit für das Fahrzeug und/oder die Zentraleinheit vorgesehen sein. Eine Person, die beispielsweise die Zentraleinheit überwacht, wird somit darüber informiert, dass es hier zu einer fehlerhaften Bestimmung des Referenzbrandzustands gekommen ist. In diesem Fall würde beispielsweise keine Löschaktion und/oder keine Abschaltung von Vorrichtungen in dem Brandmelderüberwachungsbereich und/oder in unmittelbarer Nähe dazu eingeleitet werden. Das Fehlalarmsignal kann jedoch an eine weitere Einheit weitergeleitet und/oder gesendet werden. Hierzu kann das Fahrzeug bzw. die Zentraleinheit eine entsprechende Signalsendeeinheit, insbesondere Funk-Signalsendeeinheit, aufweisen. So kann das Fehlalarmsignal beispielsweise an eine Leitstelle gesendet werden. Das Fehlalarmsignal kann von der Leitstelle dokumentiert werden, insbesondere um den Brandmelder gegebenenfalls zu warten. Dies gewährleistet eine sichere Funktionsweise des Systems.

Eine weitere vorteilhafte Ausgestaltung des Systems zeichnet sich dadurch aus, dass das Fahrzeug als ein Luftfahrzeug, insbesondere eine Drohne, ausgebildet ist. Ist das Fahrzeug als ein Luftfahrzeug ausgebildet, so kann dieses besonders einfach und schnell mögliche Hindernisse überwinden, um zu dem Zielort zu gelangen. Dies erlaubt eine besonders zeitnahe Bestimmung der Verifikationsbrandkenngröße bzw. des Verifikationsbrandzustands, so dass entsprechend schnell darüber Aufschluss gefunden werden kann, ob der Referenzbrandzustand als verifizierter Referenzbrandzustand zu bestimmen ist oder nicht. Besonders bevorzugt ist das Luftfahrzeug als eine Drohne bzw. unbemanntes Luftfahrzeug ausgebildet. Das Luftfahrzeug kann in diesem Fall ohne menschliche Besatzung zu dem Zielort navigieren. Personenschäden einer entsprechend nicht vorhandenen Besatzung können deshalb ausgeschlossen werden. Somit kann ein Referenzbrandzustand besonders sicher verifiziert werden. Eine besonders vorteilhafte Ausgestaltung des Luftfahrzeugs ist beispielsweise ein Multicopter, wie beispielsweise ein Quadrocopter oder ein Octocopter. Derartige Multicopter bieten den Vorteil, dass sie in einer beliebigen Position im Raum halten und/oder stehen können. Dies erlaubt eine besonders einfache Navigation zu dem Zielort, so dass sich der Fahrzeugüberwachungsbereich und der Brandmelderüberwachungsbereich hinreichend überlappen. Alternativ kann das Luftfahrzeug auch von einem Flugzeug und/oder einem Hubschrauber gebildet sein.

Eine weitere vorteilhafte Ausgestaltung des Systems zeichnet sich dadurch aus, dass das Fahrzeug als ein Landfahrzeug, insbesondere ein Roboterfahrzeug, ausgebildet ist. Ein Landfahrzeug bietet den Vorteil, dass dieses besonders robust ausgestaltet sein kann. Im Falle einer Kollision mit einem Hindernis führt dies zumeist nicht notwendigerweise zu einem derartigen schweren Defekt, dass das Landfahrzeug nicht weiterfahren bzw. navigieren kann. Vielmehr kann das Landfahrzeug nach einem möglichen Zusammenstoß mit einem Hindernis dieses daraufhin umfahren, um das weitere Navigieren zu dem Zielort fortzusetzen. Als besonders vorteilhaft hat sich ein Roboterfahrzeug als ein Landfahrzeug herausgestellt. Mit dem Roboterfahrzeug ist vorzugsweise ein unbemanntes Roboterlandfahrzeug gemeint. Das Landfahrzeug kann in diesem Fall ohne menschliche Besatzung fahren und/oder navigieren. Dies erlaubt eine besonders sichere Erfassung der Verifikationsbrandkenngröße, ohne Personenschäden zu befürchten.

Eine vorteilhafte Ausgestaltung des Systems zeichnet sich dadurch aus, dass die Fahrzeugsensoreinheit eine Kamera aufweist. Die Kamera kann dabei als eine optische Kamera zur Erfassung eines, insbesondere optischen, Bildes ausgebildet sein. Mittels der Kamera kann deshalb eine Lichterscheinung, wie ein Feuer und/oder eine Flamme, eines Brennvorgangs erfasst werden, wobei die Kamera vorzugsweise derart ausgebildet ist, um eine Farbtemperatur der Lichterscheinung und/oder eine Temperatur der Lichterscheinung als eine Brandkenngröße zu erfassen. Weiterhin kann es vorgesehen sein, dass die Kamera als eine Wärmebildkamera zur Erfassung eines Wärmebilds ausgebildet ist. Dabei kann die Wärmebildkamera zur Erfassung von Infrarotstrahlung ausgebildet sein. Somit kann die Kamera zur Erfassung einer Temperatur, insbesondere einer maximalen Temperatur und/oder einer mittleren Temperatur, ausgebildet sein, wobei die erfasste Temperatur vorzugsweise die Brandkenngröße bildet. Wird der Brandmelder für das System beispielsweise als ein Brandgasmelder oder als ein Rauchmelder ausgebildet, so kann die Kamera der Fahrzeugsensoreinheit den Vorteil bieten, dass die Verifikationsbrandkenngröße durch ein anderes Messprinzip erfasst wird als die Referenzbrandkenngröße. Mit anderen Worten können die Brandmeldersensoreinheit und die Fahrzeugsensoreinheit auf unterschiedlichen Messprinzipien beruhen, was eine besonders sichere Verifizierung des Referenzbrandzustands erlaubt.

Eine vorteilhafte Ausgestaltung des Systems zeichnet sich dadurch aus, dass das Fahrzeug an dem Zielort mittels der Fahrzeugsensoreinheit zur Bestimmung eines Brandorts ausgebildet ist. Der Brandort ist dabei vorzugsweise der Ort Brandherds des Brands, der Brandvorstufe und/oder des Schwelbrands in dem Brandmelderüberwachungsbereich. Wird für die Fahrzeugsensoreinheit beispielsweise eine Kamera verwendet, die zur Erfassung eines Bilds, insbesondere eines optischen Bilds und/oder eines Wärmebilds, ausgebildet ist, so kann das Fahrzeug dazu ausgebildet sein, den Brandort basierend auf dem Bild zu bestimmen. Dazu kann das Fahrzeug derart ausgebildet sein, um in dem Bild den Punkt zu identifizieren, der zu der höchsten Temperatur, insbesondere einer dargestellten Lichterscheinung, korrespondiert. Basierend auf diesem identifizierten Punkt kann das Fahrzeug ausgehend von dem Zielort zur Bestimmung des Brandorts ausgebildet sein. Weiterhin kann es vorgesehen sein, dass das Fahrzeug zum Verdrehen und/oder Verschwenken der Fahrzeugsensoreinheit an dem Zielort ausgebildet ist, um Sensordaten mittels der Fahrzeugsensoreinheit zu unterschiedlichen Verdreh- und/oder Verschwenkpositionen zu erfassen, wobei der Brandort basierend auf den erfassten Sensordaten und dem bekannten Zielort mittels des Fahrzeugs bestimmbar ist. So kann das Fahrzeug beispielsweise dazu ausgebildet sein, an dem Zielort eine Mehrzahl von Bildern bei unterschiedlichen Verdreh- und/oder Verschwenkpositionen einer Kamera der Fahrzeugsensoreinheit aufzunehmen, und den Brandort durch Auswertung der Bilder und unter Berücksichtigung des Zielorts zu bestimmen.

Eine vorteilhafte Ausgestaltung des Systems zeichnet sich dadurch aus, dass das Fahrzeug basierend auf einer am Zielort erfassten Brandkenngröße zur Bestimmung des Brandorts konfiguriert ist. So kann das Fahrzeug beispielsweise dazu konfiguriert sein, an dem Zielort, und/oder in einer vorbestimmten Umgebung zu dem Zielort, mehrere Brandkenngrößen mittels der Fahrzeugsensoreinheit zu erfassen, und wobei das Fahrzeug basierend auf der mindestens einen erfassten Brandkenngröße zur Bestimmung des Brandorts konfiguriert ist. Werden nun mehrere Brandkenngrößen erfasst, kann das Fahrzeug beispielsweise derart konfiguriert sein, um die größte und/oder kleinste Brandkenngröße auszuwählen, und den Brandort basierend auf dieser ausgewählten Brandkenngröße sowie basierend auf dem Ort, insbesondere Zielort, an dem die ausgewählte Brandkenngröße erfasst wurde, zu bestimmen. Wird beispielsweise für die Fahrzeugsensoreinheit eine Zeilenkamera als die Kamera verwendet, so kann ein entsprechendes, von der Zeilenkamera erfasstes Bild zur Bestimmung des Brandorts, und somit zur Bestimmung des Brandherds, verwendet werden. Aus dem mittels der Zeilenkamera erfassten Bild kann beispielsweise die Richtung zur dem Brandort ermittelt werden, indem das erfasste Bild nach einer höchsten Farbtemperatur durchsucht wird. Hierzu kann das Fahrzeug und/oder die Fahrzeugsensoreinheit entsprechend ausgebildet sein.

Eine vorteilhafte Ausgestaltung des Systems zeichnet sich dadurch aus, dass das Fahrzeug zur Ausrichtung der Fahrzeugsensoreinheit in Richtung des Brandorts ausgebildet ist. Wird nun mittels der Fahrzeugsensoreinheit eine Brandkenngröße ermittelt, so korrespondiert diese zu dem Brandherd in dem Brandmelderüberwachungsbereich bzw. in dem Fahrzeugüberwachungsbereich. Eine entsprechende Brandkenngröße bietet den Vorteil, dass diese besonders sicher darüber Auskunft geben kann, ob ein Brand, eine Brandvorstufe und/oder ein Schwelbrand vorliegt.

Eine vorteilhafte Ausgestaltung des Systems zeichnet sich dadurch aus, dass das Fahrzeug dazu konfiguriert und/oder ausgebildet ist, die Verifikationskenngröße dann zu erfassen, wenn die Fahrzeugsensoreinheit in Richtung des Brandorts ausgerichtet ist. Somit kann das Fahrzeug dazu konfiguriert sein, an dem Zielort die Brandkenngröße mittels der Fahrzeugsensoreinheit als die Verifikationskenngröße des Brandmelderüberwachungsbereichs erst dann zu erfassen, wenn die Fahrzeugsensoreinheit in Richtung des Brandorts ausgerichtet ist. Die Verifikationsbrandkenngröße kann in diesem Fall besonders sicher darüber Auskunft geben, ob ein Brand, eine Brandvorstufe und/oder ein Schwelbrand vorliegt. Daraus resultierend kann auch der Referenzbrandzustand besonders sicher bewertet und gegebenenfalls als verifizierter Referenzbrandzustand bestimmt werden.

Eine vorteilhafte Ausgestaltung des Systems zeichnet sich dadurch aus, dass das Fahrzeug eine dreh- und/oder schwenkbare Ausrichtungsvorrichtung aufweist, an der die Fahrzeugsensoreinheit befestigt ist, wobei das Fahrzeug zur Steuerung der Ausrichtungsvorrichtung ausgebildet ist, um die Fahrzeugsensoreinheit auszurichten. Mittels der Ausrichtungsvorrichtung kann die Fahrzeugsensoreinheit also gedreht und/oder geschwenkt werden, vorzugsweise um die Fahrzeugsensoreinheit in Richtung des Brandorts auszurichten. Dabei ist das Fahrzeug vorzugsweise derart ausgebildet und/oder konfiguriert, um ein Drehen und/oder Schwenken der Ausrichtungsvorrichtung zu steuern. Vorzugsweise weist die Ausrichtungsvorrichtung eine Plattform auf, an der die Fahrzeugsensoreinheit befestigt ist. Die Plattform der Ausrichtungsvorrichtung kann relativ zu dem übrigen Fahrzeug drehbar und/oder schwenkbar ausgebildet sein. Hierzu kann die Ausrichtungsvorrichtung einen steuerbaren Aktuator aufweisen, mittels dem die Plattform relativ zu dem übrigen Fahrzeug drehbar und/oder schwenkbar ist. Der Aktuator kann von dem Fahrzeug steuerbar ausgebildet sein, und das Fahrzeug kann derart ausgebildet und/oder konfiguriert sein, um den Aktuator zu steuern, um durch ein entsprechend gesteuertes Drehen und/oder Schwenken der Plattform und/oder eine Ausrichtung der Fahrzeugsensoreinheit zu erreichen. Dazu kann das Fahrzeug zur Steuerung der Ausrichtungsvorrichtung vorzugsweise derart ausgebildet und/oder konfiguriert sein, um den Fahrzeugüberwachungsbereich in, insbesondere hinreichende, Überlappung mit dem Brandmelderüberwachungsbereich zu bringen, wenn das Fahrzeug an dem Zielort ist. Mittels der dreh- und/oder schwenkbaren Ausrichtungsvorrichtung ist es somit möglich, wenn das Fahrzeug an dem Zielort ist, die Fahrzeugsensoreinheit derart auszurichten, dass der Fahrzeugsensorüberwachungsbereich in, insbesondere hinreichende, Überlappung mit dem Brandmelderüberwachungsbereich ist. Somit bedarf es nicht notwendigerweise einer Drehung des Fahrzeugs, um die gewünschte Überlappung zu erreichen. Vielmehr kann dies mittels der Ausrichtungsvorrichtung oder zumindest unter Zuhilfenahme der Ausrichtungsvorrichtung gewährleistet werden.

Eine vorteilhafte Ausgestaltung des Systems zeichnet sich dadurch aus, dass das Fahrzeug derart ausgebildet ist, dass das Fahrzeug, wenn dieses an dem Zielort ist, gedreht wird, bis der Fahrzeugüberwachungsbereich in, insbesondere hinreichende, Überlappung mit dem Brandmelderüberwachungsbereich ist. Weiterhin kann es vorgesehen sein, dass die entsprechende Überlappung bereits durch die Navigation des Fahrzeugs zu dem Zielort erreicht wird.

Eine vorteilhafte Ausgestaltung des Systems zeichnet sich dadurch aus, dass das Fahrzeug als ein autonomes Fahrzeug zur selbstständigen Navigation zu dem Zielort ausgebildet ist.

Somit kann das Fahrzeug ohne einen Empfang von weiteren Steuerbefehlen und/oder Navigationssteuerbefehlen selbstständig zu dem Zielort navigieren. Somit bedarf es nicht einer kontinuierlichen oder fortlaufenden Aussendung von Steuerbefehlen, um ein Navigieren des Fahrzeugs zu dem Zielort zu erreichen. Vielmehr reicht es in diesem Fall aus, dass das Fahrzeug das Instruktionssignal empfängt, das zumindest den Zielort repräsentiert. Basierend auf dem Instruktionssignal ist das Fahrzeug vorzugsweise dazu ausgebildet, um selbstständig zu dem Zielort zu navigieren.

Eine vorteilhafte Ausgestaltung des Systems zeichnet sich dadurch aus, dass das Fahrzeug eine Navigationssteuereinheit aufweist, die ausgebildet ist, das Fahrzeug basierend auf dem Instruktionssignal, insbesondere basierend auf dem Zielort, zu dem Zielort gesteuert zu navigieren. Durch das empfangene Instruktionssignal wird dem Fahrzeug und insbesondere der Navigationssteuereinheit der gewünschte Zielort mitgeteilt. Das Instruktionssignal kann gleichzeitig als Befehl zum Starten der Navigation zu dem Zielort dienen und/oder in entsprechender Weise von dem Fahrzeug und/oder der Navigationseinheit gewertet werden. Außerdem kann die Navigationssteuereinheit zum Empfang von Signalen von einem Navigationssatelliten und/oder von einem Pseudolit ausgebildet sein. Basierend auf diesen Signalen und dem Instruktionssignal, das zumindest den Zielort repräsentiert, ist die Navigationssteuereinheit zum gesteuerten Navigieren des Fahrzeugs ausgebildet. Somit kann das Fahrzeug nach Empfang des Instruktionssignals vorzugsweise selbstständig zu dem Zielort navigieren.

Eine vorteilhafte Ausgestaltung des Systems zeichnet sich dadurch aus, dass von dem Fahrzeug, insbesondere von der Navigationssteuereinheit, Navigationsdaten gespeichert sind, die eine Karte mit möglichen Wegen repräsentieren, wobei die Navigationssteuereinheit unter Verwendung der Navigationsdaten zum Navigieren des Fahrzeugs ausgebildet ist. Erhält das Fahrzeug, insbesondere die Navigationssteuereinheit, das Instruktionssignal, das den Zielort repräsentiert, so kann die Navigationssteuereinheit das Fahrzeug unter Verwendung der Navigationsdaten gesteuert zu dem Zielort navigieren.

Eine weitere vorteilhafte Ausgestaltung des Systems zeichnet sich dadurch aus, dass die Navigationssteuereinheit unter Verwendung der Navigationsdaten zum Navigieren des Fahrzeugs zu dem Zielort ausgebildet ist. Wird das Fahrzeug beispielsweise auf einem Betriebsgelände eingesetzt, so können die Navigationsdaten mögliche Wege auf dem Betriebsgelände repräsentieren, entlang der das Fahrzeug, insbesondere kollisionsfrei, navigieren kann, insbesondere um zu dem Zielort zu gelangen. Damit wird eine mögliche Kollision des Fahrzeugs mit Gebäuden und/oder anderen stationär platzierten Gegenständen effektiv verhindert.

Eine weitere vorteilhafte Ausgestaltung des Systems zeichnet sich dadurch aus, dass das Fahrzeug einen Hindernissensor aufweist, der zur Erkennung eines Hindernisses, insbesondere in Fahrtrichtung vor dem Fahrzeug, ausgebildet ist. Ein von dem Hindernissensor bereitgestelltes Signal kann an die Navigationssteuereinheit übertragen werden, so dass die Navigationssteuereinheit bevorzugt auch unter Verwendung des Signals des Hindernissensors zur gesteuerten Navigation des Fahrzeugs zu dem Zielort ausgebildet ist. Somit kann das Fahrzeug möglichen, insbesondere nur temporär vorhandenen, Hindernissen besonders effektiv ausweichen.

Eine weitere vorteilhafte Ausgestaltung des Systems zeichnet sich dadurch aus, dass die Zentraleinheit ausgebildet ist, Steuersignale an das Fahrzeug zu senden, um das Fahrzeug zu dem Zielort zumindest teilweise mitzunavigieren. Die von dem Fahrzeug empfangenen Steuersignale können an die Navigationssteuereinheit übertragen werden, so dass die Navigationssteuereinheit basierend auf den Steuersignalen und/oder zumindest auch unter Verwendung der Steuersignale zum gesteuerten Navigieren des Fahrzeugs zu dem Zielort ausgebildet ist. So kann die Navigationssteuereinheit des Fahrzeugs beispielsweise unter Verwendung der Navigationsdaten, des Instruktionssignals und der von der Zentraleinheit empfangenen Steuersignale zum gesteuerten Navigieren des Fahrzeugs zu dem Zielort ausgebildet sein. Mittels der Steuersignale können dem Fahrzeug beispielsweise mögliche Hindernisse und/oder Absperrungen mitgeteilt werden, so dass das Fahrzeug, bzw. die Navigationssteuereinheit, unter Berücksichtigung dieser Steuersignale auf einem alternativen Weg zu dem Zielort navigiert.

Eine vorteilhafte Ausgestaltung des Systems zeichnet sich dadurch aus, dass das System mehrere der stationären Brandmelder aufweist. Jeder der Brandmelder kann dabei in analoger Weise zu dem bereits erläuterten Brandmelder ausgebildet sein. In diesem Zusammenhang wird für jeden der Brandmelder in analoger Weise auf die Erläuterungen zu dem bereits erörterten Brandmelder sowie auf die sich daraus ergebenden Vorteile und/oder Effekte Bezug genommen. Außerdem kann die Zentraleinheit dazu konfiguriert und/oder ausgebildet sein, ein von jedem Brandmelder ausgesendetes Brandmeldersignal zu empfangen. Weist das System mehrere der stationären Brandmelder auf, können damit beispielsweise größere Bereiche und/oder größere Gebäude überwacht werden. Die Brandmelder können dabei derart angeordnet sein, dass sich ihre Brandmelderüberwachungsbereiche unmittelbar aneinander anschließen und/oder zumindest teilweise überlappen.

Eine vorteilhafte Ausgestaltung des Systems zeichnet sich dadurch aus, dass die Zentraleinheit ausgebildet ist, den Zielort basierend auf einem übertragenen Brandmeldersignal eines Brandmelders zu bestimmen. Ist jeder der Brandmelder beispielsweise mittels einer Signalleitungsverbindung mit der Zentraleinheit verbunden, um jeweils ein entsprechendes Brandmeldersignal an die Zentraleinheit übertragen zu können, so kann die Zentraleinheit beispielsweise dazu ausgebildet sein, denjenigen Brandmelder zu bestimmen, der das Brandmeldersignal übertragen hat. Basierend auf dem bestimmten Brandmelder kann die Zentraleinheit nun dazu ausgebildet sein, den Zielort zu bestimmen. Dazu können von der Zentraleinheit Daten gespeichert werden, die einen Zielort für jeden der Brandmelder repräsentieren, wobei die Zentraleinheit unter Verwendung der genannten Daten zur Bestimmung des jeweiligen Zielorts ausgebildet ist. Wird nun von einem der Brandmelder ein Brandmeldersignal an die Zentraleinheit übertragen, kann die Zentraleinheit den für den jeweiligen Brandmelder relevanten Zielort mittels der Daten bestimmen.

Eine weitere vorteilhafte Ausgestaltung des Systems zeichnet sich dadurch aus, dass die Zentraleinheit ausgebildet ist, basierend auf einem übertragenen Brandmeldersignal eines der Brandmelder einen Brandmelderort des Brandmelders, der das Brandmeldersignal übertragen hat, zu bestimmen, und dass die Zentraleinheit ausgebildet ist, den Zielort basierend auf dem Brandmelderort zu bestimmen. Das von dem Brandmelder übertragene Brandmeldersignal kann dabei außerdem eine Kennung aufweisen. Die Kennung kann auch als Adresse oder Adresskennung, insbesondere eines Brandmelders, bezeichnet sein. Die Kennung kann dabei Aufschluss über den Brandmelderort geben. Die Zentraleinheit kann dazu ausgebildet sein, den Brandmelderort basierend auf der Kennung zu ermitteln. Alternativ oder ergänzend können von der Zentraleinheit Daten gespeichert sein, die jede einer Vielzahl von Kennungen, die von den Brandmeldern mittels des Brandmeldersignals an die Zentraleinheit übertragbar sind, einen entsprechenden Brandmelderort repräsentieren. Wird nun mittels des Brandmeldersignals außerdem eine Kennung von dem Brandmelder an die Zentraleinheit übertragen, so kann die Zentraleinheit basierend auf dem Brandmeldersignal zur Bestimmung des Brandmelderorts des Brandmelders unter Verwendung der genannten Daten ausgebildet sein. Außerdem können von der Zentraleinheit Daten gespeichert sein, die für jeden Brandmelderort einen zugehörigen Zielort repräsentieren. Insbesondere basierend auf diesen Daten kann die Zentraleinheit deshalb dazu konfiguriert und/oder ausgebildet sein, basierend auf dem bestimmten Brandmelderort einen zugehörigen Zielort zu bestimmen, der sodann verwendet wird, um ein Instruktionssignal an das Fahrzeug zu übertragen, so dass dieses an den entsprechenden Zielort navigieren kann.

Die zuvor von der Zentraleinheit genannten Daten zur Bestimmung des Zielorts und/oder des Brandmelderorts können alternativ auch von einer anderen Einheit und/oder einem anderen System gespeichert sein, wobei die Zentraleinheit eine Kommunikationsverbindung zu der entsprechenden Einheit bzw. dem entsprechenden System aufweist, und wobei die Zentraleinheit zum Abfragen der entsprechenden Daten bei der genannten Einheit bzw. dem genannten System ausgebildet ist, um daraufhin die entsprechende Bestimmung des Zielorts bzw. des Brandmelderorts auszuführen.

Eine weitere vorteilhafte Ausgestaltung des Systems zeichnet sich dadurch aus, dass die Zentraleinheit konfiguriert ist, das Instruktionssignal derart zu bestimmen, dass das Instruktionssignal zumindest einen Zielort für das Fahrzeug repräsentiert, bei dem der Fahrzeugüberwachungsbereich, wenn das Fahrzeug an dem Zielort ist, in hinreichender Überlappung mit dem Brandmelderüberwachungsbereich ist, dessen Referenzbrandkenngröße von der Brandmeldersensoreinheit des Brandmelders erfasst wurde, der das Brandmeldersignal an die Zentraleinheit übertragen hat. Wird nun beispielsweise von einem der Brandmelder eine Referenzbrandkenngröße erfasst und basierend hierauf ein Brandmeldersignal an die Zentraleinheit übertragen, so wird von der Zentraleinheit das Instruktionssignal derart bestimmt, dass der von dem Instruktionssignal repräsentierte Zielort für das Fahrzeug derart gewählt ist, dass der Fahrzeugüberwachungsbereich in hinreichender Überlappung mit dem Brandmelderüberwachungsbereich ist, wenn das Fahrzeug an dem Zielort ist. Somit ist die Zentraleinheit dazu konfiguriert, für jeden der Brandmelder einen entsprechenden Zielort bzw. ein entsprechendes Instruktionssignal zu bestimmen, so dass das Fahrzeug, wenn es dieses Instruktionssignal erhält, zu dem entsprechenden Zielort navigieren kann, um eine Überlappung des Fahrzeugüberwachungsbereichs mit dem entsprechenden Brandmelderüberwachungsbereich zu erreichen. Diese Ausgestaltung des Systems bietet den Vorteil, dass eine Vielzahl von stationären Brandmeldern vorgesehen sein können, und dass das Fahrzeug mittels des Instruktionssignals zu einem jeweils angepassten Zielort navigieren kann, um die Überlappung zwischen dem Fahrzeugüberwachungsbereich und dem zu dem Brandmelder zugehörigen Brandmelderüberwachungsbereich zu erreichen. Somit kann auf eine Mehrzahl von Fahrzeugen verzichtet werden. Vielmehr ist für eine Bestimmung eines verifizierten Referenzbrandzustands, auch bei einer Mehrzahl von Brandmeldern, nur ein Fahrzeug ausreichend. Deshalb kann das System auch bei einer Vielzahl von Brandmeldern besonders kostengünstig ausgebildet sein und trotzdem die Möglichkeit bieten, einen Referenzbrandzustand zu überprüfen und gegebenenfalls einen verifizierten Referenzbrandzustand zu bestimmen.

Eine weitere vorteilhafte Ausgestaltung des Systems zeichnet sich dadurch aus, dass die Zentraleinheit und das Fahrzeug mittels einer kabellosen Signalverbindung miteinander verbunden sind. Die kabellose Signalverbindung kann dazu verwendet werden, um das Instruktionssignal von der Zentraleinheit an das Fahrzeug zu übertragen und/oder um das Verifikationssignal von dem Fahrzeug an die Zentraleinheit zu übertragen. Die Zentraleinheit und das Fahrzeug können dazu jeweils eine Kommunikationseinheit aufweisen, die zum kabellosen Versenden und/oder Empfangen eines Signals ausgebildet ist.

Eine weitere vorteilhafte Ausgestaltung des Systems zeichnet sich dadurch aus, dass ein Messprinzip der Brandmeldersensoreinheit bzw. der Brandmeldersensoreinheiten und ein Messprinzip der Fahrzeugsensoreinheit unterschiedlich sind. Das Messprinzip der bevorzugt mehreren Brandmeldersensoreinheiten kann dabei gleich sein. In einem Beispiel kann die für eine Fahrzeugsensoreinheit verwendete Sensorart anders bzw. unterschiedlich als eine Sensorart für die mindestens eine Brandsensoreinheit ausgebildet sein. Indem unterschiedliche Messprinzipien für die Fahrzeugsensoreinheit und die mindestens eine Brandmeldersensoreinheit verwendet werden, können messprinzipbedingte Fehlmessungen und entsprechende Fehler bei der Bestimmung, insbesondere des verifizierten Referenzbrandzustands, verhindert oder zumindest verringert werden.

Eine weitere vorteilhafte Ausgestaltung des Systems zeichnet sich dadurch aus, dass die Fahrzeugsensoreinheit mehrere Sensoren mit jeweils unterschiedlichen Messprinzipien aufweist. Entsprechendes kann für jeden der Brandmeldersensoreinheiten gelten. So kann jede der Brandmeldersensoreinheit mehrere Sensoren mit jeweils unterschiedlichen Messprinzipien aufweisen. Indem mehrere Sensoren für jede der genannten Sensoreinheiten vorgesehen ist, können bereits von jeder der Sensoreinheiten messprinzipbedingte Fehlmessungen verhindert werden, so dass eine Brandkenngröße bzw. eine Referenzbrandkenngröße besonders verlässlich erfassbar ist bzw. sind.

Eine weitere vorteilhafte Ausgestaltung des Systems zeichnet sich dadurch aus, dass das System eine Löschsteuerzentrale aufweist, wobei die Zentraleinheit zur Übertragung des Alarmsignals an die Löschsteuerzentrale ausgebildet ist, und wobei die Löschsteuerzentrale ausgebildet ist, eine Löschanlage basierend auf dem übertragenen Alarmsignal derart zu steuern, um einen Brand in dem Brandmelderüberwachungsbereich zu löschen, dessen Referenzbrandkenngröße von der Brandmeldersensoreinheit des Brandmelders erfasst wurde, der das Brandmeldersignal an die Steuereinheit übertragen hat. Wird nun also der verifizierte Referenzbrandzustand von der Zentraleinheit bestimmt oder mittels des Instruktionssignals von dem Fahrzeug an die Zentraleinheit übertragen, kann basierend hierauf das Alarmsignal von der Zentraleinheit bestimmt werden. Das Alarmsignal repräsentiert dabei vorzugsweise die Information, dass eine Folgeaktion, beispielsweise eine Löschung, einzuleiten ist. Wird nun das Alarmsignal von der Zentraleinheit an die Löschsteuerzentrale übertragen, kann die Löschsteuerzentrale basierend hierauf eine Löschanlage steuern. Dabei ist bevorzugt vorgesehen, dass das Alarmsignal auch die Kennung und/oder den Brandmelderort des Brandmelders umfasst, der das Brandmeldersignal an die Steuereinheit übertragen hat. Hierzu kann die Zentraleinheit entsprechend ausgebildet sein. Somit kann der Löschsteuerzentrale durch Übertragung des Alarmsignals die Information zur Verfügung gestellt werden, dass ein Brand gelöscht werden soll und wo dieser Brand zu löschen ist. Deshalb kann die Löschsteuerzentrale auch eine Löschanlage entsprechend steuern, um beispielsweise mittels der Löschanlage Löschmittel in dem Brandmelderüberwachungsbereich auszubringen, so dass ein Brand in dem Brandmelderüberwachungsbereich gelöscht wird.

Eine vorteilhafte Ausgestaltung des Systems zeichnet sich dadurch aus, dass die Zentraleinheit und die Löschsteuerzentrale zumindest teilweise als eine gemeinsame, funktionale Einheit ausgebildet sind. Somit können die Zentraleinheit und die Löschsteuerzentrale besonders kompakt ausgebildet sein. Vorzugsweise ist die Zentraleinheit von einer Brandmelderzentrale gebildet. In diesem Falle können die Brandmelderzentrale und die Löschsteuerzentrale eine gemeinsame Brandmelder- und Löschsteuerzentrale bilden.

Gemäß einem zweiten Aspekt der Erfindung wird die eingangs genannte Aufgabe von einem unbemannten Fahrzeug gelöst, das aufweist: eine Fahrzeugsensoreinheit, die zur Erfassung einer Brandkenngröße eines Fahrzeugüberwachungsbereichs ausgebildet ist, eine Signalempfangseinheit zum Empfangen eines Instruktionssignals, das zumindest einen Zielort repräsentiert, bei dem der Fahrzeugüberwachungsbereich, wenn das Fahrzeug an dem Zielort ist, in hinreichender Überlappung mit einem Brandmelderüberwachungsbereich ist, und eine Navigationssteuereinheit, die dazu ausgebildet ist, das Fahrzeug basierend auf dem empfangenen Instruktionssignal selbstständig zu dem Zielort zu navigierten, so dass sich der Fahrzeugüberwachungsbereich und der Brandmelderüberwachungsbereich hinreichend überlappen, wobei das Fahrzeug dazu konfiguriert ist, an dem Zielort die Brandkenngröße mittels der Fahrzeugsensoreinheit als eine Verifikationsbrandkenngröße des Brandmelderüberwachungsbereichs zu erfassen, wobei das Fahrzeug zur Bestimmung eines Verifikationsbrandzustands durch Auswertung der Verifikationsbrandkenngröße ausgebildet ist, und wobei das Instruktionssignal außerdem eine Referenzbrandkenngröße des Brandmelderüberwachungsbereichs repräsentiert, das Fahrzeug dazu konfiguriert ist, den Referenzbrandzustand als verifizierten Referenzbrandzustand zu bestimmen, für den Fall, dass der Referenzbrandzustand und der Verifikationsbrandzustand zumindest hinreichend übereinstimmen, und das Fahrzeug zur Übertragung eines Verifikationssignals, das den verifizierten Referenzbrandzustand repräsentiert, an eine Zentraleinheit ausgebildet ist. Bezüglich des unbemannten Fahrzeugs gemäß dem zweiten Aspekt der Erfindung wird in analoger Weise auf die Erläuterungen, bevorzugten Merkmale, Vorteile und/oder Effekte Bezug genommen, die für das Fahrzeug gemäß dem ersten Aspekt der Erfindung erörtert worden sind.

Gemäß einem weiteren Aspekt der Erfindung wird die eingangs genannte Aufgabe von einem unbemannten Fahrzeug gelöst, das aufweist: eine Fahrzeugsensoreinheit, die zur Erfassung einer Brandkenngröße eines Fahrzeugüberwachungsbereichs ausgebildet ist, eine Signalempfangseinheit zum Empfangen eines Instruktionssignals, das zumindest einen Zielort repräsentiert, bei dem der Fahrzeugüberwachungsbereich, wenn das Fahrzeug an dem Zielort ist, in hinreichender Überlappung mit einem Brandmelderüberwachungsbereich ist, und eine Navigationssteuereinheit, die dazu ausgebildet ist, das Fahrzeug basierend auf dem empfangenen Instruktionssignal selbstständig zu dem Zielort zu navigierten, so dass sich der Fahrzeugüberwachungsbereich und der Brandmelderüberwachungsbereich hinreichend überlappen, wobei das Fahrzeug dazu konfiguriert ist, an dem Zielort die Brandkenngröße mittels der Fahrzeugsensoreinheit als eine Verifikationsbrandkenngröße des Brandmelderüberwachungsbereichs zu erfassen, wobei das Fahrzeug zur Bestimmung eines Verifikationsbrandzustands durch Auswertung der Verifikationsbrandkenngröße ausgebildet ist, und wobei das Fahrzeug zur Übertragung eines Verifikationssignals, das den Verifikationsbrandzustand repräsentiert, an eine Zentraleinheit ausgebildet ist. Bezüglich des unbemannten Fahrzeugs gemäß diesem Aspekt der Erfindung wird in analoger Weise auf die Erläuterungen, bevorzugten Merkmale, Vorteile und/oder Effekte Bezug genommen, die für das Fahrzeug gemäß dem ersten Aspekt der Erfindung erörtert worden sind.

Eine vorteilhafte Ausgestaltung des Fahrzeugs gemäß dem zweiten Aspekt der Erfindung zeichnet sich vorzugsweise dadurch aus, dass die Signalempfangseinheit zum Empfangen eines Signals, insbesondere des Instruktionssignals, von der Zentraleinheit ausgebildet ist. Für die Merkmale dieser Ausgestaltung wird in analoger Weise auf die Erläuterungen, bevorzugten Merkmale, Vorteile und/oder Effekte bevorzugt Bezug genommen, die für entsprechende Merkmale für das Fahrzeug gemäß dem ersten Aspekt der Erfindung erörtert worden sind.

Gemäß einem dritten Aspekt der Erfindung wird die eingangs genannte Aufgabe von einer Zentraleinheit gelöst, die sich dadurch auszeichnet, dass die Zentraleinheit zum Empfang eines Brandmeldersignals eines Brandmelders ausgebildet ist, die Zentraleinheit dazu konfiguriert ist, in dem Fall, dass ein von dem Brandmelder empfangenes Brandmeldersignal einen Referenzbrandzustand repräsentiert, der einer Verifizierung bedarf, ein Instruktionssignal an ein Fahrzeug zu übertragen, wobei das Instruktionssignal zumindest einen Zielort für das Fahrzeug repräsentiert, wobei ein Fahrzeugüberwachungsbereich einer Fahrzeugsensoreinheit des Fahrzeugs in hinreichender Überlappung mit einem Brandmelderüberwachungsbereich des Brandmelders ist, wenn das Fahrzeug an dem Zielort ist, so dass das Fahrzeug mittels der Fahrzeugsensoreinheit eine Verifikationsbrandkenngröße des Brandmelderüberwachungsbereichs erfassen kann, wobei die Zentraleinheit dazu ausgebildet ist, ein Verifikationssignal, das einen der Verifikationsbrandkenngröße entsprechenden Verifikationsbrandzustand repräsentiert, von dem Fahrzeug zu empfangen, und wobei die Zentraleinheit dazu konfiguriert ist, den Referenzbrandzustand als verifizierten Referenzbrandzustand zu bestimmen, für den Fall, dass der Referenzbrandzustand und der Verifikationsbrandzustand zumindest hinreichend übereinstimmen. Bezüglich der Zentraleinheit gemäß dem dritten Aspekt der Erfindung wird in analoger Weise auf die Erläuterungen, bevorzugten Merkmale, Vorteile und/oder Effekte bevorzugt Bezug genommen, die für die Zentraleinheit gemäß dem ersten Aspekt der Erfindung erörtert worden sind.

Gemäß einem vierten Aspekt der Erfindung wird die eingangs genannte Aufgabe von einem Verfahren gelöst. Das Verfahren dient zum Bestimmung eines verifizierten Brandzustands. Das Verfahren weist die folgenden Schritte auf:
a) Erfassen, insbesondere mindestens, einer Referenzbrandkenngröße eines Brandmelderüberwachungsbereichs mittels einer Brandmeldersensoreinheit eines Brandmelders;
b) Bestimmung eines Referenzbrandzustands durch Auswertung der, insbesondere mindestens einen, Referenzbrandkenngröße mittels des Brandmelders;
c) Übertragen eines Brandmeldersignals, das den Referenzbrandzustand repräsentiert, von dem Brandmelder an eine Zentraleinheit;
d) Übertragen eines Instruktionssignals von der Zentraleinheit an ein Fahrzeug, in dem Fall, dass das von dem Brandmelder übertragene Brandmeldersignal einen Referenzbrandzustand repräsentiert, der einer Verifizierung bedarf, wobei das Fahrzeug eine Fahrzeugsensoreinheit aufweist, die zur Erfassung, insbesondere mindestens, einer Brandkenngröße eines Fahrzeugüberwachungsbereichs ausgebildet ist, und wobei das Instruktionssignal zumindest einen Zielort für das Fahrzeug repräsentiert, wobei der Fahrzeugüberwachungsbereich in hinreichender Überlappung mit dem Brandmelderüberwachungsbereich ist, wenn das Fahrzeug an dem Zielort ist;
e) Navigieren des Fahrzeugs, und zwar vorzugsweise selbstständig, zu dem Zielort basierend auf dem übertragenen Instruktionssignal mittels einer Navigationssteuereinheit des Fahrzeugs, so dass sich der Fahrzeugüberwachungsbereich und der Brandmelderüberwachungsbereichs hinreichend überlappen;
f) Erfassen der oder jeder Brandkenngröße als eine Verifikationsbrandkenngröße des Brandmelderüberwachungsbereichs mittels der Fahrzeugsensoreinheit; und
g) Bestimmung eines Verifikationsbrandzustands durch Auswertung der, insbesondere mindestens einen, Verifikationsbrandkenngröße mittels des Fahrzeugs;
hl) Übertragung eines Verifikationssignals, das den Verifikationsbrandzustand repräsentiert, von dem Fahrzeug an die Zentraleinheit; und
il) Bestimmen des Referenzbrandzustands als verifizierten Referenzbrandzustand mittels der Zentraleinheit, für den Fall, dass der Referenzbrandzustand und der Verifikationsbrandzustand zumindest hinreichend übereinstimmen.

Bezüglich des Verfahrens gemäß dem vierten Aspekt der Erfindung wird in analoger Weise auf die Erläuterungen, bevorzugten Merkmale, Vorteile und/oder Effekte bevorzugt Bezug genommen, die in entsprechender Weise für das System gemäß dem ersten Aspekt der Erfindung erörtert worden sind.

Gemäß einem fünften Aspekt der Erfindung wird die eingangs genannte Aufgabe von einem Verfahren gelöst. Das Verfahren dient zum Bestimmung eines verifizierten Brandzustands. Das Verfahren weist die folgenden Schritte auf:
h) Erfassen, insbesondere mindestens, einer Referenzbrandkenngröße eines Brandmelderüberwachungsbereichs mittels einer Brandmeldersensoreinheit eines Brandmelders;
i) Bestimmung eines Referenzbrandzustands durch Auswertung der, insbesondere mindestens einen, Referenzbrandkenngröße mittels des Brandmelders;
j) Übertragen eines Brandmeldersignals, das den Referenzbrandzustand repräsentiert, von dem Brandmelder an eine Zentraleinheit;
k) Übertragen eines Instruktionssignals von der Zentraleinheit an ein Fahrzeug, in dem Fall, dass das von dem Brandmelder übertragene Brandmeldersignal einen Referenzbrandzustand repräsentiert, der einer Verifizierung bedarf, wobei das Fahrzeug eine Fahrzeugsensoreinheit aufweist, die zur Erfassung, insbesondere mindestens, einer Brandkenngröße eines Fahrzeugüberwachungsbereichs ausgebildet ist, und wobei das Instruktionssignal zumindest einen Zielort für das Fahrzeug repräsentiert, wobei der Fahrzeugüberwachungsbereich in hinreichender Überlappung mit dem Brandmelderüberwachungsbereich ist, wenn das Fahrzeug an dem Zielort ist;
1) Navigieren des Fahrzeugs, und zwar vorzugsweise selbstständig, zu dem Zielort basierend auf dem übertragenen Instruktionssignal mittels einer Navigationssteuereinheit des Fahrzeugs, so dass sich der Fahrzeugüberwachungsbereich und der Brandmelderüberwachungsbereichs hinreichend überlappen;
m) Erfassen der oder jeder Brandkenngröße als eine Verifikationsbrandkenngröße des Brandmelderüberwachungsbereichs mittels der Fahrzeugsensoreinheit; und
n) Bestimmung eines Verifikationsbrandzustands durch Auswertung der, insbesondere mindestens einen, Verifikationsbrandkenngröße mittels des Fahrzeugs;
h2) Bestimmen des Referenzbrandzustands als verifizierten Referenzbrandzustand mittels des Fahrzeugs, für den Fall, dass der Referenzbrandzustand und der Verifikationsbrandzustand zumindest hinreichend übereinstimmen, wobei das Instruktionssignal außerdem den Referenzbrandzustand repräsentiert; und
i2) Übertragen eines Verifikationssignals, das den verifizierten Referenzbrandzustand repräsentiert, an die Zentraleinheit.

Bezüglich des Verfahrens gemäß dem fünften Aspekt der Erfindung wird in analoger Weise auf die Erläuterungen, bevorzugten Merkmale, Vorteile und/oder Effekte bevorzugt Bezug genommen, die in entsprechender Weise für das System gemäß dem ersten Aspekt der Erfindung erörtert worden sind.

Die folgenden bevorzugten Ausgestaltungen des Verfahren bilden jeweils eine bevorzugte Ausgestaltung des Verfahrens gemäß dem vierten Aspekt der Erfindung und/oder eine bevorzugte Ausgestaltung des Verfahrens gemäß dem fünften Aspekt der Erfindung. Für jedes der bevorzugten Ausgestaltungen des Verfahrens wird bereits an dieser Stelle in analoger Weise auf die Erläuterungen, bevorzugten Merkmale, Vorteile und/oder Effekte bevorzugt Bezug genommen, die in entsprechender Weise für das System gemäß dem ersten Aspekt der Erfindung erörtert worden sind.

Eine vorteilhafte Ausgestaltung zeichnet sich durch den folgenden weiteren Schritt aus: Bestimmen eines Alarmsignals mittels des Fahrzeugs bzw. mittels der Zentraleinheit, wobei das Alarmsignal den verifizierten Referenzbrandzustand repräsentiert, für den Fall, dass der Referenzbrandzustand als verifizierter Referenzbrandzustand bestimmt wurde.

Eine weitere vorteilhafte Ausgestaltung zeichnet sich durch den folgenden weiteren Schritt aus: Bestimmen eines Fehlalarmsignals mittels des Fahrzeugs bzw. der Zentraleinheit, wobei das Fehlalarmsignal eine fehlerhafte Bestimmung eines Referenzbrandzustands und/oder einen nicht verifizierten Referenzbrandzustand repräsentiert, für den Fall, dass der Referenzbrandzustand nicht als verifizierten Referenzbrandzustand bestimmt wurde.

Eine weitere vorteilhafte Ausgestaltung zeichnet sich durch den folgenden weiteren Schritt aus: Bestimmen eines Brandorts mittels der Fahrzeugsensoreinheit des Fahrzeugs, wenn das Fahrzeug an dem Zielort ist.

Eine weitere vorteilhafte Ausgestaltung zeichnet sich durch den folgenden weiteren Schritt aus: Ausrichtung der Fahrzeugsensoreinheit in Richtung des Brandorts.

Eine weitere vorteilhafte Ausgestaltung des Verfahrens zeichnet sich dadurch aus, dass das Fahrzeug eine dreh- und/oder schwenkbare Ausrichtungsvorrichtung aufweist, an der die Fahrzeugsensoreinheit befestigt ist, und sich das Verfahren auszeichnet durch ein Ausrichten der Fahrzeugsensoreinheit mittels der Ausrichtungsvorrichtung, vorzugsweise in Richtung des Brandorts.

Eine weitere vorteilhafte Ausgestaltung des Verfahrens zeichnet sich dadurch aus, dass die Verifikationskenngröße dann erfasst wird, wenn die Fahrzeugsensoreinheit in Richtung des Brandorts ausgerichtet ist.

Eine weitere vorteilhafte Ausgestaltung zeichnet sich dadurch aus, dass von dem Fahrzeug, insbesondere der Navigationssteuereinheit, Navigationsdaten gespeichert sind, die eine Karte mit möglichen Wegen repräsentieren, und wobei sich das Verfahren weiter dadurch auszeichnet, dass die Navigation des Fahrzeugs unter Verwendung der Navigationsdaten erfolgt.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Fig. 1: zeigt eine erste Ausgestaltung des Systems in einer schematischen Darstellung.
- Fig. 2: zeigt eine zweite Ausgestaltung des Systems in einer schematischen Darstellung.
- Fig. 3: zeigt eine dritte Ausgestaltung des Systems in einer schematischen Darstellung.
- Fig. 4: zeigt eine vierte Ausgestaltung des Systems in einer schematischen Darstellung.
- Fig. 5: zeigt eine fünfte Ausgestaltung des Systems in einer schematischen Darstellung.
- Fig. 6: zeigt eine sechste Ausgestaltung des Systems in einer schematischen Darstellung.
- Fig. 7: zweite eine schematische Darstellung eines Bilds.
- Fig. 8: zeigt eine siebte Ausgestaltung des Systems in einer schematischen Darstellung.
- Fig. 9: zeigt eine achte Ausgestaltung des Systems in einer schematischen Darstellung.
- Fig. 10: zeigt eine neunte Ausgestaltung des Systems in einer schematischen Darstellung.
- Fig. 11: zeigt einen Ablaufplan von Verfahrensschritten des Verfahrens in einer schematischen Darstellung.
- Fig. 12: zeigt einen Ablaufplan einer Ausgestaltung des Verfahrens in einer schematischen Darstellung.
- Fig. 13: zeigt einen Ablaufplan einer weiteren Ausgestaltung des Verfahrens in einer schematischen Darstellung.
- Fig. 14: zeigt einen zeitlichen Ablauf der Referenzbrandkenngröße in einer schematischen Darstellung.
- Fig. 15: zeigt einen zeitlichen Ablauf des Referenzbrandzustands in einer schematischen Darstellung.
- Fig. 16: zeigt einen zeitlichen Ablauf der Verifikationsbrandkenngröße in einer schematischen Darstellung.
- Fig. 17: zeigt einen zeitlichen Ablauf des Verifikationsbrandzustands in einer schematischen Darstellung.
- Fig. 18: zeigt die dritte Ausgestaltung des Systems mit abgeänderter Signalverbindung zu den Brandmeldern in einer schematischen Darstellung.

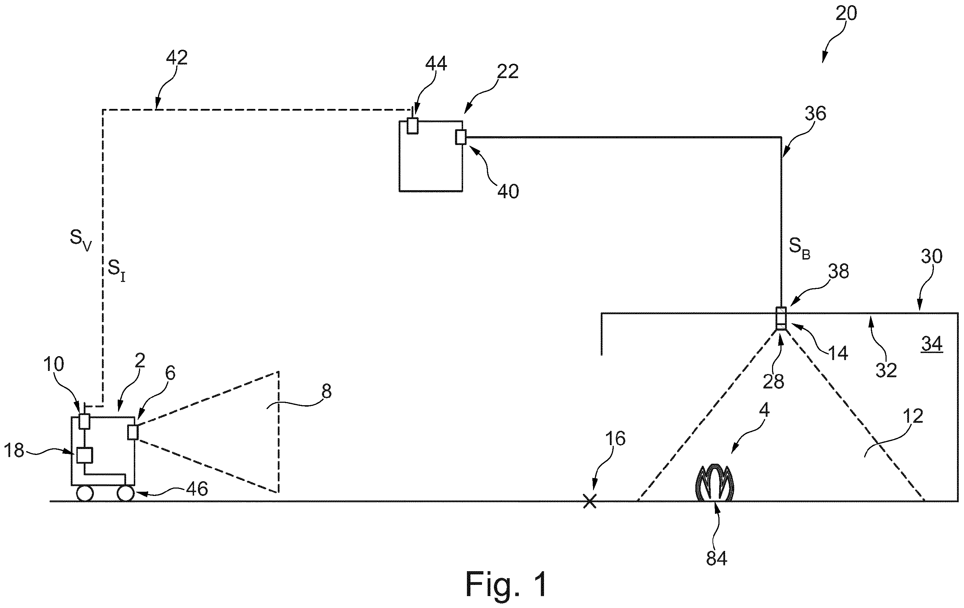

In der Fig. 1 ist ein System 20 zur Bestimmung eines verifizierten Referenzbrandzustands Z_{VR} schematisch dargestellt. Das System 20 umfasst einen stationären Brandmelder 14. Der stationäre Brandmelder 14 kann beispielsweise in einem Gebäude 30 installiert sein. Wie aus der Fig. 1 zu erkennen ist, ist der Brandmelder 14 dazu beispielsweise an einer Decke 32 eines Raumes 34 des Gebäudes 30 angebracht. Der Brandmelder 14 kann dazu beispielsweise als ein Brandgasmelder, ein Rauchmelder oder als ein Flammenmelder ausgebildet sein. Weitere Ausgestaltungen des Brandmelders 14 sind aus dem Stand der Technik bekannt und bilden auch mögliche Ausgestaltungen für den Brandmelder 14. Indem der Brandmelder 14 fest an der Decke 32 des Gebäudes 30 befestigt ist, ist der Brandmelder 14 unbeweglich und somit als stationärer Brandmelder 14 ausgebildet.

Von dem Brandmelder 14 wird ein Teil des Raums 34, nämlich der Brandmelderüberwachungsbereich 12, überwacht. Der Brandmelderüberwachungsbereich 12 kann somit dem Brandmelder 14 zugeordnet sein. Der Brandmelder 14 dient zur Erkennung eines Brands, einer Brandvorstufe und/oder eines Schwelbrands. Um dies zu ermöglichen, weist der Brandmelder 14 eine Sensoreinheit auf, die als Brandmeldersensoreinheit 28 bezeichnet wird. Die Brandmeldersensoreinheit 28 ist zur Erfassung einer Referenzbrandkenngröße K_{R} des Brandmelderüberwachungsbereichs 12 ausgebildet. Ist der Brandmelder 14 beispielsweise als Brandgasmelder ausgebildet, so kann die zugehörige Brandmeldersensoreinheit 28 zur Erfassung einer Rauchkonzentration und/oder zur Erfassung einer Konzentration zumindest eines vorbestimmten Gases ausgebildet sein. Das vorbestimmte Gas kann dabei ein Gas, insbesondere CO₂ und/oder CO, sein, dass bei einer Verbrennung entsteht. Die Rauchkonzentration bzw. die Konzentration des vorbestimmten Gases bildet in diesem Fall die Referenzkenngröße K_{R}, die von der Brandmeldersensoreinheit 28 erfassbar ist. Mit einer Erfassung kann grundsätzlich eine direkte oder indirekte Erfassung gemeint sein.

Außerdem ist der Brandmelder 14 zur Bestimmung eines Referenzbrandzustands Z_{R} durch Auswertung der Referenzbrandkenngröße K_{R} ausgebildet. Dazu kann der Brandmelder 14 eine Auswerteeinheit aufweisen. Die Auswerteeinheit ist vorzugsweise zur Auswertung der Referenzbrandkenngröße K_{R} ausgebildet. Außerdem ist die Auswerteeinheit vorzugsweise zur Bestimmung des Referenzbrandzustands Z_{R} basierend auf dem Ergebnis der Auswertung ausgebildet. Ein Referenzbrandzustand Z_{R} repräsentiert beispielsweise einen Brand, eine Brandvorstufe und/oder einen Schwelbrand. Bei einem Brand, einer Brandvorstufe und/oder einem Schwelbrand entstehen oftmals charakteristische Gase, wie CO, die beispielsweise von der Brandmeldersensoreinheit 28 gemessen werden können. Vorzugsweise wird ein Brand als ein mit einer Lichterscheinung verbundener Verbrennungsvorgang verstanden. Als ein Schwelbrand wird vorzugsweise ein Verbrennungsvorgang ohne Lichterscheinung verstanden.

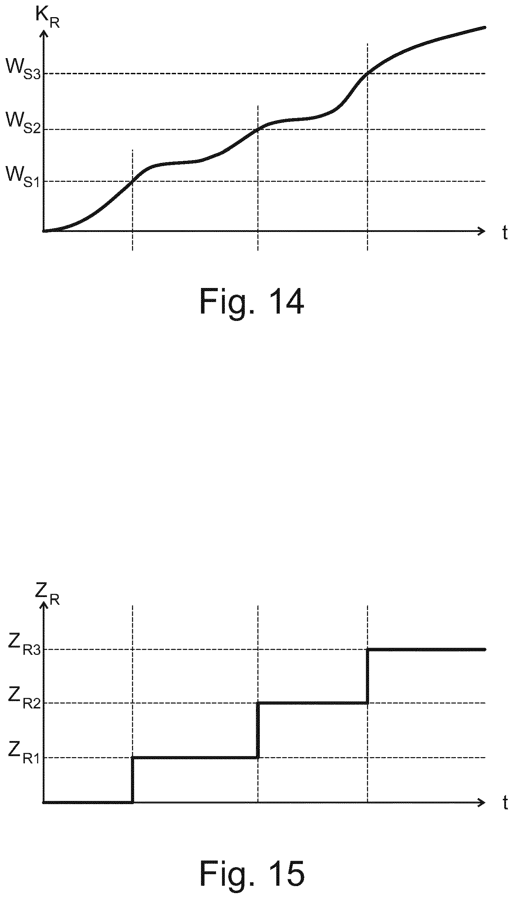

In der Fig. 14 ist ein beispielhafter Werteverlauf der Referenzbrandkenngröße K_{R} über die Zeit t schematisch dargestellt. Von dem Brandmelder 14, und vorzugsweise von der zugehörigen Auswerteeinheit, kann mindestens ein Schwellwert W_{S1}, vorzugsweise eine Mehrzahl von Schwellwerten W_{S1}, W_{S2}, W_{S3}, gespeichert sein. Diese Schwellwerte W_{S1}, W_{S2}, W_{S3} können Schwellwerte für die Referenzbrandkenngröße K_{R}, also vorzugsweise für eine von der Brandmeldersensoreinheit 28 gemessene Gaskonzentration, sein. Übersteigt eine mittels der Brandmeldersensoreinheit 28 erfasste Referenzbrandkenngröße K_{R}, insbesondere also eine entsprechende Rauchkonzentration, einen ersten der Schwellwerte W_{S1}, kann dies beispielsweise charakteristisch für einen Schwelbrand sein. In der Fig. 15 ist ein beispielhafter Zustandsverlauf des Referenzbrandzustands Z_{R} über die Zeit t und korrespondierend zu dem Werteverlauf der Referenzbrandkenngröße K_{R} aus der Fig. 14 schematisch dargestellt. Erreicht und/oder übersteigt der erfasste Referenzbrandkenngröße K_{R} den Schwellwerte W_{S1}, so kann basierend hierauf ein Referenzbrandzustands Z_{R1} bestimmt werden, der beispielsweise zu einem Schwelbrand korrespondiert. Wird beispielsweise eine höhere Referenzbrandkenngröße K_{R}, also insbesondere eine höhere Rauchkonzentration, erfasst, kann die Referenzbrandkenngröße K_{R}, bzw. die Rauchkonzentration, einen weiteren der Schwellwerte W_{S2} erreichen und/oder übersteigen, so dass dies charakteristisch für eine Brandvorstufe sein und ein entsprechender Referenzbrandzustands Z_{R2} bestimmt werden kann. Erreicht und/oder übersteigt der erfasste Referenzbrandkenngröße K_{R} den weiteren Schwellwerte W_{S3}, so kann basierend hierauf ein Referenzbrandzustands Z_{R3} bestimmt werden, der beispielsweise zu einem Brand 4 korrespondiert. Somit ist es bevorzugt vorgesehen, dass die Auswerteeinheit des Brandmelders 14 basierend auf der erfassten Referenzbrandkenngröße K_{R}, und vorzugsweise unter Verwendung von mindestens einem Schwellwert W_{S1}, W_{S2}, W_{S3}, zur Bestimmung eines Referenzbrandzustands Z_{R} ausgebildet ist.

Das System 20 weist außerdem eine Zentraleinheit 22 auf. Die Zentraleinheit 22 ist vorzugsweise ein Teil eines Brandmeldersystems (nicht dargestellt), die auch als Brandmelderanlage bezeichnet werden kann. Alternativ oder ergänzend kann die Zentraleinheit 22 eine Brandmelderzentrale oder zumindest ein Teil einer Brandmelderzentrale sein. Weiterhin kann es vorgesehen sein, dass die Zentraleinheit 22 zumindest ein Teil einer Leitstelleneinheit (nicht dargestellt) ist und bildet. Ohne Begrenzung des allgemeinen Erfindungsgedankens soll im Weiteren rein beispielhaft davon ausgegangen werden, dass die Zentraleinheit 22 eine Brandmelderzentrale ist. Der Vollständigkeit halber soll darauf hingewiesen werden, dass die Zentraleinheit 22 als Brandmelderzentrale zumindest teilweise zusammen mit einer Löschsteuerzentrale 64 ausgebildet sein kann. Denn eine Brandmelderzentrale und eine Löschsteuerzentrale 64 können beispielsweise zumindest teilweise als eine gemeinsame Einheit ausgebildet sein.

Der stationäre Brandmelder 14 ist mittels einer Signalleitungsverbindung 36 mit der Zentraleinheit 22 verbunden. Somit besteht zwischen dem stationären Brandmelder 14 und der Zentraleinheit 22 eine Signalverbindung. Um ein Signal von dem stationären Brandmelder 14 an die Zentraleinheit 22 zu übertragen, weist der stationäre Brandmelder 14 eine Signalsendeeinheit 38 auf. Die Signalsendeeinheit 38 des Brandmelders 14 ist mit der Signalleitung 36 verbunden. Die Zentraleinheit 22 weist eine Signalempfangseinheit 40 auf. Die Signalempfangseinheit 40 der Zentraleinheit 22 ist ebenfalls mit der Signalleitung 36 verbunden. Die Signalleitung 36 kann sich deshalb von der Signalsendeeinheit 38 des Brandmelders 14 zu der Signalempfangseinheit 40 der Zentraleinheit 22 erstrecken. Somit kann ein Brandmeldersignal S_{B} von dem Brandmelder 14 an die Zentraleinheit 22 übertragen werden. Der Brandmelder 14 ist also zur Übertragung des Brandmeldersignals S_{B}, das den Referenzbrandzustand Z_{R} repräsentiert, an die Zentraleinheit 22 ausgebildet. Mittels der Übertragung des Brandmeldersignals S_{B} von dem Brandmelder 14 an die Zentraleinheit 22 kann der Zentraleinheit 22 der Referenzbrandzustand Z_{R} bzw. die Information darüber zur Verfügung gestellt werden.

Wurde mittels des Brandmelders 14 ein Referenzbrandzustand Z_{R}, der zu einem Brand korrespondiert, bestimmt und mittels des Brandmelders 14 ein Brandmeldersignal S_{B}, das den entsprechenden Referenzbrandzustand Z_{R} repräsentiert, an die Zentraleinheit 22 übertragen, war es im Stand der Technik oftmals nicht eindeutig klar, ob in dem Brandmelderüberwachungsbereich 12 tatsächlich ein Brand 4, oder ggf. eine Brandvorstufe und/oder ein Schwelbrand, vorherrscht. Denn durch Täuschungsgrößen und/oder durch unvorhergesehene Umstände kann es vorkommen, dass der Brandmelder 14 einen zu einem Brand 4 korrespondierenden Referenzbrandzustand Z_{R} bestimmt, obwohl tatsächlich gar kein Brand 4 in dem Brandmelderüberwachungsbereich 12 vorherrscht. Desto öfter derartige Täuschungsgrößen und/oder unvorhergesehene Umstände eintreten, die zu dem zuvor erläuterten Resultat führen, desto größer ist die Gefahr bei Einsatzkräften zum Löschen eines Brands 4, dass ein zu einem tatsächlichen Brand 4 korrespondierender Referenzbrandzustand Z_{R} nicht mit der nötigen Ernsthaftigkeit wahrgenommen und/oder interpretiert wird. Dies birgt jedoch Gefahren, denn nur durch eine unmittelbare und zeitnahe Brandbekämpfung können zeitlich exponentiell ansteigende Sach- und/oder Personenschäden in dem Brandmelderüberwachungsbereich 12 des Raums 34 effektiv verhindert werden. Daher ist eine möglichst umgehende und frühzeitige Überprüfung und/oder Verifizierung des Referenzbrandzustands Z_{R} von hoher Bedeutung. Wird also ein Brandmeldersignal S_{B}, das den Referenzbrandzustand Z_{R} repräsentiert, von dem Brandmelder 14 an die Zentraleinheit 22 übertragen, wird in der Praxis daraufhin oftmals eine Person zu dem Brandmelder 14 bzw. dem Brandmelderüberwachungsbereich 12 geschickt, um zu überprüfen, ob ein zu dem Referenzbrandzustand Z_{R} korrespondierender Brand 4, bzw. Brandvorstufe und/oder Schwelbrand, tatsächlich vorliegt. In der Zeit zwischen der Übertragung des Brandmeldersignals S_{B} von dem Brandmelder 14 an die Zentraleinheit 22 und dem Eintreffen der Person in dem Raum 34 bzw. an dem Brandmelderüberwachungsbereich 12 kann sich der Verbrennungsvorgang weiterentwickeln. So kann beispielsweise aus einem Schwelbrand bereits ein tatsächlicher Brand 4 mit Lichterscheinung entstanden sein. Entsprechend steigt die Gefahr von Sach-und/oder Personenschäden. Ist die Person eingetroffen, um den Brandmelderüberwachungsbereich 12 auf einen möglichen Brand, bzw. eine Brandvorstufe und/oder einen Schwelbrand zu begutachtet, kann die Person eine entsprechende Rückmeldung geben, so dass der Referenzbrandzustand Z_{R} bestätigt werden kann oder eben nicht. Vor dem zuvor erläuterten Hintergrund ist es gemäß der Erfindung vorgesehen, ein System 20 vorzuschlagen, das eine mögliche Gefahr von Sach- und/oder Personenschäden möglichst weitgehend vermeiden oder zumindest verringern kann.

Das erfindungsgemäße System 20 soll deshalb zur, insbesondere automatischen, Bestimmung eines verifizierten Referenzbrandzustands dienen. Dazu weist das System 20 die Zentraleinheit 22, den stationären Brandmelder 14 sowie ein unbemanntes Fahrzeug 2 auf. In diesem Zusammenhang wird auf die vorangegangenen Erläuterungen Bezug genommen. Außerdem ist die Zentraleinheit 22 dazu konfiguriert, ein Instruktionssignal S_{I} an das Fahrzeug 2 zu übertragen. Die Übertragung des Instruktionssignals S_{I} findet jedoch nur dann statt, wenn das von dem Brandmelder 14 übertragene Brandmeldersignal S_{B} einen Referenzbrandzustand Z_{R} repräsentiert, der einer Verifizierung bedarf. Grundsätzlich kann es vorgesehen sein, dass jeder Referenzbrandzustand Z_{R} einer Verifizierung bedarf. In diesem Fall wird das Instruktionssignal S_{I} an das Fahrzeug 2 übertragen, wenn die Zentraleinheit 22 das Brandmeldersignal S_{B} von dem Brandmelder 14 empfängt. Allerdings kann es vorkommen, dass nicht jeder Referenzbrandzustand Z_{R} einer Verifizierung bedarf. Korrespondiert der Referenzbrandzustand Z_{R} beispielsweise zu einer Brandvorstufe, so kann es vorgesehen sein, dass ein entsprechender Referenzbrandzustand Z_{R} keiner Verifizierung bedarf.

Die Zentraleinheit 22 und das Fahrzeug 2 sind mittels einer Signalverbindung 42 miteinander verbunden. Die Signalverbindung 42 ist vorzugsweise eine Funk-Signalverbindung. Dabei weist die Zentraleinheit 22 eine Signalsendeeinheit 44 auf, die vorzugsweise als eine Funk-Signalsendeeinheit ausgebildet ist. Somit kann das Instruktionssignal S_{I} mittels der Signalsendeeinheit 44 an das Fahrzeug 2 gesendet werden. Zum Empfang des Instruktionssignals S_{I} weist das Fahrzeug 2 eine Signalempfangseinheit 10, die vorzugsweise als eine Funk-Signalempfangseinheit ausgebildet ist, auf. Dabei ist es nicht notwendig, dass das Instruktionssignal S_{I} unmittelbar von der Signalsendeeinheit 44 der Zentraleinheit 22 an die Signalempfangseinheit 10 des Fahrzeugs 2 übertragen wird. So kann beispielsweise mindestens ein Transmitter (nicht dargestellt) vorgesehen sein, der zur Signalweiterleitung ausgebildet ist, und der dazu dient, das Instruktionssignal S_{I} von der Zentraleinheit 22, bzw. der zugehörigen Signalsendeeinheit 44, an die Signalempfangseinheit 10 des Fahrzeugs 2 weiterzuleiten.

Das Fahrzeug 2 weist eine Sensoreinheit auf, die als Fahrzeugsensoreinheit 6 bezeichnet wird. Die Fahrzeugsensoreinheit 6 ist zur Erfassung einer Brandkenngröße Kp eines Fahrzeugüberwachungsbereichs 8 ausgebildet. Auf die vorangegangenen Erläuterungen zu der Referenzbrandkenngröße K_{R} wird in analoger Weise für die Brandkenngröße K_{F} Bezug genommen. Allerdings dient die Fahrzeugsensoreinheit 6 in diesem Fall zur Erfassung der Brandkenngröße Kp des Fahrzeugüberwachungsbereichs 8. Der Fahrzeugüberwachungsbereich 8 kann somit der Fahrzeugsensoreinheit 6 zugeordnet sein. Mit anderen Worten kann der Fahrzeugüberwachungsbereich 8 der Fahrzeugsensoreinheit 6 ortsfest zugeordnet sein. Wird das Fahrzeug 2 und/oder die Fahrzeugsensoreinheit 6 bewegt, so findet eine entsprechende Bewegung des Fahrzeugüberwachungsbereichs 8 statt. Mittels der Fahrzeugsensoreinheit 6 kann also erfasst werden, ob ein Brand 4, eine Brandvorstufe und/oder ein Schwelbrand in dem Fahrzeugüberwachungsbereich 8 vorliegt.

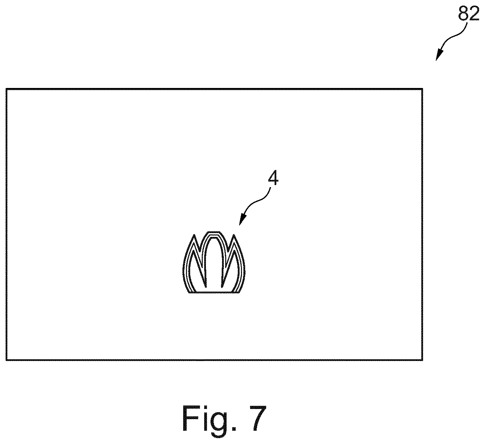

Als vorteilhaft hat es sich herausgestellt, wenn die Fahrzeugsensoreinheit 6 eine Kamera, insbesondere eine Wärmebildkamera, aufweist und/oder ist. Dabei kann die Kamera zur Erfassung eines Bildes 82 des Fahrzeugüberwachungsbereichs 8 ausgebildet sein, wie es beispielhaft in der Fig. 7 schematisch dargestellt ist. Sofern die Kamera als Wärmebildkamera ausgebildet ist, kann die Wärmebildkamera zur Erfassung eines Wärmebildes des Fahrzeugüberwachungsbereichs 8 ausgebildet sein. Außerdem kann die Fahrzeugsensoreinheit 6 dazu ausgebildet sein, das entsprechende Bild, bzw. Wärmebild, auszuwerten und basierend hierauf die Brandkenngröße Kp des Fahrzeugüberwachungsbereichs 8 zu erfassen.

Ist die Fahrzeugsensoreinheit 6 beispielsweise mit einer Wärmebildkamera ausgebildet, so kann die Fahrzeugsensoreinheit 6 zur Erfassung einer Temperatur, insbesondere zur Erfassung einer mittleren Temperatur und/oder einer maximalen Temperatur, ausgebildet sein. Die Temperatur, insbesondere die mittlere und/oder maximale Temperatur, bildet in diesem Fall die Brandkenngröße Kp, die von der Fahrzeugsensoreinheit 6 erfassbar ist.

Mittels des Fahrzeugs 2 soll überprüft werden, ob in dem Brandmelderüberwachungsbereich 12 tatsächlich ein Brand 4, bzw. eine Brandvorstufe und/oder ein Schwelbrand, vorherrscht. Das von der Zentraleinheit 22 an das Fahrzeug 2 übertragene Instruktionssignal S_{I} repräsentiert deshalb zumindest einen Zielort 16 für das Fahrzeug 2. Mittels des Instruktionssignals S_{I} kann also der Zielort 16 an das Fahrzeug 2 übertragen werden. Das Fahrzeug 2 ist dabei derart konfiguriert und/oder ausgebildet, um basierend auf dem Instruktionssignal S_{I}, bzw. dem von dem Instruktionssignal S_{I} repräsentierten Zielort 16, zu dem entsprechenden Zielort 16 zu navigieren. Mit Navigieren soll in diesem Sinne vorzugsweise Fahren, Fliegen und/oder Bewegen gemeint sein. Als vorteilhaft hat es sich hierbei herausgestellt, wenn das Fahrzeug 2 dazu ausgebildet ist, basierend auf dem Instruktionssignal S_{I} selbstständig zu dem Zielort 16 zu navigieren. Dazu kann das Fahrzeug 2 eine Navigationssteuereinheit 18 aufweisen, die zur Auswertung des Instruktionssignals S_{I} sowie zur Steuerung des Fahrzeugs 2 basierend auf dem Instruktionssignal S_{I} derart ausgebildet ist, um das Fahrzeug 2 gesteuert zu dem Zielort 16 zu navigieren.

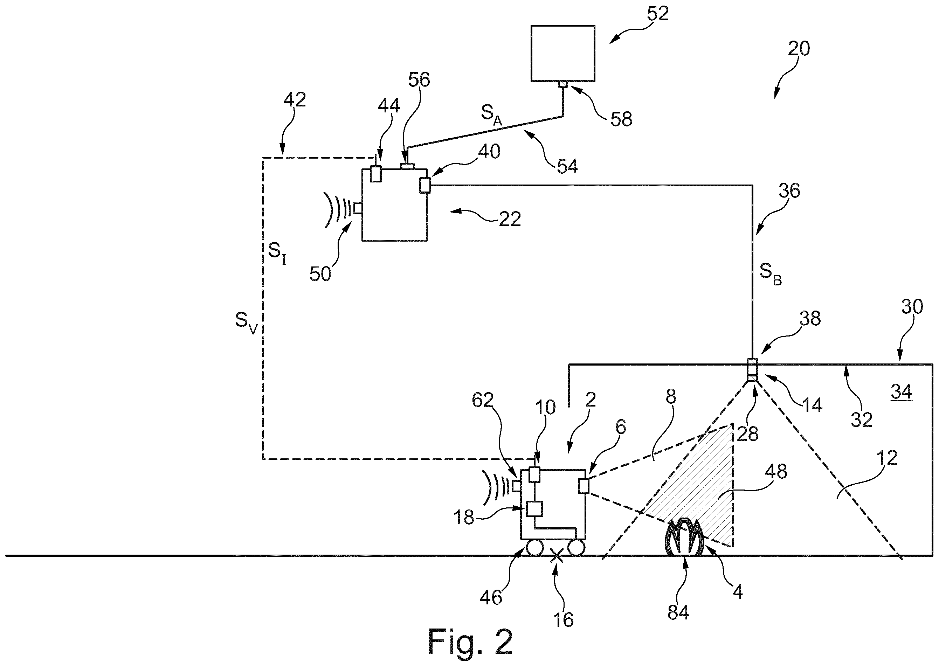

In der Fig. 2 ist das System 20 in der Weise schematisch dargestellt, dass das Fahrzeug 2 zu dem Zielort 16 gefahren ist. Wie aus der Zusammenschau der Fig. 1 und 2 ersichtlich ist, ist es bevorzugt vorgesehen, dass das Fahrzeug 2 als ein Landfahrzeug ausgebildet ist. Dazu kann das Landfahrzeug also beispielsweise Reifen 46 aufweisen. Andere Antriebsmittel, wie beispielsweise ein Kettenantrieb, sind jedoch ebenfalls für ein Landfahrzeug denkbar. So kann das Landfahrzeug beispielsweise nach Art eines Roboterfahrzeugs ausgebildet sein.

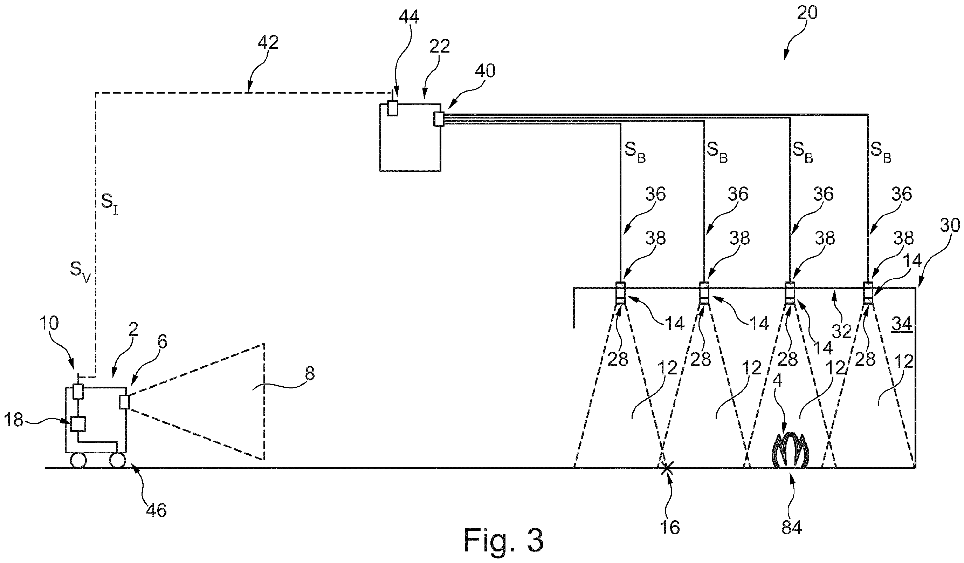

In einer vorteilhaften Ausgestaltung ist von der Zentraleinheit 22 ein Zielort 16 für den Brandmelder 14 und/oder für den Brandmelderüberwachungsbereich 12 gespeichert. Empfängt die Zentraleinheit 22 somit das Brandmeldersignal S_{B} von dem Brandmelder 14, so kann die Zentraleinheit 22 ein Instruktionssignal S_{I}, das den zu dem Brandmelder 14 korrespondierenden Zielort 16 repräsentiert, an das Fahrzeug 2 übertragen. Sind für das System 20 mehrere Brandmelder 14 vorgesehen, wie es schematisch in der Fig. 3 gezeigt ist, so kann von der Zentraleinheit 22 für jeden der Brandmelder 14 und/oder für jeden der zugehörigen Brandmelderüberwachungsbereiche 12 ein entsprechender Zielort 16 gespeichert sein. Wird nun von einem der mehreren Brandmelder 14 ein Brandmeldersignal S_{B} an die Zentraleinheit 22 übertragen, so kann das von der Zentraleinheit 22 an das Fahrzeug 2 übertragene Instruktionssignal S_{I} den Zielort 16 repräsentieren, der zu dem jeweiligen Brandmelder 14 bzw. Brandmelderüberwachungsbereich 12 korrespondiert.

Der Zielort 16 zeichnet sich dabei dadurch aus, dass der Fahrzeugüberwachungsbereich 8 in zumindest hinreichender Überlappung mit dem Brandmelderüberwachungsbereich 12 ist, wenn das Fahrzeug 2 an dem Zielort 16 ist. Mit anderen Worten ist der Zielort 16 derart gewählt, dass es, wenn das Fahrzeug 2 an diesem Zielort 16 ist, zu einer Überlappung, und zwar vorzugsweise der hinreichenden Überlappung, von dem Fahrzeugüberwachungsbereich 8 mit dem Brandmelderüberwachungsbereich 12 kommt. Bevorzugt ist der Fahrzeugüberwachungsbereich 8 in hinreichender Überlappung mit dem Brandmelderüberwachungsbereich 12, wenn mindestens 20%, mindestens 30%, mindestens 40%, mindestens 50%, mindestens 60%, mindestens 70%, mindestens 80% oder mindestens 90% des Brandmelderüberwachungsbereichs 12 in Überlappung mit dem Fahrzeugüberwachungsbereich 8 ist. Die Überlappung bezieht sich hierbei vorzugsweise auf die Schnittmenge 48 zwischen dem Fahrzeugüberwachungsbereich 8 und dem Brandmelderüberwachungsbereich 12 (s. Fig. 2). Ist das Fahrzeug 2 also an dem Zielort 16, so kommt es zu der gewünschten hinreichenden Überlappung des Fahrzeugüberwachungsbereichs 8 mit dem Brandmelderüberwachungsbereich 12.

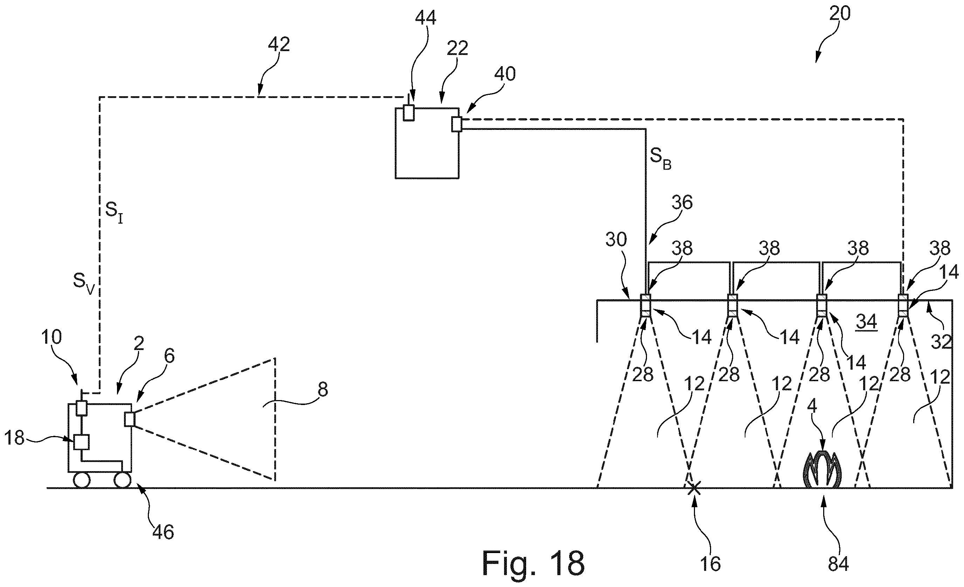

Aus der Fig. 3 ist zu entnehmen, dass für jeden der Brandmelder 14 eine separate Signalleitung 36 vorgesehen sein kann. Jede der Signalleitungen 36 erstreckt sich von einem zugehörigen Brandmelder 14 zu der Zentraleinheit 22. Eine alternative Signalverbindung zwischen den Brandmeldern 14 und der Zentraleinheit 22 ist in Fig. 18 dargestellt. Hierbei sind die Zentraleinheit 22 und die Brandmelder 14 mittels einer, vorzugsweise einzigen, kabelgebunden Signalleitung 36 in Serie geschaltet. Wie es durch den gestrichelt dargestellten Abschnitt der Signalleitung 36 wiedergegeben ist, kann die Signalleitung 36 ringförmig ausgebildet sein. Alternativ kann es vorgesehen sein - und in diesem Fall ohne den gestrichelt dargestellten Abschnitt - dass die Signalleitung 36 als eine Art Stichleitung von der Zentraleinheit 22 zu den Brandmeldern 14 führt. Wird eine kabelgebundene Signalverbindung 36 zur Übertragung des Brandmeldersignals S_{B} verwendet, so kann das Brandmeldersignal S_{B} durch ein Stromsignal und/oder Spannungssignal repräsentiert und/oder modelliert sein. Dazu kann beispielsweise die Stromstärke und/oder das Spannungspotential vom Brandmelder 14 angepasst werden, um das Brandmeldersignal S_{B} zu übertragen. Führt die kabelgebundene Signalverbindung 36 von der Zentraleinheit 22 zu der Mehrzahl von Brandmeldern 14, wobei die Brandmelder 14 mittels der kabelgebundenen Signalverbindung 36 in Serie geschaltet sind, so kann oftmals keine eindeutige Identifizierung stattfinden, von welchem der Mehrzahl der Brandmelder 14 das Brandmeldersignal S_{B} bzw. die korrespondierende Änderung des Stroms bzw. der Spannung stammt. Als eine vorteilhafte Alternative hat sich deshalb herausgestellt, wenn die kabelgebundene Signalverbindung 36 kann als eine Busleitung ausgebildet ist. In diesem Fall bilden die Zentraleinheit 22 und jeder der Mehrzahl der Brandmelder 14 jeweils einen Busteilnehmer. Jeder Busteilnehmer kann eine eigene Busadresse aufweisen, die auch als Kennung bezeichnet wird. Insgesamt kann deshalb von den Busteilnehmern und der Busleitung ein Bussystem zur Übertragung von Informationen ausgebildet sein. Vorzugsweise ist das Bussystem als ein Ringbussystem ausgebildet. Die Informationen sind beispielsweise das Brandmeldersignal oder repräsentieren das Brandmeldersignal. So kann ein Brandmelder 14 das Brandmeldersignal S_{B} mittels der Busleitung 36 bzw. des Bussystems zu der Zentraleinheit 22 senden. Dabei kann auch die Adresse des jeweiligen Brandmelders 14 übertragen werden. Die Übertragung kann beispielsweise in bitserieller Form und im Halbduplex-Verfahren erfolgen. Dabei wird das Brandmeldersignal S_{B} bzw. die zugehörigen Dateninformationen von dem Brandmelder 14 auf eine von der Zentraleinheit 22 bereitgestellte Busversorgungsspannung aufmoduliert. Die Zentraleinheit 22 demoduliert die entsprechenden Signale, so dass der Zentraleinheit 22 das Brandmeldersignal S_{B} zur Verfügung steht. Außerdem erlangt die Zentraleinheit 22 darüber Kenntnis, welcher der Brandmelder 14 das Brandmeldersignal S_{B} an die Zentraleinheit 22 gesendet hat.

Wie zuvor erläutert, ist die Fahrzeugsensoreinheit 6 des Fahrzeugs 2 zur Erfassung einer Brandkenngröße Kp des Fahrzeugüberwachungsbereichs 8 ausgebildet. Da es nunmehr zu einer hinreichenden Überlappung des Fahrzeugüberwachungsbereichs 8 mit dem Brandmelderüberwachungsbereich 12 gekommen ist, da das Fahrzeug 2 an dem Zielort 16 ist, kann mittels des Fahrzeugs 2 bzw. mittels der Fahrzeugsensoreinheit 6 des Fahrzeugs 2 eine Brandkenngröße Kp des Brandmelderüberwachungsbereichs 12 erfasst werden, wobei diese erfasste Brandkenngröße Kp die Verifikationsbrandkenngröße K_{V} bildet. Mit anderen Worten ist das Fahrzeug 2 dazu konfiguriert, an dem Zielort 16 die Brandkenngröße Kp mittels der Fahrzeugsensoreinheit 6 als eine Verifikationsbrandkenngröße K_{V} des Brandmelderüberwachungsbereichs 12 zu erfassen.

Nachdem die Verifikationsbrandkenngröße K_{V} des Brandmelderüberwachungsbereichs 12 erfasst wurde, liegen nunmehr zwei unabhängig erfasste Brandkenngrößen, nämlich die Referenzbrandkenngröße K_{R} und die Verifikationsbrandkenngröße K_{V} für den Brandmelderüberwachungsbereich vor. Wie eingangs erläutert, ist es jedoch bevorzugt vorgesehen, dass der Brandmelder 14 als ein Brandgasmelder ausgebildet ist, wohingegen die Fahrzeugsensoreinheit 6 des Fahrzeugs 2 vorzugsweise eine Kamera aufweist oder davon gebildet wird. Diese unabhängig voneinander festgestellten Brandkenngrößen K_{R}, Kp lassen sich aber nur schwer vergleichen. Es ist deshalb vorgesehen, dass das Fahrzeug 2 zur Bestimmung eines weiteren Brandzustands, der als Verifikationsbrandzustand Z_{V} bezeichnet wird, ausgebildet ist, und zwar durch Auswertung der Verifikationsbrandkenngröße K_{V}.

Dazu kann das Fahrzeug 2 eine Auswerteeinheit aufweisen. Die Auswerteeinheit ist vorzugsweise zur Auswertung der Verifikationsbrandkenngröße K_{V} ausgebildet. Außerdem ist die Auswerteeinheit vorzugsweise zur Bestimmung des Verifikationsbrandzustands Zp basierend auf dem Ergebnis der Auswertung ausgebildet. Ein Verifikationsbrandzustands Zp repräsentiert beispielsweise einen Brand 4, eine Brandvorstufe und/oder einen Schwelbrand. Bei einem Brand 4 und/oder einem Schwelbrand entstehen oftmals charakteristische Temperaturen, die beispielsweise von der Fahrzeugsensoreinheit 6 erfasst werden können. In diesem Zusammenhang soll darauf hingewiesen werden, dass die Erfassung auch eine indirekte Erfassung einschließen kann. Wird beispielsweise von der Wärmebildkamera ein Infrarotspektrum erfasst, kann basierend hierauf auf eine Temperatur, insbesondere eine maximalen und/oder mittlere Temperatur geschlossen werden.

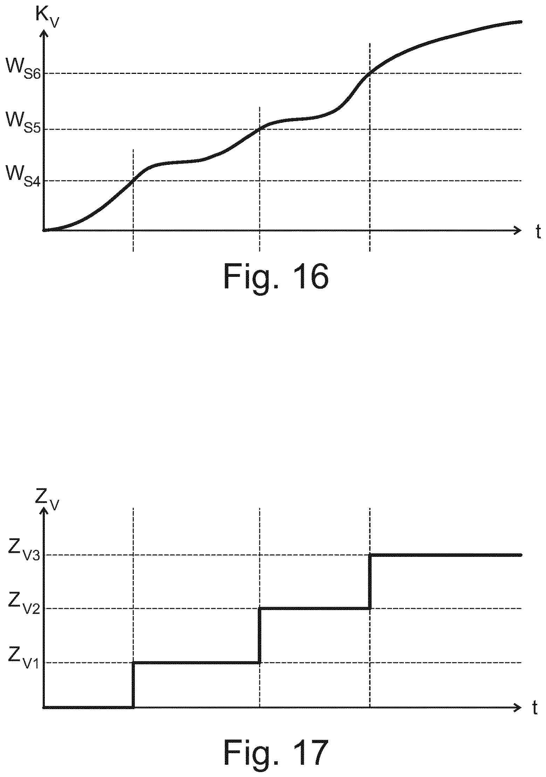

In der Fig. 16 ist ein beispielhafter Werteverlauf der Verifikationsbrandkenngröße K_{V} über die Zeit t schematisch dargestellt. Von dem Fahrzeug 2, und vorzugsweise von der zugehörigen Auswerteeinheit, kann mindestens ein Schwellwert W_{S4}, vorzugsweise eine Mehrzahl von Schwellwerten W_{S4}, W_{S5}, W_{S6}, gespeichert sein. Diese Schwellwerte W_{S4}, W_{S5}, W_{S6} können Schwellwerte für die Verifikationsbrandkenngröße K_{V}, also vorzugsweise für eine von der Fahrzeugsensoreinheit 6 erfassten Temperatur, sein. Übersteigt eine mittels der Fahrzeugsensoreinheit 6 erfasste Verifikationsbrandkenngröße K_{V} den ersten der Schwellwerte W_{S4}, kann dies beispielsweise charakteristisch für einen Schwelbrand sein. In der Fig. 17 ist ein beispielhafter Zustandsverlauf des Verifikationsbrandzustands Z_{V} über die Zeit t und korrespondierend zu dem Werteverlauf der Verifikationsbrandkenngröße K_{V} aus der Fig. 16 schematisch dargestellt. Erreicht und/oder übersteigt der erfasste Verifikationsbrandkenngröße K_{V} den Schwellwerte W_{S4}, so kann basierend hierauf ein Referenzbrandzustands Z_{R4} bestimmt werden, der beispielsweise zu einem Schwelbrand korrespondiert. Wird beispielsweise eine höhere Verifikationsbrandkenngröße K_{V}, also insbesondere eine höhere Temperatur, erfasst, kann die Verifikationsbrandkenngröße K_{V} den weiteren der Schwellwerte W_{S5} erreichen und/oder übersteigen, so dass dies charakteristisch für eine Brandvorstufe sein und ein entsprechender Referenzbrandzustands Z_{V5} bestimmt werden kann. Erreicht und/oder übersteigt der erfasste Verifikationsbrandkenngröße K_{V} den weiteren Schwellwerte W_{S6}, so kann basierend hierauf ein Verifikationsbrandzustands Z_{V6} bestimmt werden, der beispielsweise zu einem Brand 4 korrespondiert. Somit ist es bevorzugt vorgesehen, dass die Auswerteeinheit des Fahrzeugs 2 basierend auf der erfassten Verifikationsbrandkenngröße K_{V}, und vorzugsweise unter Verwendung von mindestens einem Schwellwert W_{S4}, Wss, Ws6, zur Bestimmung eines Verifikationsbrandzustands Z_{V} ausgebildet ist.
Der also nunmehr bestimmbare Verifikationsbrandzustand Z_{V} korrespondiert dabei vorzugsweise, und zwar in Abhängigkeit der Verifikationsbrandkenngröße K_{V}, zu einem Brand 4, einer Brandvorstufe und/oder einem Schwelbrand. Der Verifikationsbrandzustand Z_{V} kann deshalb mit dem Referenzbrandzustand Z_{R} verglichen werden, der ebenfalls zu einem Brand 4, einer Brandvorstufe und/oder einem Schwelbrand korrespondiert. Nunmehr ist es also möglich, den Referenzbrandzustand Z_{R} zu überprüfen und gegebenenfalls als bestätigten bzw. verifizierten Referenzbrandzustand Z_{VR} zu bestimmen.

Zur, insbesondere automatischen, Bestimmung des verifizierten Referenzbrandzustands Z_{VR} für den Brandmelderüberwachungsbereich 12 sind gemäß der Erfindung zwei Varianten vorgesehen, die vorzugsweise alternativ das zuvor erläuterte System 20 weiter ausbilden. Zunächst soll die erste Variante erörtert werden, wobei daraufhin die Erörterung der zweiten Variante erfolgt. Grundsätzlich kann es jedoch vorgesehen sein, dass das System von beiden Varianten weitergebildet ist.

Gemäß der ersten Variante ist das Fahrzeug 2 zur Übertragung eines Verifikationssignals S_{V}, das den Verifikationszustand Z_{V} repräsentiert, an die Zentraleinheit 22 ausgebildet.

Dazu kann die Signalverbindung 42 zwischen der Zentraleinheit 22 und dem Fahrzeug 2 verwendet werden. In diesem Fall kann die Signalempfangseinheit 10 als eine Signalsende-und Signalempfangseinheit, also als eine Kommunikationseinheit, ausgebildet sein. Außerdem kann die Signalsendeeinheit 44 der Zentraleinheit 22 als eine Signalsende- und Signalempfangseinheit, also eine Kommunikationseinheit, ausgebildet sein. Die Signalverbindung 42 zwischen der Zentraleinheit 22 und dem Fahrzeug 2 kann also zur bidirektionalen Übertragung von Signalen dienen.

Außerdem ist es vorgesehen, dass die Zentraleinheit 22 dazu konfiguriert ist, den Referenzbrandzustand Z_{R} als verifizierten Referenzbrandzustand Z_{VR} zu bestimmen, für den Fall, dass der Referenzbrandzustand Z_{R} und der Verifikationsbrandzustand Z_{V} zumindest hinreichend übereinstimmen. Die hinreichende Übereinstimmung kann vorzugsweise dann vorliegen, wenn der Verifikationsbrandzustand Z_{V} zu einem Brand 4 korrespondiert und der Referenzbrandzustand Z_{R} zu einem Brand 4, einer Brandvorstufe oder einem Schwelbrand korrespondiert. Weiterhin kann die hinreichende Übereinstimmung vorliegen, wenn der Verifikationsbrandzustand Z_{V} und der Referenzbrandzustand Z_{R} jeweils zu einer Brandvorstufe oder einem Schwelbrand korrespondieren.

Die zuvor erläuterte Bestimmung des verifizierten Referenzbrandzustands Z_{VR} findet also nur dann statt, wenn der Verifikationsbrandzustand Z_{V} mit dem Referenzbrandzustand Z_{R} übereinstimmt oder wenn der Verifikationsbrandzustand Z_{V} zu einem stärker entwickelten Brandvorgang korrespondiert. Der verifizierte Referenzbrandzustand Z_{VR} kann deshalb auch als überprüfter und/oder verlässlicher Referenzbrandzustand bezeichnet und/oder angesehen werden. Der verifizierte Referenzbrandzustand Z_{VR} dient deshalb als verlässliche Grundlage, um Folgeaktionen einzuleiten und/oder auszuführen. So kann beispielsweise basierend auf dem verifizierten Referenzbrandzustand Z_{VR} eine Löschaktion für den Brandmelderüberwachungsbereich 12 eingeleitet werden, um beispielsweise einen entsprechenden Brand 4 zu löschen.

Ein Vorteil des zuvor erläuterten Systems 20 ist darin zu sehen, dass die Verifizierung eines von einem Brandmelder 14 bestimmten Referenzbrandzustands Z_{R} automatisiert erfolgen kann, so dass der verifizierte Referenzbrandzustand Z_{VR} gegebenenfalls in kürzester Zeit bestimmbar ist, um entsprechende Folgeaktionen einzuleiten, die Sach-und/oder Personenschäden in dem Brandmelderüberwachungsbereich 12 vermeiden und/oder deutlich verringern können. Ein Eingriff von einer Person in das System 20 ist hierbei nicht notwendig, da das Instruktionssignal S_{I} vorzugsweise automatisiert von der Zentraleinheit 22 ausgesendet wird und daraufhin eine vorzugsweise automatische Navigation des Fahrzeugs 2 zu dem Zielort 16 ausgeführt wird, woraufhin eine ebenfalls vorzugsweise automatisierte Erfassung der Verifikationsbrandkenngröße K_{V} erfolgen kann. Ein hierauf basierend und vorzugsweise automatisch bestimmter Verifikationsbrandzustand Z_{V} kann dann ebenfalls automatisiert wieder zurück an die Zentraleinheit 22 übertragen werden, so dass auch hier automatisiert die Bestimmung des verifizierten Referenzbrandzustands Z_{VR} erfolgen kann, wenn die entsprechende hinreichende Übereinstimmung zwischen dem Referenzbrandzustand Z_{R} und dem Verifikationsbrandzustand Z_{V} vorliegt.

Im Weiteren erfolgt nun die Erörterung der zweiten Variante als eine Weiterbildung des Systems 20. Danach ist es vorgesehen, dass das Instruktionssignal S_{I} außerdem den Referenzbrandzustand Z_{R} repräsentiert. Mit der Übertragung des Instruktionssignals S_{I} von der Zentraleinheit 22 an das Fahrzeug 2 wird dem Fahrzeug 2 somit der Zielort 16 und der Referenzbrandzustand Z_{R} zur Verfügung gestellt. Außerdem ist das Fahrzeug 2 dazu konfiguriert, den Referenzbrandzustand Z_{R} als verifizierten Referenzbrandzustand Z_{VR} zu bestimmen, für den Fall, dass der Referenzbrandzustand Z_{R} und der Verifikationsbrandzustand Z_{V} zumindest hinreichend übereinstimmen. Bezüglich der hinreichenden Übereinstimmung wird auf die vorangegangenen Erläuterungen in analoger Weise Bezug genommen. Darüber hinaus ist das Fahrzeug 2 zur Übertragung des Verifikationssignals S_{I}, das nunmehr den verifizierten Referenzbrandzustand Z_{VR} repräsentiert, an die Zentraleinheit 22 ausgebildet. Durch die Übertragung des Verifikationssignals S_{I} wird der Zentraleinheit 22 also der verifizierte Referenzbrandzustand Z_{VR} zur Verfügung gestellt. Korrespondierend und in analoger Weise zu den Erläuterungen zu der vorangegangenen Variante kann die Zentraleinheit 22 dazu ausgebildet sein, eine Folgeaktion, wie beispielsweise eine Löschaktion, einzuleiten, um beispielsweise das Löschen eines Brands 4 in dem Brandmelderüberwachungsbereich 12 einzuleiten. Soweit es sinnvoll ist, wird auf weitere Merkmale, Vorteile und/oder Effekte aus den Erläuterungen zu der Variante 1 in analoger Weise Bezug genommen.

Sofern der Referenzbrandzustand Z_{R} als verifizierter Referenzbrandzustand Z_{VR} bestimmt wurde, liegt die entsprechende Information gesichert vor, dass ein zu dem verifizierten Referenzbrandzustand Z_{VR} korrespondierender Brand, eine korrespondierende Brandvorstufe und/oder ein korrespondierender Schwelbrand in dem Brandmelderüberwachungsbereich 12 vorliegt. Die Zentraleinheit 22 kann deshalb dazu ausgebildet sein, ein Alarmsignal S_{A} basierend auf dem verifizierten Referenzbrandzustand Z_{VR} zu bestimmen. Das Alarmsignal S_{A} kann dazu dienen, um Folgeaktionen einzuleiten. So kann das Alarmsignal S_{A}, oder ein darauf basierendes Signal, mittels einer Ausgabeeinheit 50 der Zentraleinheit 22 akustisch und/oder optisch ausgegeben werden. Personal, das in der Nähe der Zentraleinheit 22 ist, wird somit durch die akustische und/oder optische Ausgabe des Alarmsignals S_{A}, bzw. des darauf basierenden Signals, über den verifizierten Referenzbrandzustand Z_{VR} alarmiert bzw. benachrichtigt. Alternativ oder ergänzend kann es vorgesehen sein, dass das Alarmsignal S_{A} an eine weitere Einheit gesendet wird. Die weitere Einheit kann beispielsweise eine sogenannte Leitstelle 52 sein. Die Leitstelle 52 kann dabei zum Empfang von des Alarmsignals S_{A} ausgebildet. Außerdem kann die Leitstelle 52 dazu ausgebildet sein, das Alarmsignal S_{A}, oder ein darauf basierendes Signal, akustisch und/oder optisch auszugeben. Außerdem kann ein Alarmsignal S_{A} von der Leitstelle 52 registriert werden und/oder gespeichert werden, um mögliche Folgeaktionen, wie beispielsweise eine Löschaktion, im Nachgang analysieren und/oder nachverfolgen zu können. Um das Alarmsignal S_{A} von der Zentraleinheit 22 an die Leitstelle 52 zu übertragen, kann zwischen der Zentraleinheit 22 und der Leitstelle 52 eine Signalverbindung 54 ausgebildet sein. Vorzugsweise weist die Zentraleinheit 22 eine weitere Signalsendeeinheit 56 und die Leitstelle 52 eine Signalempfangseinheit 58 auf, wobei sich eine Signalleitungsverbindung zwischen der Signalsendeeinheit 56 der Zentraleinheit 22 und der Signalempfangseinheit 58 der Leitstelle 52 erstreckt, so dass damit das Alarmsignal S_{A} von der Zentraleinheit 22 an die Leitstelle 52 übertragbar ist.

Wurde der Referenzbrandzustand Z_{R} nicht als verifizierter Referenzbrandzustand Z_{VR} bestimmt, so liegt die Information vor, dass der zu dem Referenzbrandzustand Z_{R} korrespondierende Brand, bzw. Brandvorstufe und/oder Schwelbrand, nicht bestätigt werden konnte. Dies kann auf eine fehlerhafte Bestimmung des Referenzbrandzustands Z_{R} zurückzuführen sein. Um nun zu verhindern, dass eine mögliche Löschaktion in dem Brandmelderüberwachungsbereich 12 ausgeführt wird, hat es sich als vorteilhaft erwiesen, wenn dem Personal an der Zentraleinheit 22 und/oder der Leitstelle 52 die entsprechenden Informationen zur Verfügung gestellt werden. Die Zentraleinheit 22 ist deshalb vorzugsweise dazu ausgebildet, ein Fehlalarmsignal S_{F} zu bestimmen, das eine fehlerhafte Bestimmung des Referenzbrandzustands Z_{R} und/oder einen nicht verifizierten Referenzbrandzustand repräsentiert, für den Fall, dass der Referenzbrandzustand Z_{R} nicht als verifizierter Referenzbrandzustand Z_{VR} bestimmt wurde. Dabei kann es vorgesehen sein, dass das Fehlalarmsignal S_{B}, oder ein hierauf basierendes Signal, vorzugsweise mittels der Ausgabeeinheit 50 akustisch und/oder optisch ausgegeben wird. Weiterhin kann es vorgesehen sein, dass das Fehlalarmsignal an eine weitere Einheit, vorzugsweise die Leitstelle 52, übertragen wird. Diesbezüglich wird auf die vorangegangenen Erläuterungen, Effekte und/oder Vorteile, wie sie für die Übertragung des Alarmsignals S_{A} erörtert wurden sind, in analoger Weise Bezug genommen. Die Leitstelle 52 kann dazu ausgebildet sein, das empfangene Fehlalarmsignal S_{B}, oder ein hierauf basierendes Signal, akustisch und/oder optisch auszugeben. Außerdem kann das Fehlalarmsignal Sp von der Leitstelle 52 registriert und/oder gespeichert werden, um mögliche Folgeaktionen später überprüfen und/oder nachverfolgen zu können.

Weiterhin hat es sich als vorteilhaft erwiesen, wenn das Fahrzeug 2 zur Alarmierung von Personen in dem Brandmelderüberwachungsbereich 12 und/oder in unmittelbarer Nähe dazu über einen möglichen Brand, einer mögliche Brandvorstufe und/oder einen möglichen Schwelbrand informiert, sofern der Referenzbrandzustand Z_{R} zu dem von dem Fahrzeug bestimmten Verifikationsbrandzustand Z_{V} korrespondiert. Das Fahrzeug 2 kann deshalb dazu ausgebildet sein, ein weiteres Alarmsignal basierend auf dem Verifikationsbrandzustand Z_{V} und/oder basierend auf dem verifizierten Referenzbrandzustand Z_{VR} zu bestimmen. Das Fahrzeug 2 kann deshalb eine Ausgabeeinheit 62 aufweisen und dazu ausgebildet und/oder konfiguriert sein, um das weitere Alarmsignal optisch und/oder akustisch mittels der Ausgabeeinheit 62 auszugeben. Dadurch können Personen in dem Brandmelderüberwachungsbereich 12 oder in unmittelbarer Nähe dazu über die entsprechende Gefahrensituation informiert werden, so dass die Personen den Brandmelderüberwachungsbereich 12 und/oder den Bereich in unmittelbarer Nähe dazu verlassen zu können und sich somit in Sicherheit bringen können. Personenschäden können auf diese Weise besonders sicher und schnell vermieden werden.

Außerdem kann das Fahrzeug 2 dazu ausgebildet sein, ein weiteres Fehlalarmsignal zu bestimmen, das eine fehlerhafte Bestimmung des Referenzbrandzustands Z_{R} und/oder einen nicht verifizierten Referenzbrandzustand repräsentiert, für den Fall, dass der Referenzbrandzustand Z_{R} nicht als verifizierter Referenzbrandzustand Z_{VR} bestimmt wurde. Das Fehlalarmsignal kann mittels der Ausgabeeinheit 62 des Fahrzeugs 2 akustisch und/oder optisch ausgegeben werden. Das Fahrzeug kann dazu entsprechend ausgebildet und/oder konfiguriert sein. Durch die Ausgabe des weiteren Fehlalarmsignals von dem Fahrzeug 2 können mögliche Verunsicherungen von Personen, die sich beispielsweise in dem Brandmelderüberwachungsbereich 12 aufhalten, vermieden oder verringert werden. Denn mit dem Auftauchen des Fahrzeugs 2 können Personen in dem Brandmelderüberwachungsbereich 12 zunächst verunsichert sein und bereits aufgrund der Anwesenheit des Fahrzeugs 2 auf einen möglichen Brand schließen, obwohl dieser gegebenenfalls nicht vorliegt. Durch die Ausgabe des weiteren Fehlalarmsignals mittels der Ausgabeeinheit 62 des Fahrzeugs 2 können den genannten Personen die Informationen zur Verfügung gestellt werden, dass es sich hierbei nicht um eine Alarmsituation handelt, was zur Beruhigung der genannten Personen beiträgt.

Insbesondere für größere Gebäude 30 kann es sinnvoll sein, dass das System 20 mehrere stationäre Brandmelder 14 aufweist. Dies ist beispielhaft und schematisch in der Fig. 3 gezeigt. Dabei können die mehreren stationären Brandmelder 14 voneinander beabstandet an der Decke 32 befestigt sein. Jedem der Brandmelder 14 ist ein Brandmelderüberwachungsbereich 12 zugeordnet. Dabei können die Brandmelder 14 derart zueinander angeordnet sein, dass sich Brandmelderüberwachungsbereiche 12 von benachbarten Brandmeldern 14 überschneiden und/oder überlappen. Dies gewährleistet eine besonders sichere Überwachung des Raums 34 des Gebäudes 30 auf einen möglichen Brand 4, eine mögliche Brandvorstufe und/oder einen möglichen Schwelbrand. Jeder der Brandmelder 14 ist dabei bevorzugt in analoger Weise ausgestaltet und/oder ausgebildet, wie es im Zusammenhang mit den vorherigen Figuren für einen einzelnen Brandmelder 14 erläutert wurde. Außerdem ist es vorgesehen, dass jeder der Brandmelder 14 mittels einer Signalleitung 36 mit der Zentraleinheit 22 verbunden ist. Alternativ kann eine als Signalbus ausgebildete Signalleitung 36 vorgesehen sein, wie dieser beispielsweise in Fig. 18 schematisch dargestellt ist, mit dem die Brandmelder 14 und die Zentraleinheit 22 gekoppelt sind, so dass ein Brandmeldersignal S_{B} von einem Brandmelder 14 an die Zentraleinheit 22 übertragen werden kann, wobei das Brandmeldersignal S_{B} nunmehr auch die Adresse des jeweiligen Brandmelders 14 repräsentieren kann.

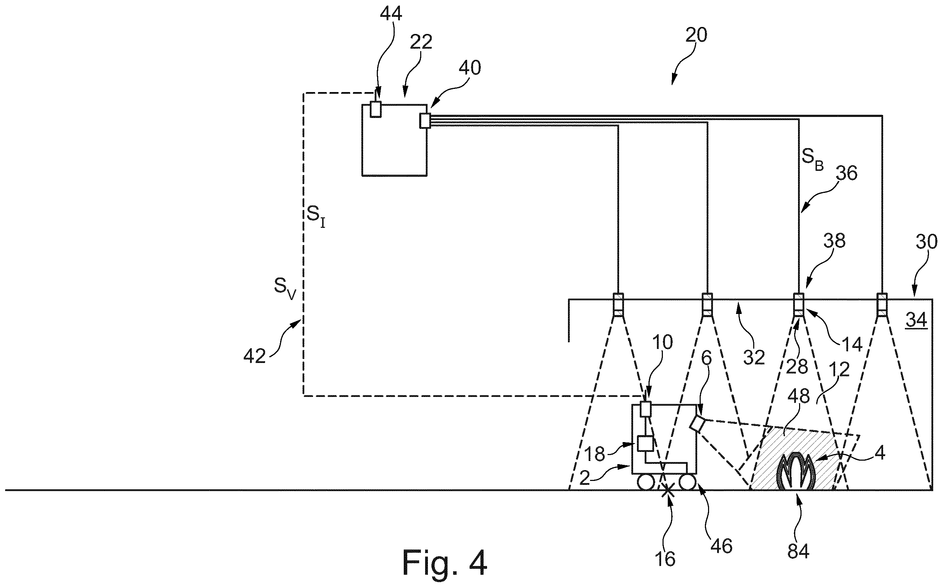

Tritt nun in dem Brandmelderüberwachungsbereich 12 eines der Brandmelder 14 ein Brand 4 auf, wird von dem entsprechenden Brandmelder 14 eine zu dem Brand 4 korrespondierende Referenzbrandkenngröße K_{R} bestimmt und basierend darauf ein Referenzbrandzustand Z_{R} bestimmt. Daraufhin überträgt der entsprechende Brandmelder 14 ein Brandmeldersignal S_{B} an die Zentraleinheit 22, wobei das genannte Brandmeldersignal S_{B} den entsprechenden Referenzbrandzustand Z_{R} repräsentiert. Sind die Brandmelder 14 einzeln mittels einer jeweiligen Signalverbindung 36 mit der Zentraleinheit 22 verbunden, kann die Zentraleinheit 22 bereits aufgrund der parallelen Verbindungen der Brandmelder 14 mit der Zentraleinheit 22 den Brandmelder 14 bestimmen, der das Brandmeldersignal S_{B} an die Zentraleinheit 22 übertragen hat. Weiterhin kann es vorgesehen sein, dass das Brandmeldersignal S_{B} außerdem eine Kennung, insbesondere Buskennung, repräsentiert, die zur Identifizierung des Brandmelders 14 und/oder des Brandmelderorts des jeweiligen Brandmelders 14 dient. Die Kennung kann auch als Adresse bezeichnet sein. Basierend auf der Kennung kann die Zentraleinheit 22 also auf den Ort des Brandmelders 14 schließen. Liegt diese Information vor, kann die Zentraleinheit 22 dazu ausgebildet sein, basierend auf dem Brandmelderort bzw. auf der Kennung einen Zielort 16 für das Fahrzeug 2 zu bestimmen. Die Zentraleinheit 22 ist deshalb bevorzugt dazu konfiguriert, das Instruktionssignal S_{I} derart zu bestimmen, dass das Instruktionssignal S_{I} zumindest einen Zielort 16 für das Fahrzeug 2 repräsentiert, bei dem der Fahrzeugüberwachungsbereich 8, wenn das Fahrzeug 2 an dem Zielort 16 ist, in hinreichender Überlappung mit dem Brandmelderüberwachungsbereich 12 ist, dessen Referenzbrandkenngröße K_{R} von der Brandmeldersensoreinheit 28 des Brandmelders 14 erfasst wurde, der das Brandmeldersignal S_{B} an die Zentraleinheit 22 übertragen hat. Ist das Instruktionssignal S_{I} an das Fahrzeug 2 übertragen, so navigiert das Fahrzeug 2 zu dem entsprechenden Zielort 16. Dies ist schematisch und beispielhaft in der Fig. 4 gezeigt.

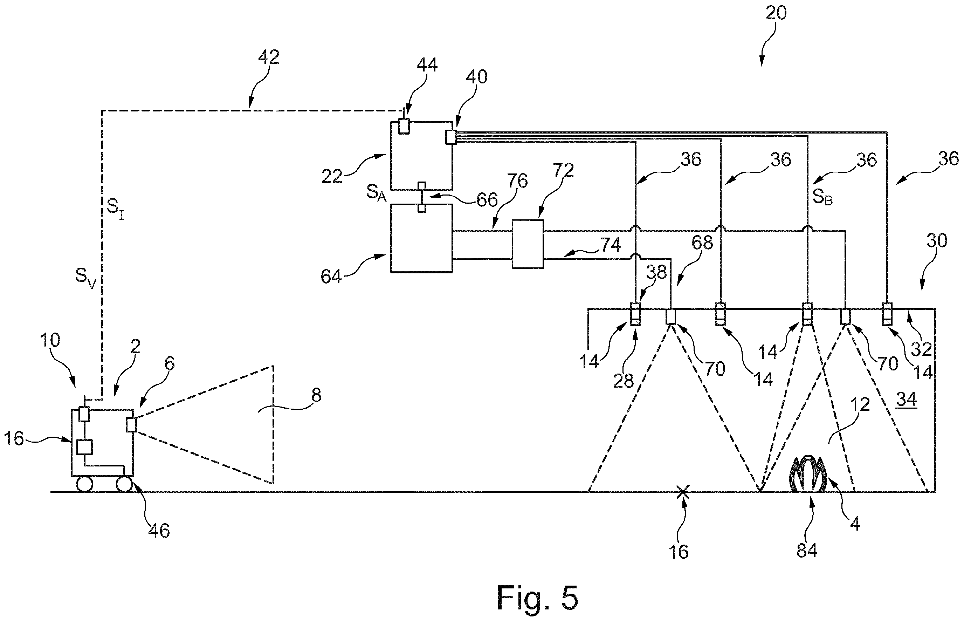

Wird daraufhin ein verifizierter Referenzbrandzustand Z_{VR} bestimmt und basierend hierauf ein Alarmsignal S_{A} bestimmt, so kann das Alarmsignal S_{A} dazu dienen, um eine Folgeaktion, wie beispielsweise eine Brandlöschaktion, einzuleiten. Für das Löschen eines Brands 4 kann das System 20 eine Löschsteuerzentrale 64 aufweisen, wie es beispielsweise in der Fig. 5 schematisch gezeigt ist. Dabei ist es vorgesehen, dass das Alarmsignal S_{A} von der Zentraleinheit 22 an die Löschsteuerzentrale 64 übertragen wird. Hierzu kann eine Signalverbindung 66 zwischen der Zentraleinheit 22 und der Löschsteuerzentrale 64 ausgebildet sein, um das Alarmsignal S_{A} von der Zentraleinheit 22 an die Löschsteuerzentrale 64 zu übertragen. Alternativ kann es vorgesehen sein, dass die Zentraleinheit 22 und die Löschsteuerzentrale 64 zumindest teilweise als eine gemeinsame funktionale Einheit ausgebildet sind. Diese funktionale Einheit kann auch als Brandmelder- und Löschsteuerzentrale bezeichnet sein.

Die Löschsteuerzentrale 64 ist vorzugsweise nach Art einer Vorrichtung ausgebildet. Außerdem ist die Löschsteuerzentrale 64 derart ausgebildet, eine Löschanlage 68, und zwar basierend auf dem übertragenen Alarmsignal S_{A}, zu steuern. Die Löschanlage 68 kann dabei von dem System 20 umfasst sein. Die Löschanlage 68 kann mindestens eine, vorzugsweise mehrere, Löschdüsen 70 zum Ausbringen von Löschmittel aufweisen. Anstatt der Löschdüse 70 bzw. der Löschdüsen 70 können auch andere Mittel vorgesehen sein, die zum Ausbringen von Löschmittel geeignet sind. Wenn im Weiteren von einer Löschdüse 70 gesprochen wird, soll damit deshalb auch ein anderes Mittel zum Ausbringen von Löschmittel gemeint sein können. Die Löschmittelanlage 68 kann eine Löschmittelquelle 72 aufweisen. Die Löschmittelquelle 72 kann beispielsweise einen Löschmitteltank, in dem Löschmittel bevorratet ist, und eine Pumpe aufweisen, mittels der Löschmittel aus dem Löschmitteltank förderbar ist. Die Löschmittelquelle 72 kann deshalb nach Art einer Vorrichtung und/oder Einheit ausgebildet sein. Jede Löschdüse 70 ist mittels einer Rohrleitung 74 zumindest indirekt mit der Löschmittelquelle 72, bzw. der zugehörigen Pumpe, gekoppelt, so dass Löschmittel von der Löschmittelquelle 72 zu der jeweiligen Löschdüse 70 förderbar ist. Die Löschmittelquelle 72 ist mittels einer Signalsteuerleitung 76 mit der Löschsteuerzentrale 64 verbunden, so dass die Löschmittelquelle 72, insbesondere die zugehörige Pumpe, von der Löschsteuerzentrale 64 steuerbar ist. Wie aus der Fig. 5 beispielhaft zu erkennen ist, können mehrere Löschdüsen 70 an der Decke 32 befestigt sein. Die Löschdüsen 70 sind dabei bevorzugt derart voneinander beabstandet, dass ein Brand 4 in jedem Bereich oder einem vorbestimmten Bereich des Raums 34 löschbar ist. Dabei kann es vorgesehen sein, dass das Alarmsignal S_{A} (auch) einen Ort eines zu löschenden Brands 4 repräsentiert und wobei die Löschsteuerzentrale 64 ausgebildet ist, die Löschanlage 68 basierend auf dem übertragenen Alarmsignal S_{A} derart zu steuern, um einen Brand 4 in dem Brandmelderüberwachungsbereich 12 zu löschen, dessen Referenzbrandkenngröße K_{R} von der Brandmeldersensoreinheit 28 des Brandmelders 14 erfasst wurde, der das Brandmeldersignal S_{B} an die Zentraleinheit 22 übertragen hat. Somit ist die Löschsteuerzentrale 64 vorzugsweise derart zum Steuern der Löschanlage 68, und zwar basierend auf dem übertragenen Alarmsignal S_{A}, ausgebildet, um einen zu dem verifizierten Brandzustand Z_{VR} korrespondierenden Brand 4 zu löschen.

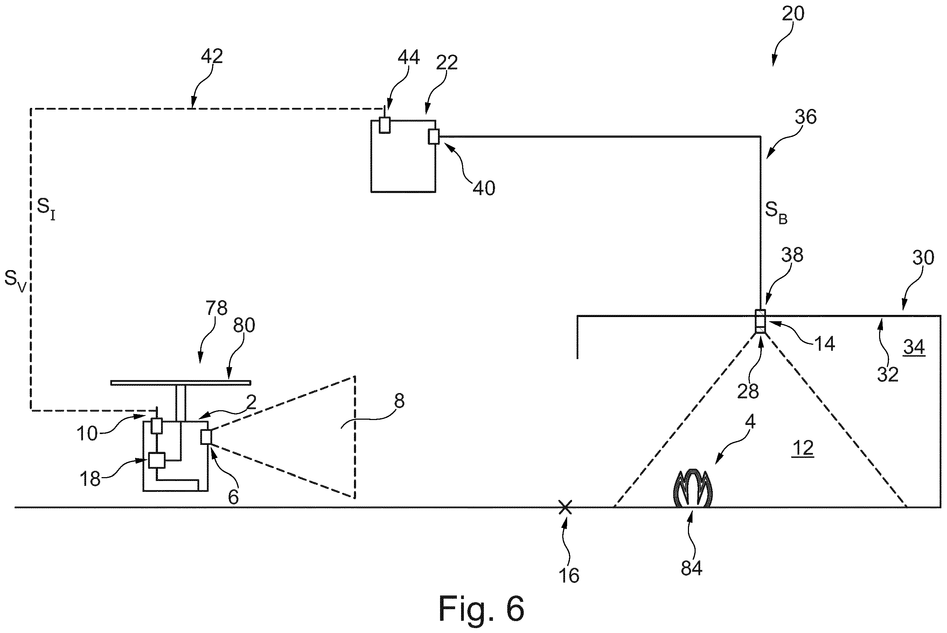

Im Zusammenhang mit den Fig. 1 bis 5 wurde das Fahrzeug 2 als ein Landfahrzeug schematisch dargestellt. Grundsätzlich kann das Fahrzeug 2 jedoch als eine beliebige Art von Fahrzeug 2 ausgebildet sein. In der Fig. 6 ist eine weitere vorteilhafte Ausgestaltung des Fahrzeugs 2 dargestellt. Danach kann das Fahrzeug 2 als ein Luftfahrzeug, insbesondere eine Drohne, ausgebildet sein. Vorzugsweise weist das Luftfahrzeug mindestens einen Rotor 78 auf. Der Rotor 78 kann mit mehrere Drehflügel 80 gekoppelt sein, um den entsprechenden Auftrieb und/oder Vortrieb zu gewährleisten. Besonders bevorzugt ist das Luftfahrzeug als ein Hubschrauber und/oder als ein Multicopter, beispielsweise ein Quadrocopter und/oder ein Octocopter ausgebildet. Sofern das Fahrzeug 2 als ein Luftfahrzeug ausgebildet ist, bietet dies den Vorteil, dass auch schwer zugängliche Bereiche angefahren bzw. angeflogen werden können, um mittels der Fahrzeugsensoreinheit 6 eine Brandkenngröße Kp bzw. eine Verifikationsbrandkenngröße K_{V} zu erfassen. Im Übrigen wird auf die vorherigen Erläuterungen, bevorzugten Merkmale, Effekte und/oder Vorteil zu dem Fahrzeug 2 in analoger Weise Bezug genommen.

Darüber hinaus hat es sich als vorteilhaft erwiesen, wenn ein Messprinzip der Brandmeldersensoreinheit 28 des Brandmelders 14 und ein Messprinzip der Fahrzeugsensoreinheit 6 des Fahrzeugs 2 unterschiedlich sind. So kann der Brandmelder 14 beispielsweise als ein Brandgasmelder oder als ein Rauchmelder ausgebildet sein. In diesem Fall ist die Brandmeldersensoreinheit 28 dazu ausgebildet, Brandgas und/oder Rauch zu messen und basierend hierauf eine Referenzbrandkenngröße K_{R} zu erfassen. So kann beispielsweise mittels der Brandmeldersensoreinheit 28, wenn diese vorzugsweise als Brandgasmelder oder Rauchmelder ausgebildet ist, eine Konzentration oder Konzentrationsänderung eines vorbestimmten Gases bzw. von Rauchpartikeln gemessen werden, um basierend hierauf die Referenzbrandkenngröße K_{R} zu erfassen. Das Messprinzip der Brandmeldersensoreinheit 28 beruht deshalb auf der Messung von Rauchpartikeln bzw. Brandgas. Für die Fahrzeugsensoreinheit 6 des Fahrzeugs 2 ist es bevorzugt vorgesehen, dass die Fahrzeugsensoreinheit 6 eine Kamera aufweist. Die Kamera kann beispielsweise als eine optische Kamera zur Aufnahme eines optischen Bildes 82, wie es beispielhaft in Fig. 7 schematisch dargestellt ist, ausgebildet sein. Ferner ist es bevorzugt vorgesehen, dass die die Fahrzeugsensoreinheit 6 zusätzlich oder anstatt der Kamera einen Rauchmelder, einen Temperaturmelder, einen Flammenmelder und/oder einen Brandgasmelder aufweist.

Ist das Fahrzeug 2 an dem Zielort 16, so kann mittels der Kamera ein Bild von dem Brandmelderüberwachungsbereich 12 aufgenommen werden. Ist dies erfolgt und besteht in dem Brandmelderüberwachungsbereich 12 ein Brand 4, so wird der Brand 4 auch von dem Bild 82 wiedergegeben. Basierend auf dem Bild 82 kann die Fahrzeugsensoreinheit 6 des Fahrzeugs 2 zur Erfassung einer Brandkenngröße K_{F} ausgebildet sein. Dazu kann die Fahrzeugsensoreinheit 6 zur Auswertung des Bilds 82 ausgebildet sein, so dass basierend auf der Auswertung die entsprechende Brandkenngröße Kp ermittelbar ist. Anstatt der Aufnahme eines optischen Bildes 82 kann die Kamera auch zur Aufnahme eines Wärmebilds ausgebildet sein. In diesem Fall kann die Kamera als eine Wärmebildkamera ausgestaltet sein. In diesem Zusammenhang wird in analoger Weise zu der vorherigen Erläuterung in analoger Weise Bezug genommen. Das Messprinzip der Fahrzeugsensoreinheit 6 beruht deshalb bevorzugt auf einer optischen Erfassung eines Bildes und einer zugehörigen Auswertung, um die Brandkenngröße K_{F} mittels der Fahrzeugsensoreinheit 6 zu erfassen. Anhand der zuvor beispielhaft erläuterten Ausgestaltungsvarianten für die Brandmeldersensoreinheit 14 und die Fahrzeugsensoreinheit 6 ist ersichtlich, dass die Brandmeldersensoreinheit 14 und die Fahrzeugsensoreinheit 6 auf unterschiedlichen Messprinzipien beruhen können. Somit kann verhindert werden, dass eine messprinzipbedingte Fehlmessung des Brandmelders 14 zu einer unnötigen und/oder gegebenenfalls fehlerhaften Auslösung einer Folgeaktion, insbesondere einer Löschaktion, führt. Denn durch das von der Brandmeldersensoreinheit 14 abweichende Messprinzip der Fahrzeugsensoreinheit 6 kann gewährleistet werden, dass eine Brandkenngröße K_{F} bzw. Verifikationsbrandkenngröße K_{V} des Brandmelderüberwachungsbereichs 12 erfassbar ist, die gegebenenfalls nicht zu der messprinzipbedingten Fehlmessung führt. Dies erlaubt eine sichere Überprüfung bzw. Verifizierung eines Referenzbrandzustands Z_{R} des Brandmelderüberwachungsbereichs 12.

Die Ausgestaltung der Fahrzeugsensoreinheit 6 mit einer Kamera bietet einen weiteren Vorteil. Denn das Fahrzeug 2 kann mittels der Fahrzeugsensoreinheit 6 zur Bestimmung eines Brandorts 84 ausgebildet sein, wenn das Fahrzeug 2 an dem Zielort 16 ist. Der Brandort 84 ist dabei der Ort des Brands 4, der Brandvorstufe und/oder des Schwelbrands. Ist das Fahrzeug 2 an dem Zielort 16, kann mittels der Kamera der Fahrzeugsensoreinheit 6 ein Bild 82 von dem Brandmelderüberwachungsbereich 12 aufgenommen werden. Durch Auswertung des Bilds 82, vorzugsweise mittels einer Auswerteeinheit des Fahrzeugs 2, kann sodann der Brandort 84 bestimmt werden. Denn der Zielort 16 ist dem Fahrzeug 2 bekannt. Daraus lässt sich auf die Position der Fahrzeugsensoreinheit 6 bzw. der Kamera schließen. Darüber hinaus kann mittels Triangulation, und zwar unter Berücksichtigung des Zielorts 16 und des Bildes 82, auf den Brandort 84 geschlossen werden, so dass dieser von dem Fahrzeug 2 bestimmbar ist. Das Bild 82 kann dabei mittels einer einzelnen Aufnahme mittels der Kamera der Fahrzeugsensoreinheit 6 erfasst sein. Es kann jedoch auch vorgesehen sein, dass mittels der Kamera der Fahrzeugsensoreinheit 6 eine Mehrzahl von Bildern aufgenommen werden, die jeweils zu unterschiedlichen Verdreh- und/oder Verschwenkpositionen der Kamera, der Fahrzeugsensoreinheit 6 und/oder des Fahrzeugs 2 korrespondieren, wobei das Fahrzeug 2 zumindest im Wesentlichen an dem Zielort 16 ist. So kann die Mehrzahl von Bildern in der Weise aufgenommen werden, dass während eines Verdrehens des Fahrzeugs 2 am Zielort 16 und/oder während eines Verdrehens der Kamera bzw. der Fahrzeugsensoreinheit 6 die entsprechenden Bilder aufgenommen werden. Aus der Mehrzahl der Bilder kann sodann das gemeinsame Bild 82 gebildet werden. Dieses Bild 82 kann sodann als Basis zur Bestimmung des Brandorts 84 dienen. Wie aus der Fig. 7 schematisch zu erkennen ist, ist der Brand 4, und somit der Brandherd, mittig im unteren Drittel des Bildes 82 dargestellt. Der Brand 4 befindet sich deshalb schräg unterhalb der Fahrzeugsensoreinheit 6, wie es beispielhaft in Fig. 2 dargestellt ist.

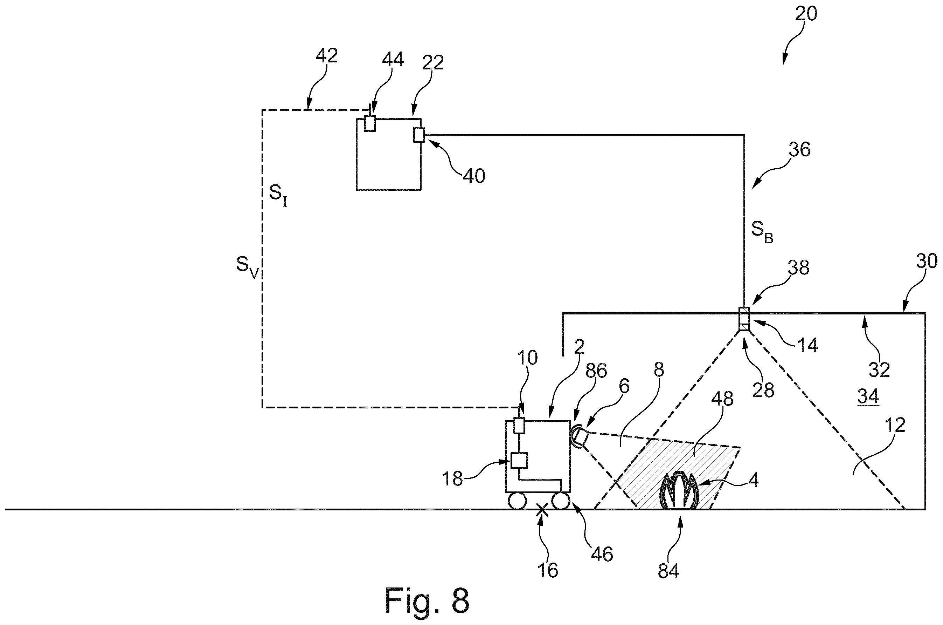

Um eine möglichst aussagefähige Brandkenngröße Kp mittels der Fahrzeugsensoreinheit 6 zu erfassen, ist es bevorzugt vorgesehen, dass das Fahrzeug 2 zur Ausrichtung der Fahrzeugsensoreinheit 6 in Richtung des Brandorts 84 ausgebildet ist, und zwar insbesondere dann, wenn das Fahrzeug 2 an dem Zielort 16 ist. Eine entsprechende Ausrichtung der Fahrzeugsensoreinheit 6 in Richtung des Brandorts 84 ist schematisch in Fig. 4 dargestellt. Um das Ausrichten der Fahrzeugsensoreinheit 6 zu ermöglichen, kann das Fahrzeug 2 eine dreh- und/oder schwenkbare Ausrichtungsvorrichtung 86 aufweisen, an der zumindest ein Teil der Fahrzeugsensoreinheit 6, insbesondere die zugehörige Kamera, befestigt ist, wobei das Fahrzeug 2 zur Steuerung der Ausrichtungsvorrichtung 86 derart ausgebildet ist, um die Fahrzeugsensoreinheit 6, bzw. die zugehörige Kamera, auszurichten, und zwar vorzugsweise in Richtung des Brandorts 86. Eine beispielhafte Ausgestaltung des Fahrzeugs 2 mit einer Ausrichtungsvorrichtung 86 ist in der Fig. 8 schematisch dargestellt.

Die Ausrichtungsvorrichtung 86 kann eine von einem Aktuator steuerbare Gelenkeinheit aufweisen, so dass durch Steuerung des Aktuators ein Verdrehen und/oder Verschwenken der Fahrzeugsensoreinheit 6, bzw. der zugehörigen Kamera, ermöglicht wird. Außerdem kann das Instruktionssignal S_{I} mindestens einen Parameter für die Steuerung der Ausrichtungsvorrichtung 86 aufweisen, so dass die Fahrzeugsensoreinheit 6, bzw. die zugehörige Kamera, durch Ansteuerung der Ausrichtungsvorrichtung 86 basierend auf dem genannten Parameter erfolgen kann, um den Fahrzeugüberwachungsbereich 8 zumindest in hinreichende Überlappung mit dem Brandmelderüberwachungsbereich 12 zu bringen, wenn das Fahrzeug 2 ein Zielort ist.

Alternativ oder ergänzend kann es vorgesehen sein, dass die Ausrichtung der Fahrzeugsensoreinheit 6 in Richtung des Brandorts 84 durch gesteuerte Navigation des Fahrzeugs 2 selbst erfolgt. So kann das Fahrzeug 2 basierend auf dem Instruktionssignal S_{I} an dem Zielort 16 beispielsweise eine Drehung um die Vertikalachse ausführen, so dass die Fahrzeugsensoreinheit 6 in Richtung des Fahrzeugüberwachungsbereichs 12 und/oder des Brandorts 84 ausgerichtet ist. Damit kann gewährleistet werden, dass es zu der gewünschten, zumindest hinreichenden Überlappung zwischen dem Fahrzeugüberwachungsbereich 8 und dem Brandmelderüberwachungsbereich 12 kommt.

Weiterhin hat es sich als vorteilhaft erwiesen, wenn das Fahrzeug 2 dazu konfiguriert ist, die Verifikationsbrandkenngröße K_{V} des Brandmelderüberwachungsbereichs 12 erst dann zu erfassen, wenn die Fahrzeugsensoreinheit 6 in Richtung des Brandorts 84 ausgerichtet ist. Somit kann das Fahrzeug 2 basierend auf dem Instruktionssignal S_{I} zunächst zu dem Zielort 16 fahren und daraufhin die Ausrichtung der Fahrzeugsensoreinheit 6 in Richtung des Brandorts 84 vornehmen, um sodann an dem Zielort 16 die Brandkenngröße Kp mittels der Fahrzeugsensoreinheit 6 als die Verifikationsbrandkenngröße K_{V} des Brandmelderüberwachungsbereichs 12 zu erfassen. Dies gewährleistet eine sichere Bestimmung der Verifikationsbrandkenngröße K_{V} für den Brandmelderüberwachungsbereich 12, so dass daraufhin zwei unabhängige Brandkenngrößen, nämlich die Referenzbrandkenngröße K_{R} und die Verifikationsbrandkenngröße K_{V}, für den Brandmelderüberwachungsbereich 12 zur Verfügung stehen.

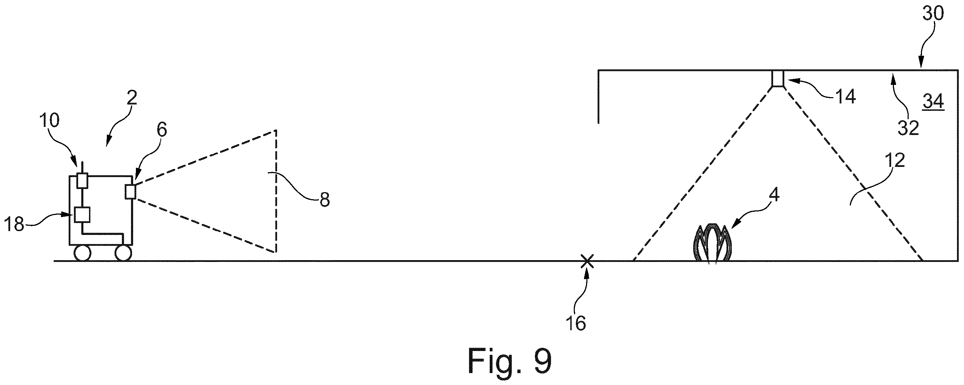

Gemäß einem weiteren Aspekt der Erfindung ist ein unbemanntes Fahrzeug 2 vorgesehen. Ein entsprechend unbemanntes Fahrzeug 2 ist beispielsweise in der Fig. 9 schematisch dargestellt. Das unbemannte Fahrzeug 2 wird im Weiteren auch als Fahrzeug 2 bezeichnet. Das Fahrzeug 2 weist eine Fahrzeugsensoreinheit 6 auf, die zur Erfassung einer Brandkenngröße K_{F} eines Fahrzeugüberwachungsbereichs 8 ausgebildet ist. Außerdem weist das Fahrzeug 2 eine Signalempfangseinheit 10 auf, die zum Empfang eines Instruktionssignals S_{I}, das zumindest einen Zielort 16 repräsentiert, bei dem der Fahrzeugüberwachungsbereich 8, wenn das Fahrzeug 2 an dem Zielort 16 ist, in hinreichender Überlappung mit einem Brandmelderüberwachungsbereich 12 eines Brandmelders 14 ist. Außerdem weist das Fahrzeug 2 eine Navigationssteuereinheit 18 auf. Die Navigationssteuereinheit 18 ist dazu ausgebildet und/oder konfiguriert, das Fahrzeug 2 basierend auf dem empfangenen Instruktionssignal S_{I} selbstständig zu dem Zielort 16 zu navigieren, so dass sich der Fahrzeugüberwachungsbereich 8 und der Brandmelderüberwachungsbereich 12 hinreichend überlappen. Darüber hinaus ist das Fahrzeug 2 dazu konfiguriert, an dem Zielort 16 die Brandkenngröße K_{F} mittels der Fahrzeugsensoreinheit 6 als eine Verifikationsbrandkenngröße K_{V} des Brandmelderüberwachungsbereichs 12 zu erfassen. Außerdem ist das Fahrzeug 2 zur Bestimmung eines Verifikationsbrandzustands Z_{V} durch Auswertung der Verifikationsbrandkenngröße K_{V} ausgebildet. Insbesondere soweit es sinnvoll ist, wird auf die vorangegangenen Erläuterungen, bevorzugten Merkmale, Effekte und/oder Vorteile, wie sie zuvor für das Fahrzeug 2 erörtert wurden sind, in analoger Weise Bezug genommen.

Gemäß einer bevorzugten Ausgestaltung ist das Fahrzeug 2 zur Übertragung eines Verifikationssignals S_{V}, das den Verifikationsbrandzustand Z_{V} repräsentiert, an eine Zentraleinheit 22 (nicht dargestellt) ausgebildet.

Gemäß einer bevorzugt alternativen Ausgestaltung des Fahrzeugs 2 ist es vorgesehen, dass das Instruktionssignal S_{I} außerdem eine Referenzbrandkenngröße K_{R} des Brandmelderüberwachungsbereichs 12 repräsentiert, das Fahrzeug 2 dazu konfiguriert ist, den Referenzbrandzustand K_{R} als verifizierten Referenzbrandzustand Z_{VR} zu bestimmen, für den Fall, dass der Referenzbrandzustand K_{R} und der Verifikationsbrandzustand K_{V} zumindest hinreichend übereinstimmen, und das Fahrzeug 2 zur Übertragung eines Verifikationssignals S_{V}, das den verifizierten Referenzbrandzustand Z_{VR} repräsentiert, an die Zentraleinheit 22 ausgebildet ist.

Für das unbemannte Fahrzeug 2 gemäß dem zuvor erläuterten zweiten Aspekt der Erfindung wird in analoger Weise auf die vorangegangenen Erläuterungen, insbesondere im Hinblick auf das Fahrzeug 2, Bezug genommen. Das Fahrzeug 2 kann somit entsprechende Ausgestaltungen aufweisen und/oder entsprechende Vorteile und/oder Effekte bieten.

Somit ist vorzugsweise das Fahrzeug als ein Luftfahrzeug, insbesondere als eine Drohne, ausgebildet.

Vorzugsweise ist die Signalempfangseinheit 10 des Fahrzeugs 2 zum Empfang eines Signals, insbesondere des Instruktionssignals S_{I}, von der Zentraleinheit 22 ausgebildet. Hierzu wird auf entsprechende Erläuterungen, bevorzugten Merkmale, Vorteile und/oder Effekte in analoger Weise Bezug genommen, wie sie für entsprechende Merkmale für das Fahrzeug 2 des Systems erörtert wurden sind.

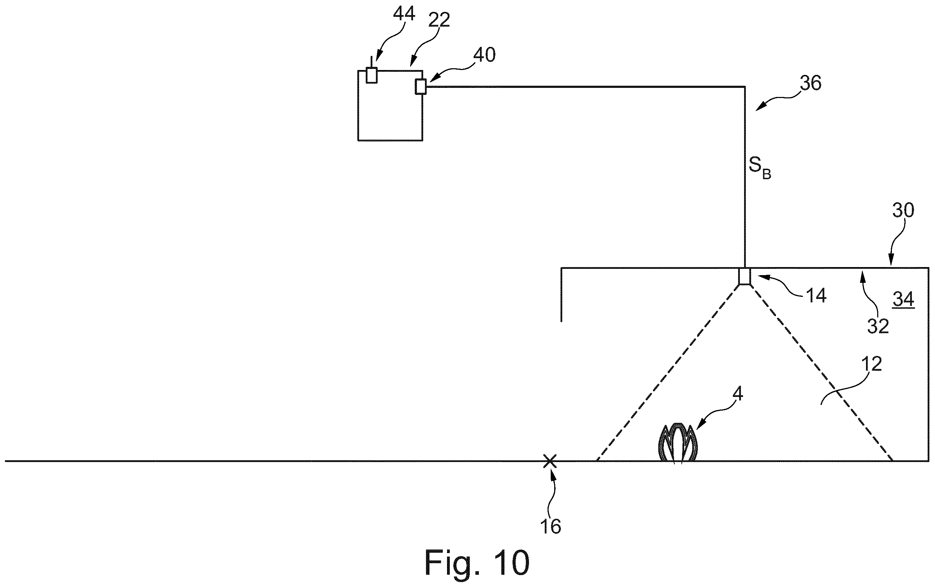

Gemäß einem dritten Aspekt der Erfindung ist eine Zentraleinheit 22 vorgesehen. Die Zentraleinheit 22 ist schematisch in Fig. 10 dargestellt. Die Zentraleinheit 22 ist zum Empfang eines Brandmeldersignals S_{B} eines Brandmelders 14 ausgebildet. Dabei ist die Zentraleinheit 22 dazu konfiguriert, in dem Fall, dass ein von dem Brandmelder 14 empfangenes Brandmeldersignal S_{B} einen Referenzbrandzustand Z_{R} repräsentiert, der einer Verifikation bedarf, ein Instruktionssignal S_{I} an ein Fahrzeug 2 (nicht dargestellt) zu übertragen. Dabei repräsentiert das Instruktionssignal S_{I} zumindest einen Zielort 16 für das Fahrzeug 2. Ein Fahrzeugüberwachungsbereich 8 einer Fahrzeugsensoreinheit 6 des Fahrzeugs 2 ist dabei in hinreichender Überlappung mit einem Brandmelderüberwachungsbereich 12 des Brandmelders 14, wenn das Fahrzeug 2 an dem Zielort 16 ist, so dass das Fahrzeug 2 mittels der Fahrzeugsensoreinheit 6 eine Verifikationsbrandkenngröße K_{V} des Brandmelderüberwachungsbereichs 12 erfassen kann. Außerdem ist die Zentraleinheit 22 dazu ausgebildet, ein Verifikationssignal Sv, das einen der Verifikationsbrandkenngröße K_{V} entsprechenden Verifikationsbrandzustand Z_{V} repräsentiert, von dem Fahrzeug 2 zu empfangen. Darüber hinaus ist die Zentraleinheit 22 dazu konfiguriert, den Referenzbrandzustand Z_{R} als verifizierten Referenzbrandzustand Z_{VR} zu bestimmen, für den Fall, dass der Referenzbrandzustand Z_{R} und der Verifikationsbrandzustand Z_{V} zumindest hinreichend übereinstimmen. Hinsichtlich der Zentraleinheit 22 wird auf die vorteilhaften Erläuterungen, bevorzugten Merkmale, Effekte und/oder Vorteile, wie sie für die Zentraleinheit 22 im Zusammenhang mit den Fig. 1 bis 8 beschrieben worden sind, in analoger Weise Bezug genommen.

Vorzugsweise ist die Zentraleinheit 22 eine Brandmelder- und/oder Löschsteuerzentrale oder ist zumindest teilweise davon, insbesondere von der Brandmelderzentrale, mitgebildet.

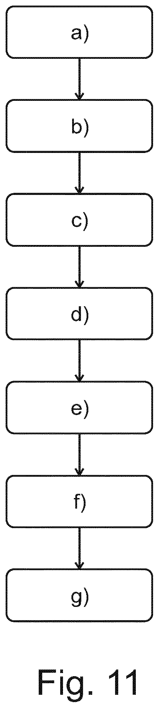

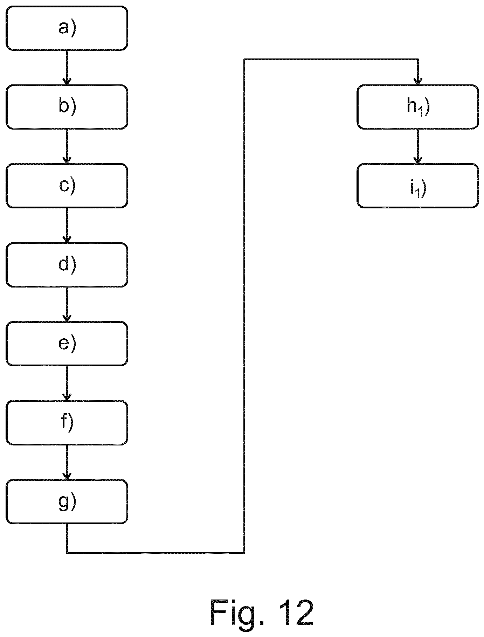

Gemäß einem vierten Aspekt der Erfindung ist ein Verfahren zur verifizierten Bestimmung eines Brandzustands vorgesehen, wobei die Schritte des Verfahrens schematisch in Fig. 11 und 12 dargestellt sind.

Das Verfahren kann in zwei Varianten, nämlich eine erste Variante und eine zweite Variante, unterteilt werden. Die erste Variante unterscheidet sich von zweiten Variante durch die Verfahrensschritte h1) und j1) gegenüber den Verfahrensschritten h2) und j2) der zweiten Variante. Die übrigen Verfahrensschritte a) bis g) sind bei beiden Varianten gleich und sollen zunächst erläutert werden.

Gemäß Schritt a) ist ein Erfassen einer Referenzbrandkenngröße K_{R} eines Brandmelderüberwachungsbereichs 12 mittels einer Brandmeldersensoreinheit 28 eines Brandmelders 14 vorgesehen.

Gemäß Schritt b) ist ein Bestimmen eines Referenzbrandzustands Z_{R} durch Auswertung der Referenzbrandkenngröße K_{R} mittels des Brandmelders 14 vorgesehen.

Gemäß Schritt c) ist ein Übertragen eines Brandmeldersignals S_{B}, das den Referenzbrandzustand Z_{R} repräsentiert, von dem Brandmelder 14 an eine Zentraleinheit 22 vorgesehen.

Gemäß Schritt d) ist ein Übertragen eines Instruktionssignals S_{I} von der Zentraleinheit 22 an ein Fahrzeug 2 vorgesehen. In dem Fall, dass das von dem Brandmelder 14 übertragene Brandmeldersignal S_{B} einen Referenzbrandzustand Z_{R} repräsentiert, der einer Verifikation bedarf, wobei das Fahrzeug 2 eine Fahrzeugsensoreinheit 6 aufweist, die zur Erfassung einer Brandkenngröße K_{F} eines Fahrzeugüberwachungsbereichs 8 ausgebildet ist und wobei das Instruktionssignal S_{I} zumindest einen Zielort 16 für das Fahrzeug 2 repräsentiert, wobei der Fahrzeugüberwachungsbereich 8 in hinreichender Überlappung mit dem Brandmelderüberwachungsbereich 12 ist, wenn das Fahrzeug 2 an dem Zielort ist.

Gemäß Schritt e) ist ein Navigieren des Fahrzeugs 2 vorgesehen, und zwar vorzugsweise selbstständig, zu dem Zielort 16 basierend auf dem übertragenen Instruktionssignal S_{I} mittels einer Navigationssteuereinheit 18 des Fahrzeugs 2, so dass sich der Fahrzeugüberwachungsbereich 8 und der Brandmelderüberwachungsbereich 12 hinreichend überlappen.

Gemäß Schritt f) ist ein Erfassen der Brandkenngröße K_{F} als eine Verifikationsbrandkenngröße K_{V} des Brandmelderüberwachungsbereichs 12 mittels der Fahrzeugsensoreinheit 6 vorgesehen.

Gemäß Schritt g) ist ein Bestimmen eines Verifikationsbrandzustands Z_{V} durch Auswerten der Verifikationsbrandkenngröße K_{V} mittels des Fahrzeugs 2 vorgesehen.

Insbesondere soweit es sinnvoll ist, wird für die Schritte a) bis g) auf die vorangegangenen Erläuterungen, bevorzugten Merkmale, Effekte und/oder Vorteile, wie sie zuvor für das System 22 und/oder Fahrzeug 2 erörtert wurden sind, in analoger Weise Bezug genommen.

Wie zuvor erläutert, zeichnet sich eine erste Variante des Verfahrens durch die Schritte h1) und i1) aus, die im Zusammenhang mit den weiteren Schritten a) bis g) in der Fig. 12 schematisch dargestellt sind.

Gemäß Schritt h1) ist ein Übertragen eines Verifikationssignals Sv, das den Verifikationsbrandzustand Z_{V} repräsentiert, von dem Fahrzeug an die Zentraleinheit 22 vorgesehen. Gemäß dem Schritt i1) ist ein Bestimmen eines Referenzbrandzustands Z_{R} als verifizierter Referenzbrandzustand Z_{VR} mittels der Zentraleinheit 22 vorgesehen, für den Fall, dass der Referenzbrandzustand Z_{R} und der Verifikationsbrandzustand Z_{V} zumindest hinreichend übereinstimmen. Insbesondere soweit es sinnvoll ist, wird für die Schritte h1) bis i1) auf die vorangegangenen Erläuterungen, bevorzugten Merkmale, Effekte und/oder Vorteile, wie sie zuvor für das System 22 und/oder Fahrzeug 2 erörtert wurden sind, in analoger Weise Bezug genommen.

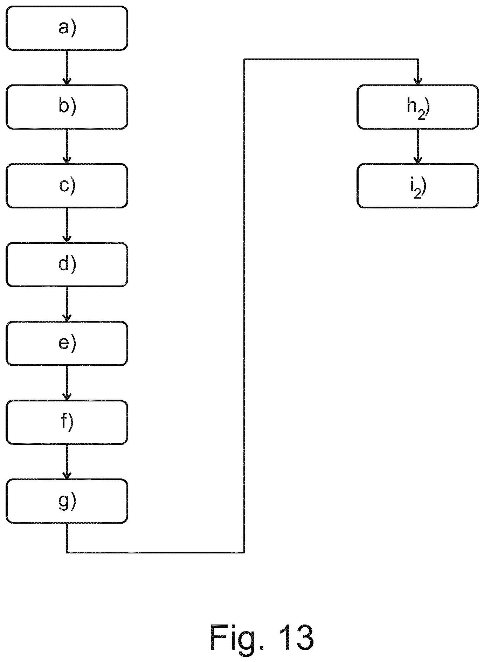

Gemäß der zweiten Variante des Verfahrens werden anstatt der Schritte h1) und i1) die Schritte h2) und i2) ausgeführt. Eine Zusammenschau der Verfahrensschritte a) bis g) und h2) und i2) ist in Fig. 13 schematisch dargestellt.

Gemäß Schritt h2) ist ein Bestimmen eines Referenzbrandzustands Z_{R} als verifizierter Referenzbrandzustand Z_{VR} mittels des Fahrzeugs 2 vorgesehen, für den Fall, dass der Referenzbrandzustand Z_{R} und der Verifikationsbrandzustand Z_{V} zumindest hinreichend übereinstimmen, wobei das Instruktionssignal S_{I} außerdem den Referenzbrandzustand Z_{R} repräsentiert. Gemäß Schritt i2) ist ein Übertragen eines Verifikationssignals S_{V}, das den verifizierten Referenzbrandzustand Z_{VR} repräsentiert, an die Zentraleinheit 22 vorgesehen. Insbesondere soweit es sinnvoll ist, wird für die Schritte h2) bis i2) auf die vorangegangenen Erläuterungen, bevorzugten Merkmale, Effekte und/oder Vorteile, wie sie zuvor für das System 22 und/oder Fahrzeug 2 erörtert wurden sind, in analoger Weise Bezug genommen.

**Bezugszeichenliste:**

| **Zeichen** | **Bedeutung** |
|---|---|
| K_{F} | Brandkenngröße |
| K_{R} | Referenzbrandkenngröße |
| K_{V} | Verifikationsbrandkenngröße |
| S_{A} | Alarmsignal |
| S_{B} | Brandmeldersignal |
| S_{F} | Fehlalarmsignal |
| S_{I} | Instruktionssignal |
| S_{V} | Verifikationssignal |
| t | Zeit |
| W_{S1} | erste Schwellwert |
| W_{S2} | zweiter Schwellwert |
| W_{S3} | dritter Schwellwert |
| Z_{R} | Referenzbrandzustand |
| Z_{R1} | Referenzbrandzustand korr. zu Schwelbrand |
| Z_{R2} | Referenzbrandzustand korr. zu Brandvorstufe |
| Z_{R3} | Referenzbrandzustand korr. zu Brand |
| Z_{V} | Verifikationsbrandzustand |
| Z_{VR} | Verifizierter Referenzbrandzustand |
| 2 | Fahrzeug |
| 4 | Brand |
| 6 | Fahrzeugsensoreinheit |
| 8 | Fahrzeugüberwachungsbereich |
| 10 | Signalempfangseinheit |
| 12 | Brandmelderüberwachungsbereich |
| 14 | Brandmelder |
| 16 | Zielort |
| 18 | Navigationssteuereinheit |
| 20 | System |
| 22 | Zentraleinheit |
| 24 | Signalkommunikationseinheit (des Fahrzeugs) |
| 26 | Signalkommunikationseinheit (der Brandmelderzentrale) |
| 28 | Brandmeldersensoreinheit |
| 30 | Gebäude |
| 32 | Decke |
| 34 | Raum |
| 36 | Signalleitung |
| 38 | Signalsendeeinheit (des Brandmelders) |
| 40 | Signalempfangseinheit (der Zentraleinheit) |
| 42 | Signalverbindung |
| 44 | Signalsendeeinheit (der Zentraleinheit) |
| 46 | Rad |
| 48 | Schnittmenge |
| 50 | Ausgabeeinheit |
| 52 | Leitstelle |
| 54 | Signalverbindung |
| 56 | Signalsendeeinheit (der Zentraleinheit) |
| 58 | Signalempfangseinheit (der Leitstelle) |
| 60 | Ausgabeeinheit |
| 62 | Ausgabeeinheit |
| 64 | Löschsteuerzentrale |
| 66 | Signalverbindung |
| 68 | Löschanlage |
| 70 | Löschdüse |
| 72 | Löschmittelquelle |
| 74 | Rohrleitung |
| 76 | Signalsteuerleitung |
| 78 | Rotor |
| 80 | Drehflügel |
| 82 | Bild |
| 84 | Brandort |
| 86 | Ausrichtungsvorrichtung |

## Patentansprüche

1. System (20) zur Bestimmung eines verifizierten Brandzustands, aufweisend:
- eine Zentraleinheit (22), einen stationären Brandmelder (14) und ein unbemanntes Fahrzeug (2),
- wobei der Brandmelder (14) eine Brandmeldersensoreinheit (28) aufweist, die zur Erfassung einer Referenzbrandkenngröße K_{R} eines Brandmelderüberwachungsbereichs (12) ausgebildet ist,
- wobei der Brandmelder (14) zur Bestimmung eines Referenzbrandzustands Z_{R} durch Auswertung der Referenzbrandkenngröße K_{R} ausgebildet ist,
- wobei der Brandmelder (14) zur Übertragung eines Brandmeldersignals S_{B}, das den Referenzbrandzustand Z_{R} repräsentiert, an die Zentraleinheit (22) ausgebildet ist,
- wobei die Zentraleinheit (22) dazu konfiguriert ist, in dem Fall, dass das von dem Brandmelder (14) übertragene Brandmeldersignal S_{B} einen Referenzbrandzustand Z_{R} repräsentiert, der einer Verifizierung bedarf, ein Instruktionssignal S_{I} an das Fahrzeug (2) zu übertragen,
- wobei das Fahrzeug (2) eine Fahrzeugsensoreinheit (6) aufweist, die zur Erfassung einer Brandkenngröße K_{F} eines Fahrzeugüberwachungsbereichs (8) ausgebildet ist,
- wobei das Instruktionssignal S_{I} zumindest einen Zielort (16) für das Fahrzeug (2) repräsentiert,
- wobei der Fahrzeugüberwachungsbereich (8) in hinreichender Überlappung mit dem Brandmelderüberwachungsbereich (12) ist, wenn das Fahrzeug (2) an dem Zielort (16) ist,
- wobei das Fahrzeug (2) dazu ausgebildet ist, basierend auf dem übertragenen Instruktionssignal S_{I}, insbesondere selbstständig, zu dem Zielort (16) zu navigieren, so dass sich der Fahrzeugüberwachungsbereich (8) und der Brandmelderüberwachungsbereich (12) hinreichend überlappen,
- wobei das Fahrzeug (2) dazu konfiguriert ist, an dem Zielort (16) die Brandkenngröße K_{F} mittels der Fahrzeugsensoreinheit (6) als eine Verifikationsbrandkenngröße K_{V} des Brandmelderüberwachungsbereichs (12) zu erfassen,
- wobei das Fahrzeug (2) zur Bestimmung eines Verifikationsbrandzustands Z_{V} durch Auswertung der Verifikationsbrandkenngröße K_{V} ausgebildet ist,
und wobei entweder
∘ das Fahrzeug (2) zur Übertragung eines Verifikationssignals S_{V}, das den Verifikationsbrandzustand Z_{V} repräsentiert, an die Zentraleinheit (22) ausgebildet ist und die Zentraleinheit (22) dazu konfiguriert ist, den Referenzbrandzustand Z_{R} als verifizierten Referenzbrandzustand Z_{VR} zu bestimmen, für den Fall, dass der Referenzbrandzustand Z_{R} und der Verifikationsbrandzustand Z_{V} zumindest hinreichend übereinstimmen;
oder wobei
∘ das Instruktionssignal S_{I} außerdem den Referenzbrandzustand Z_{R} repräsentiert, das Fahrzeug (2) dazu konfiguriert ist, den Referenzbrandzustand Z_{R} als verifizierten Referenzbrandzustand Z_{VR} zu bestimmen, für den Fall, dass der Referenzbrandzustand Z_{R} und der Verifikationsbrandzustand Z_{V} zumindest hinreichend übereinstimmen, und das Fahrzeug (2) zur Übertragung des Verifikationssignals S_{V}, das den verifizierten Referenzbrandzustand Z_{VR} repräsentiert, an die Zentraleinheit (22) ausgebildet ist.

2. System (20) nach dem vorhergehenden Anspruch, **dadurch gekennzeichnet, dass** das Fahrzeug (2) und/oder die Zentraleinheit (22) dazu ausgebildet ist bzw. sind, ein Alarmsignal S_{A} basierend auf dem verifizierten Referenzbrandzustand Z_{VR} zu bestimmen.

3. System (20) nach einem der vorhergehenden Ansprüche, **dadurch gekennzeichnet, dass** das Fahrzeug (2) und/oder die Zentraleinheit (22) dazu ausgebildet ist bzw. sind, ein Fehlalarmsignal S_{F} zu bestimmen, das eine fehlerhafte Bestimmung eines Referenzbrandzustands Z_{R} und/oder einen nicht verifizierten Referenzbrandzustand repräsentiert, für den Fall, dass der Referenzbrandzustand Z_{R} nicht als verifizierten Referenzbrandzustand Z_{VR} bestimmt wurde.

4. System (20) nach einem der vorhergehenden Ansprüche, **dadurch gekennzeichnet, dass** das Fahrzeug (2) als ein Luftfahrzeug, insbesondere eine Drohne, oder als ein Landfahrzeug, insbesondere ein Roboterfahrzeug, ausgebildet ist.

5. System (20) nach einem der vorhergehenden Ansprüche, **dadurch gekennzeichnet, dass** die Fahrzeugsensoreinheit (6) eine Kamera aufweist.

6. System (20) nach einem der vorhergehenden Ansprüche, **dadurch gekennzeichnet, dass** das Fahrzeug (2) an dem Zielort (16) mittels der Fahrzeugsensoreinheit (6) zur Bestimmung eines Brandorts (84) ausgebildet ist.

7. System (20) nach dem vorhergehenden Anspruch, **dadurch gekennzeichnet, dass** das Fahrzeug (2) basierend auf einer am Zielort (16) erfassten Brandkenngröße K_{F} zur Bestimmung des Brandorts (84) konfiguriert ist.

8. System (20) nach dem vorhergehenden Anspruch, **dadurch gekennzeichnet, dass** das Fahrzeug (2) zur Ausrichtung der Fahrzeugsensoreinheit (6) in Richtung des Brandorts (4) ausgebildet ist.

9. System (20) nach dem vorhergehenden Anspruch, **dadurch gekennzeichnet, dass** das Fahrzeug (2) dazu konfiguriert ist, die Verifikationskenngröße dann zu erfassen, wenn die Fahrzeugsensoreinheit (6) in Richtung des Brandorts (84) ausgerichtet ist.

10. System (20) nach einem der vorhergehenden Ansprüche, **dadurch gekennzeichnet, dass** das System (20) mehrere der stationären Brandmelder (14) aufweist, wobei die Zentraleinheit (22) ausgebildet ist, basierend auf einem übertragenen Brandmeldersignal S_{B} eines der Brandmelder (14) einen Brandmelderort des Brandmelders (14), der das Brandmeldersignal S_{B} übertragen hat, zu bestimmen, und dass die Zentraleinheit (22) ausgebildet ist, den Zielort (16) basierend auf dem Brandmelderort zu bestimmen.

11. System (20) nach einem der vorhergehenden Ansprüche, **dadurch gekennzeichnet, dass** ein Messprinzip der Brandmeldersensoreinheit (28) und ein Messprinzip der Fahrzeugsensoreinheit (6) unterschiedlich sind.

12. System (20) nach einem der vorhergehenden Ansprüche 2 bis 11, **dadurch gekennzeichnet, dass**
- das System (20) eine Löschsteuerzentrale (64) aufweist,
- wobei die Zentraleinheit (22) zur Übertragung des Alarmsignals S_{A} an die Löschsteuerzentrale (64) ausgebildet ist, und
- wobei die Löschsteuerzentrale (64) ausgebildet ist, eine Löschanlage (68) basierend auf dem übertragenen Alarmsignal S_{A} derart zu steuern, um einen Brand in dem Brandmelderüberwachungsbereich (12) zu löschen, dessen Referenzbrandkenngröße K_{R} von der Brandmeldersensoreinheit (28) des Brandmelders (14) erfasst wurde, der das Brandmeldersignal S_{B} an die Zentraleinheit (22) übertragen hat.

13. Unbemanntes Fahrzeug (2) zur Bestimmung eines verifizierten Brandzustands, aufweisend:
- eine Fahrzeugsensoreinheit (6), die zur Erfassung einer Brandkenngröße K_{F} eines Fahrzeugüberwachungsbereichs (8) ausgebildet ist,
- eine Signalempfangseinheit (10) zum Empfangen eines Instruktionssignals S_{I}, das zumindest einen Zielort (16) repräsentiert, bei dem der Fahrzeugüberwachungsbereich (8), wenn das Fahrzeug (2) an dem Zielort (16) ist, in hinreichender Überlappung mit einem Brandmelderüberwachungsbereich (12) ist, und
- eine Navigationssteuereinheit (18), die dazu ausgebildet ist, das Fahrzeug (2) basierend auf dem empfangenen Instruktionssignal S_{I} selbstständig zu dem Zielort (16) zu navigieren, so dass sich der Fahrzeugüberwachungsbereich (8) und der Brandmelderüberwachungsbereich (12) hinreichend überlappen,
- wobei das Fahrzeug (2) dazu konfiguriert ist, an dem Zielort (16) die Brandkenngröße K_{F} mittels der Fahrzeugsensoreinheit (6) als eine Verifikationsbrandkenngröße K_{V} des Brandmelderüberwachungsbereichs (12) zu erfassen,
- wobei das Fahrzeug (2) zur Bestimmung eines Verifikationsbrandzustands Z_{V} durch Auswertung der Verifikationsbrandkenngröße K_{V} ausgebildet ist,
- und wobei
- das Instruktionssignal S_{I} außerdem eine Referenzbrandkenngröße K_{R} des Brandmelderüberwachungsbereichs (12) repräsentiert, das Fahrzeug (2) dazu konfiguriert ist, den Referenzbrandzustand K_{R} als verifizierten Referenzbrandzustand Z_{VR} zu bestimmen, für den Fall, dass der Referenzbrandzustand Z_{R} und der Verifikationsbrandzustand Z_{V} zumindest hinreichend übereinstimmen, und das Fahrzeug (2) zur Übertragung eines Verifikationssignals S_{V}, das den verifizierten Referenzbrandzustand Z_{VR} repräsentiert, an eine Zentraleinheit (22) ausgebildet ist.

14. Zentraleinheit (22) zur Bestimmung eines verifizierten Brandzustands, **dadurch gekennzeichnet, dass**
- die Zentraleinheit (22) zum Empfang eines Brandmeldersignals S_{B} eines Brandmelders (14) ausgebildet ist,
die Zentraleinheit (22) dazu konfiguriert ist, in dem Fall, dass ein von dem Brandmelder (14) empfangenes Brandmeldersignal S_{B} einen Referenzbrandzustand Z_{R} repräsentiert, der einer Verifizierung bedarf, ein Instruktionssignal S_{I} an ein Fahrzeug (2) zu übertragen,
wobei das Instruktionssignal S_{I} zumindest einen Zielort (16) für das Fahrzeug (2) repräsentiert,
wobei ein Fahrzeugüberwachungsbereich (8) einer Fahrzeugsensoreinheit (6) des Fahrzeugs (2) in hinreichender Überlappung mit einem Brandmelderüberwachungsbereich (12) des Brandmelders (14) ist, wenn das Fahrzeug (2) an dem Zielort (16) ist, so dass das Fahrzeug (2) mittels der Fahrzeugsensoreinheit (6) eine Verifikationsbrandkenngröße K_{V} des Brandmelderüberwachungsbereichs (12) erfassen kann,
wobei die Zentraleinheit (22) dazu ausgebildet ist, ein Verifikationssignal S_{V}, das einen der Verifikationsbrandkenngröße K_{V} entsprechenden Verifikationsbrandzustand Z_{V} repräsentiert, von dem Fahrzeug (2) zu empfangen, und
wobei die Zentraleinheit (22) dazu konfiguriert ist, den Referenzbrandzustand Z_{R} als verifizierten Referenzbrandzustand Z_{VR} zu bestimmen, für den Fall, dass der Referenzbrandzustand Z_{R} und der Verifikationsbrandzustand Z_{V} zumindest hinreichend übereinstimmen.

15. Zentraleinheit (22) nach dem vorhergehenden Anspruch, **dadurch gekennzeichnet, dass** die Zentraleinheit (22) eine Brandmelder- und/oder Löschsteuerzentrale ist oder zumindest davon mitgebildet wird.

16. Verfahren zur Bestimmung eines verifizierten Brandzustands, aufweisend die folgenden Schritte:
a) Erfassen einer Referenzbrandkenngröße K_{R} eines Brandmelderüberwachungsbereichs (12) mittels einer Brandmeldersensoreinheit (28) eines Brandmelders (14);
b) Bestimmung eines Referenzbrandzustands Z_{R} durch Auswertung der Referenzbrandkenngröße K_{R} mittels des Brandmelders (14);
c) Übertragen eines Brandmeldersignals S_{B}, das den Referenzbrandzustand Z_{R} repräsentiert, von dem Brandmelder (14) an eine Zentraleinheit (22);
d) Übertragen eines Instruktionssignals S_{I} von der Zentraleinheit (22) an ein Fahrzeug (2), in dem Fall, dass das von dem Brandmelder (14) übertragene Brandmeldersignal S_{B} einen Referenzbrandzustand Z_{R} repräsentiert, der einer Verifizierung bedarf, wobei das Fahrzeug (2) eine Fahrzeugsensoreinheit (6) aufweist, die zur Erfassung einer Brandkenngröße K_{F} eines Fahrzeugüberwachungsbereichs (8) ausgebildet ist, und wobei das Instruktionssignal S_{I} zumindest einen Zielort (16) für das Fahrzeug (2) repräsentiert, wobei der Fahrzeugüberwachungsbereich (8) in hinreichender Überlappung mit dem Brandmelderüberwachungsbereich (12) ist, wenn das Fahrzeug (2) an dem Zielort (16) ist;
e) Navigieren des Fahrzeugs (2), und zwar vorzugsweise selbstständig, zu dem Zielort (16) basierend auf dem übertragenen Instruktionssignal S_{I} mittels einer Navigationssteuereinheit (18) des Fahrzeugs (2), so dass sich der Fahrzeugüberwachungsbereich (8) und der Brandmelderüberwachungsbereichs (12) hinreichend überlappen;
f) Erfassen der Brandkenngröße K_{F} als eine Verifikationsbrandkenngröße K_{V} des Brandmelderüberwachungsbereichs (12) mittels der Fahrzeugsensoreinheit (6); und
g) Bestimmung eines Verifikationsbrandzustands Z_{V} durch Auswertung der Verifikationsbrandkenngröße K_{V} mittels des Fahrzeugs (2);
wobei das Verfahren entweder **gekennzeichnet ist durch** die Schritte:
h1) Übertragung eines Verifikationssignals S_{V}, das den Verifikationsbrandzustand Z_{V} repräsentiert, von dem Fahrzeug (2) an die Zentraleinheit (22); und
i1) Bestimmen des Referenzbrandzustands Z_{R} als verifizierten Referenzbrandzustand Z_{VR} mittels der Zentraleinheit (22), für den Fall, dass der Referenzbrandzustand Z_{R} und der Verifikationsbrandzustand Z_{V} zumindest hinreichend übereinstimmen;
oder **gekennzeichnet ist durch** die Schritte:
h2) Bestimmen des Referenzbrandzustands Z_{R} als verifizierten Referenzbrandzustand Z_{VR} mittels des Fahrzeugs (2), für den Fall, dass der Referenzbrandzustand Z_{R} und der Verifikationsbrandzustand Z_{V} zumindest hinreichend übereinstimmen, wobei das Instruktionssignal S_{I} außerdem den Referenzbrandzustand Z_{R} repräsentiert; und
i2) Übertragen eines Verifikationssignals S_{V}, das den verifizierten Referenzbrandzustand Z_{VR} repräsentiert, an die Zentraleinheit (22).

17. Verfahren nach dem vorhergehenden Anspruch, **gekennzeichnet durch** den Schritt:
Bestimmen eines Alarmsignals S_{A} mittels des Fahrzeugs (2) bzw. mittels der Zentraleinheit (22), wobei das Alarmsignal S_{A} den verifizierten Referenzbrandzustand Z_{VR} repräsentiert, für den Fall, dass der Referenzbrandzustand Z_{R} als verifizierter Referenzbrandzustand Z_{VR} bestimmt wurde.

18. Verfahren nach einem der vorhergehenden Ansprüche 16 bis 17, **gekennzeichnet durch** den Schritt: Bestimmen eines Fehlalarmsignals S_{F} mittels des Fahrzeugs (2) bzw. der Zentraleinheit (22), wobei das Fehlalarmsignal S_{F} eine fehlerhafte Bestimmung eines Referenzbrandzustands Z_{R} und/oder einen nicht verifizierten Referenzbrandzustand repräsentiert, für den Fall, dass der Referenzbrandzustand Z_{R} nicht als verifizierten Referenzbrandzustand Z_{VR} bestimmt wurde.

19. Verfahren nach einem der vorhergehenden Ansprüche 16 bis 18, **gekennzeichnet durch** den weiteren Schritt: Bestimmen eines Brandorts (84) mittels der Fahrzeugsensoreinheit (6) des Fahrzeugs (2), wenn das Fahrzeug (2) an dem Zielort (16) ist.

20. Verfahren nach dem vorhergehenden Anspruch, **gekennzeichnet durch** den weiteren Schritt: Ausrichtung der Fahrzeugsensoreinheit (6) in Richtung des Brandorts (4).

21. Verfahren nach einem der vorhergehenden Ansprüche 16 bis 20, wobei das Fahrzeug eine dreh- und/oder schwenkbare Ausrichtungsvorrichtung (86) aufweist, an der die Fahrzeugsensoreinheit (6) befestigt ist, und wobei das Verfahren weiter **gekennzeichnet ist durch** den Schritt: Ausrichten der Fahrzeugsensoreinheit (6) mittels der Ausrichtungsvorrichtung (86), vorzugsweise in Richtung des Brandorts (84).

## Claims

1. A system (20) for determining a verified fire status, having:
- a central unit (22), a stationary fire detector (14) and an unmanned vehicle (2),
- wherein the fire detector (14) has a fire detector sensor unit (28), which is designed for capturing a reference fire parameter K_{R} of a fire detector monitoring area (12),
- wherein the fire detector (14) is designed for determining a reference fire status Z_{R} by evaluating the reference fire parameter K_{R},
- wherein the fire detector (14) is designed for transmitting a fire detector signal S_{B}, which represents the reference fire status Z_{R}, to the central unit (22),
- wherein the central unit (22) is configured for transmitting an instruction signal S_{I} to the vehicle (2), in the event that the fire detector signal S_{B} transmitted by the fire detector (14) represents a fire detector status Z_{R}, which needs to be verified,
- wherein the vehicle (2) has a vehicle sensor unit (6), which is designed for capturing a fire parameter K_{F} of a vehicle monitoring area (8),
- wherein the instruction signal S_{I} represents at least one target location (16) for the vehicle (2),
- wherein the vehicle monitoring area (8) is in sufficient overlap with the fire detector monitoring area (12), when the vehicle (2) is at the target location (16),
- wherein the vehicle (2) is designed for navigating, in particular independently, to the target location (16) on the basis of the transmitted instruction signal S_{I}, so that the vehicle monitoring area (8) and the fire detector monitoring area (12) overlap sufficiently,
- wherein the vehicle (2) is configured for capturing the fire parameter K_{F} at the target location (16) by means of the vehicle sensor unit (6) as a verification fire parameter K_{V} of the fire detector monitoring area (12),
- wherein the vehicle (2) is designed for determining a verification fire status Z_{V} by evaluating the verification fire parameter K_{V},
and wherein either
∘ the vehicle (2) is designed for transmitting a verification signal S_{V}, which represents the verification fire status Z_{V}, to the central unit (22), and the central unit (22) is configured for determining the reference fire status Z_{R} as verified reference fire status Z_{VR}, in the event that the reference fire status Z_{R} and the verification fire status Z_{V} correspond at least sufficiently;
or wherein
∘ the instruction signal S_{I} furthermore represents the reference fire status Z_{R}, the vehicle (2) is configured for determining the reference fire status Z_{R} as verified reference fire status Z_{VR}, in the event that the reference fire status Z_{R} and the verification fire status Z_{V} correspond at least sufficiently, and the vehicle (2) is designed for transmitting the verification signal S_{V}, which represents the verified reference fire status Z_{VR}, to the central unit (22).

2. The system (20) according to the preceding claim, **characterized in that** the vehicle (2) and/or the central unit (22) is or are designed, respectively, for determining an alarm signal S_{A} on the basis of the verified reference fire status Z_{VR}.

3. The system (20) according to one of the preceding claims, **characterized in that** the vehicle (2) and/or the central unit (22) is or are designed, respectively, for determining a false alarm signal S_{F}, which represents a faulty determination of a reference fire status Z_{R} and/or a non-verified reference fire status, in the event that the reference fire status Z_{R} has been determined as non-verified reference fire status Z_{VR}.

4. The system (20) according to one of the preceding claims, **characterized in that** the vehicle (2) is designed as an aircraft, in particular a drone, or as a land vehicle, in particular a robot vehicle.

5. The system (20) according to one of the preceding claims, **characterized in that** the vehicle sensor unit (6) has a camera.

6. The system (20) according to one of the preceding claims, **characterized in that** the vehicle (2) is designed for determining a fire location (84) by means of the vehicle sensor unit (6) at the target location (16).

7. The system (20) according to one of the preceding claims, **characterized in that** the vehicle (2) is configured for determining the fire location (84) on the basis of a fire parameter K_{F} captured at the target location (16).

8. The system (20) according to one of the preceding claims, **characterized in that** the vehicle (2) is designed for aligning the vehicle sensor unit (6) in the direction of the fire location (4).

9. The system (20) according to one of the preceding claims, **characterized in that** the vehicle (2) is configured for capturing the verification parameter when the vehicle sensor unit (6) is aligned in the direction of the fire location (84).

10. The system (20) according to one of the preceding claims, **characterized in that** the system (20) has one or more fire detectors (14), wherein the central unit (22) is designed, based on a transmitted fire detector signal S_{B} of a fire detector (14), to detect a fire detector location of the fire detector (14) which transmitted the fire detector signal S_{B}, and **in that** the central unit (22) is designed to determine the target location (16) based on the fire detector location.

11. The system (20) according to one of the preceding claims, **characterized in that** a measuring principal of the fire detector sensor unit (28) and a measuring principal of the vehicle sensor unit (6) are different.

12. The system (20) according to one of the preceding claims 2 to 11, **characterized in that**
- the system (20) has an extinguishing control center (64),
- wherein the central unit (22) is designed for transmitting the alarm signal S_{A} to the extinguishing control center (64), and
- wherein the extinguishing control center (64) is designed for controlling an extinguishing installation (68) on the basis of the transmitted alarm signal SA for extinguishing a fire in the fire detector monitoring area (12), the reference fire parameter KR of which has been captured by the fire detector sensor unit (28) of the fire detector (14), which has transmitted the fire detector signal S_{B} to the central unit (22).

13. An unmanned vehicle (2) for determining a verified fire status, having:
- a vehicle sensor unit (6), which is designed for capturing a fire parameter K_{F} of a vehicle monitoring area (8),
- a signal receiving unit (10) for receiving an instruction signal S_{I}, which represents at least one target location (16), at which the vehicle monitoring area (8), is in sufficient overlap with a fire detector monitoring area (12), when the vehicle (2) is at the target location (16), and
- a navigation control unit (18), which is designed for independently navigating the vehicle (2) to the target location (16) on the basis of the received instruction signal SI, so that the vehicle monitoring area (8) and the fire detector monitoring area (12) overlap sufficiently,
- wherein the vehicle (2) is configured for capturing the fire parameter K_{F} by means of the vehicle sensor unit (6) as a verification fire parameter K_{V} of the fire detector monitoring area (12) at the target location (16),
- wherein the vehicle (2) is configured for determining a verification fire status Z_{V} by evaluating the verification fire parameter K_{V},
- and wherein
- the instruction signal S_{I} furthermore represents a reference fire parameter K_{R} of the fire detector monitoring area (12), the vehicle (2) is configured for determining the reference fire status K_{R} as verified reference fire status Z_{VR}, in the event that the reference fire status Z_{R} and the verification fire status Z_{V} correspond at least sufficiently, and the vehicle (2) is designed for transmitting a verification signal S_{V}, which represents the verified reference fire status Z_{VR}, to a central unit (22).

14. A central unit (22) for determining a verified fire status, **characterized in that**
- the central unit (22) is designed for receiving a fire detector signal S_{B} of a fire detector (14), the central unit (22) is configured, in the event that a fire detector signal S_{B} received from the fire detector (14) represents a reference fire status Z_{R}, which needs to be verified, for transmitting an instruction signal S_{I} to a vehicle (2),
wherein the instruction signal S_{I} represents at least one target location (16) for the vehicle (2),
wherein a vehicle monitoring area (8) of a vehicle sensor unit (6) of the vehicle (2) is in sufficient overlap with a fire detector monitoring area (12) of the fire detector (14), when the vehicle (2) is at the target location (16), so that the vehicle (2) can capture a verification fire parameter K_{V} of the fire detector monitoring area (12) by means of the vehicle sensor unit (6),
wherein the central unit (22) is designed for receiving a verification signal S_{V}, which represents a verification fire status Z_{V}, which corresponds to the verification fire parameter K_{V}, from the vehicle (2),
and
wherein the central unit (22) is configured for determining the reference fire status Z_{R} as verified reference fire status Z_{VR}, in the event that the reference fire status Z_{R} and the verification fire status Z_{V} correspond at least sufficiently.

15. The central unit (22) according to the preceding claim, **characterized in that** the central unit (22) is a fire detector and/or extinguishing control center or is at least partially formed thereby.

16. A method for determining a verified fire status, having the following steps:
a) capturing a reference fire parameter K_{R} of a fire detector monitoring area (12) by means of a fire detector sensor unit (28) of a fire detector (14);
b) determining a reference fire status Z_{R} by evaluating the reference fire parameter K_{R} by means of the fire detector (14);
c) transmitting a fire detector signal S_{B}, which represents the reference fire status Z_{R}, from the fire detector (14) to a central unit (22);
d) transmitting an instruction signal S_{I} from the central unit (22) to a vehicle (2), in the event that the fire detector signal S_{B} transmitted by the fire detector (14) represents a reference fire status Z_{R}, which needs to be verified, wherein the vehicle (2) has a vehicle sensor unit (6), which is designed for capturing a fire parameter K_{F} of a vehicle monitoring area (8), and wherein the instruction signal S_{I} represents at least one target location (16) for the vehicle (2), wherein the vehicle monitoring area (8) is in sufficient overlap with the fire detector monitoring area (12), when the vehicle (2) is at the target location (16);
e) navigating the vehicle (2), namely preferably independently, to the target location (16) on the basis of the transmitted instruction signal S_{I} by means of a navigation control unit (18) of the vehicle (2), so that the vehicle monitoring area (8) and the fire detector monitoring area (12) overlap sufficiently;
f) capturing the fire parameter K_{F} as a verification fire parameter K_{V} of the fire detector monitoring area (12) by means of the vehicle sensor unit (6); and
g) determining a verification fire status Z_{V} by evaluating the verification fire parameter K_{V} by means of the vehicle (2);
wherein the method is either **characterized by** the steps:
h1) transmitting a verification signal S_{V}, which represents the verification fire status Z_{V}, from the vehicle (2) to the central unit (22); and
i1) determining the reference fire status Z_{R} as verified reference fire status Z_{VR} by means of the central unit (22), in the event that the reference fire status Z_{R} and the verification fire status Z_{V} correspond at least sufficiently;
or is **characterized by** the steps:
h2) determining the reference fire status Z_{R} as verified reference fire status Z_{VR} by means of the vehicle (2), in the event that the reference fire status Z_{R} and the verification fire status Z_{V} correspond at least sufficiently, wherein the instruction signal S_{I} furthermore represents the reference fire status Z_{R}; and
i2) transmitting a verification signal S_{V}, which represents the verified reference fire status Z_{VR}, to the central unit (22).

17. The method according to the preceding claims, **characterized by** the step: determining an alarm signal S_{A} by means of the vehicle (2) or by means of the central unit (22), respectively, wherein the alarm signal S_{A} represents the verified reference fire status Z_{VR}, in the event that the reference fire status Z_{R} has been determined as verified reference fire status Z_{VR}.

18. The method according to one of the preceding claims 16 to 17, **characterized by** the step: determining a false alarm signal S_{F} by means of the vehicle (2) or the central unit (22), respectively, wherein the false alarm signal S_{F} represents a faulty determination of a reference fire status Z_{R} and/or a non-verified reference fire status, in the event that the reference fire status Z_{R} has not been determined as verified reference fire status Z_{VR}.

19. The method according to one of the preceding claims 16 to 18, **characterized by** the further step: determining a fire location (84) by means of the vehicle sensor unit (6) of the vehicle (2), when the vehicle (2) is at the target location (16).

20. The method according to the preceding claim, **characterized by** the further step:
aligning the vehicle sensor unit (6) in the direction of the fire location (4).

21. The method according to one of the preceding claims 16 to 20, wherein the vehicle has a rotatable and/or pivotable aligning device (86), to which the vehicle sensor unit (6) is fastened, and wherein the method is further **characterized by** the step: aligning the vehicle sensor unit (6) by means of the aligning device (86), preferably in the direction of the fire location (84).

## Revendications

1. Système (20) pour la détermination d'un état d'incendie vérifié, présentant :
- une unité centrale (22), une alarme incendie fixe (14) et un véhicule sans conducteur (2),
- dans lequel l'alarme incendie (14) présente une unité de capteurs d'alarme incendie (28) qui est conçue pour la détection d'une grandeur caractéristique d'incendie de référence K_{R} d'une zone de surveillance d'alarme incendie (12),
- dans lequel l'alarme incendie (14) est conçue pour la détermination d'un état d'incendie de référence Z_{R} par le biais de l'analyse de la grandeur caractéristique d'incendie de référence K_{R},
- dans lequel l'alarme incendie (14) est conçue pour la transmission d'un signal d'alarme incendie S_{B} qui représente l'état d'incendie de référence Z_{R} à l'unité centrale (22),
- dans lequel l'unité centrale (22) est configurée, dans le cas où le signal d'alarme incendie S_{B} transmis par l'alarme incendie (14) représente un état d'incendie de référence Z_{R}, qui a besoin d'une vérification, pour transmettre un signal d'instruction S_{I} au véhicule (2),
- dans lequel le véhicule (2) présente une unité de capteurs de véhicule (6) qui est conçue pour la détection d'une grandeur caractéristique d'incendie K_{F} d'une zone de surveillance de véhicule (8),
- dans lequel le signal d'instruction S_{I} représente au moins un lieu de destination (16) pour le véhicule (2),
- dans lequel la zone de surveillance de véhicule (8) se superpose suffisamment avec la zone de surveillance d'alarme incendie (12), lorsque le véhicule (2) est sur le lieu de destination (16),
- dans lequel le véhicule (2) est conçu, en se basant sur le signal d'instruction S_{I} transmis, pour naviguer, en particulier de manière autonome, jusqu'au lieu de destination (16), de sorte que la zone de surveillance de véhicule (8) et la zone de surveillance d'alarme incendie (12) se superposent suffisamment,
- dans lequel le véhicule (2) est configuré pour détecter sur le lieu de destination (16) la grandeur caractéristique d'incendie K_{F} au moyen de l'unité de capteurs de véhicule (6) en tant que grandeur caractéristique d'incendie de vérification K_{V} de la zone de surveillance d'alarme incendie (12),
- dans lequel le véhicule (2) est conçu pour la détermination d'un état d'incendie de vérification Z_{V} par le biais de l'analyse de la grandeur caractéristique d'incendie de vérification K_{V},
et dans lequel soit
-- le véhicule (2) est configuré pour la transmission d'un signal de vérification S_{V} qui représente l'état d'incendie de vérification Z_{V}, à l'unité centrale (22) et l'unité centrale (22) est configurée pour déterminer l'état d'incendie de référence Z_{R} en tant qu'état d'incendie de référence vérifié Z_{VR}, pour le cas où l'état d'incendie de référence Z_{R} et l'état d'incendie de vérification Z_{V} concordent au moins suffisamment,
soit dans lequel
-- le signal d'instruction S_{I} représente en outre l'état d'incendie de référence Z_{R}, le véhicule (2) est configuré pour déterminer l'état d'incendie de référence Z_{R} en tant qu'état d'incendie de référence vérifié Z_{VR}, pour le cas où l'état d'incendie de référence Z_{R} et l'état d'incendie de vérification Z_{V} concordent au moins suffisamment, et le véhicule (2) est conçu pour la transmission du signal de vérification Sv qui représente l'état d'incendie de référence vérifié Z_{VR} à l'unité centrale (22).

2. Système (20) selon la revendication précédente, **caractérisé en ce que** le véhicule (2) et/ou l'unité centrale (22) est ou sont conçus pour déterminer un signal d'alerte S_{A} en se basant sur l'état d'incendie de référence vérifié Z_{VR}.

3. Système (20) selon l'une des revendications précédentes, **caractérisé en ce que** le véhicule (2) et/ou l'unité centrale (22) est ou sont conçus pour déterminer un signal de fausse alerte S_{F} qui représente une détermination incorrecte d'un état d'incendie de référence Z_{R} et/ou un état d'incendie de référence non vérifié, pour le cas où l'état d'incendie de référence Z_{R} n'a pas été déterminé en tant qu'état d'incendie de référence vérifié Z_{VR}.

4. Système (20) selon l'une des revendications précédentes, **caractérisé en ce que** le véhicule (2) est conçu en tant qu'aéronef, en particulier un drone, ou en tant que véhicule terrestre, en particulier un véhicule robotisé.

5. Système (20) selon l'une des revendications précédentes, **caractérisé en ce que** l'unité de capteurs de véhicule (6) présente une caméra.

6. Système (20) selon l'une des revendications précédentes, **caractérisé en ce que** le véhicule (2) est conçu pour la détermination d'un lieu d'incendie (84) sur le lieu cible (16) au moyen de l'unité de capteurs de véhicule (6).

7. Système (20) selon la revendication précédente, **caractérisé en ce que** le véhicule (2) est configuré pour la détermination du lieu d'incendie (84) en se basant sur une grandeur caractéristique d'incendie K_{F} détectée sur le lieu de destination (16).

8. Système (20) selon la revendication précédente, **caractérisé en ce que** le véhicule (2) est conçu pour l'orientation de l'unité de capteurs de véhicule (6) dans la direction du lieu d'incendie (4).

9. Système (20) selon la revendication précédente, **caractérisé en ce que** le véhicule (2) est configuré pour détecter la grandeur caractéristique de vérification lorsque l'unité de capteurs de véhicule (6) est orientée dans la direction du lieu d'incendie (84).

10. Système (20) selon l'une des revendications précédentes, **caractérisé en ce que** le système (20) présente plusieurs des alarmes incendie fixes (14), dans lequel l'unité centrale (22) est conçue pour déterminer en se basant sur un signal d'alarme incendie S_{B} transmis d'une des alarmes incendie (14) un lieu d'alarme incendie de l'alarme incendie (14) qui a transmis le signal d'alarme incendie S_{B}, et **en ce que** l'unité centrale (22) est conçue pour déterminer le lieu de destination (16) en se basant sur le lieu d'alarme incendie.

11. Système (20) selon l'une des revendications précédentes, **caractérisé en ce qu'**un principe de mesure de l'unité de capteurs d'alarme incendie (28) et un principe de mesure de l'unité de capteurs de véhicule (6) sont différents.

12. Système (20) selon l'une des revendications 2 à 11, **caractérisé en ce que**
- le système (20) présente une centrale de commande d'extinction (64),
- dans lequel l'unité centrale (22) est conçue pour la transmission du signal d'alerte S_{A} à la centrale de commande d'extinction (64), et
- dans lequel la centrale de commande d'extinction (64) est conçue pour commander une installation d'extinction (68) en se basant sur le signal d'alerte S_{A} transmis de sorte que pour éteindre un incendie dans la zone de surveillance d'alarme incendie (12), zone dont la grandeur caractéristique d'incendie de référence K_{R} a été détectée par l'unité de capteurs d'alarme incendie (28) de l'alarme incendie (14), qui a transmis le signal d'alarme incendie S_{B} à l'unité centrale (22).

13. Véhicule sans conducteur (2) pour la détermination d'un état d'incendie vérifié, présentant :
- une unité de capteurs de véhicule (6) qui est conçue pour la détection d'une grandeur caractéristique d'incendie K_{F} d'une zone de surveillance de véhicule (8),
- une unité de réception de signal (10) pour la réception d'un signal d'instruction S_{I} qui représente au moins un lieu de destination (16) dans lequel la zone de surveillance de véhicule (8), lorsque le véhicule (2) est sur le lieu de destination (16), se superpose suffisamment avec une zone de surveillance d'alarme incendie (12), et
- une unité de commande de navigation (18) qui est conçue pour la navigation du véhicule (2) en se basant sur le signal d'instruction S_{I} reçu de manière autonome jusqu'au lieu de destination (16), de sorte que la zone de surveillance de véhicule (8) et la zone de surveillance d'alarme incendie (12) se superposent suffisamment,
- dans lequel le véhicule (2) est configuré pour détecter sur le lieu de destination (16) la grandeur caractéristique d'incendie K_{F} au moyen de l'unité de capteurs de véhicule (6) en tant que grandeur caractéristique d'incendie de vérification K_{V} de la zone de surveillance d'alarme incendie (12),
- dans lequel le véhicule (2) est conçu pour la détermination d'un état d'incendie de vérification Z_{V} par le biais de l'analyse de la grandeur caractéristique d'incendie de vérification K_{V},
- et dans lequel
-- le signal d'instruction S_{I} représente en outre une grandeur caractéristique d'incendie de référence K_{R} de la zone de surveillance d'alarme incendie (12), le véhicule (2) est configuré pour déterminer l'état d'incendie de référence K_{R} en tant qu'état d'incendie de référence vérifié Z_{VR}, pour le cas où l'état d'incendie de référence Z_{R} et l'état d'incendie de vérification Z_{V} concordent au moins suffisamment, et le véhicule (2) est conçu pour la transmission d'un signal de vérification S_{V} qui représente l'état d'incendie de référence vérifié Z_{VR} à une unité centrale (22).

14. Unité centrale (22) pour la détermination d'un état d'incendie vérifié, **caractérisée en ce que**
- l'unité centrale (22) est conçue pour la réception d'un signal d'alarme incendie S_{B} d'une alarme incendie (14),
l'unité centrale (22) est configurée, dans le cas où un signal d'alarme incendie S_{B} reçu par l'alarme incendie (14) représente un état d'incendie de référence Z_{R} qui a besoin d'une vérification, pour transmettre un signal d'instruction S_{I} à un véhicule (2),
dans lequel le signal d'instruction S_{I} représente au moins un lieu de destination (16) pour le véhicule (2),
dans lequel une zone de surveillance de véhicule (8) d'une unité de capteurs de véhicule (6) du véhicule (2) se superpose suffisamment avec une zone de surveillance d'alarme incendie (12) de l'alarme incendie (14) lorsque le véhicule (2) est sur le lieu de destination (16), de sorte que le véhicule (2) peut détecter au moyen de l'unité de capteurs de véhicule (6) une grandeur caractéristique d'incendie de vérification K_{V} de la zone de surveillance d'alarme incendie (12),
dans lequel l'unité centrale (22) est conçue pour recevoir par le véhicule (2) un signal de vérification S_{V} qui représente un état d'incendie de vérification Z_{V} correspondant à la valeur caractéristique d'incendie de vérification K_{V}, et
dans lequel l'unité centrale (22) est configurée pour déterminer l'état d'incendie de référence Z_{R} en tant qu'état d'incendie de référence vérifié Z_{VR}, pour le cas où l'état d'incendie de référence Z_{R} et l'état d'incendie de vérification Z_{V} concordent au moins suffisamment.

15. Unité centrale (22) selon la revendication précédente, **caractérisée en ce que** l'unité centrale (22) est une centrale d'alarme incendie et/ou de commande d'extinction ou est au moins formée conjointement par celles-ci.

16. Procédé pour la détermination d'un état d'incendie vérifié, présentant les étapes suivantes :
a) détection d'une grandeur caractéristique d'incendie de référence K_{R} d'une zone de surveillance d'alarme incendie (12) au moyen d'une unité de capteurs d'alarme incendie (28) d'une alarme incendie (14) ;
b) détermination d'un état d'incendie de référence Z_{R} par le biais de l'analyse de la grandeur caractéristique d'incendie de référence K_{R} au moyen de l'alarme incendie (14) ;
c) transmission d'un signal d'alarme incendie S_{B} qui représente l'état d'incendie de référence Z_{R} de l'alarme incendie (14) à l'unité centrale (22) ;
d) transmission d'un signal d'instruction S_{I} de l'unité centrale (22) à un véhicule (2), dans le cas où le signal d'alarme incendie S_{B} transmis par l'alarme incendie (14) représente un état d'incendie de référence Z_{R} qui a besoin d'une vérification, dans lequel le véhicule (2) présente une unité de capteurs de véhicule (6) qui est conçue pour la détection d'une grandeur caractéristique d'incendie K_{F} d'une zone de surveillance de véhicule (8), et dans lequel le signal d'instruction S_{I} représente au moins un lieu de destination (16) pour le véhicule (2), dans lequel la zone de surveillance de véhicule (8) se superpose suffisamment avec la zone de surveillance d'alarme incendie (12) lorsque le véhicule (2) est sur le lieu de destination (16) ;
e) navigation du véhicule (2), à savoir de préférence de manière autonome, vers le lieu de destination (16) en se basant sur le signal d'instruction S_{I} transmis au moyen d'une unité de commande de navigation (18) du véhicule (2), de sorte que la zone de surveillance de véhicule (8) et la zone de surveillance d'alarme incendie (12) se superposent suffisamment ;
f) détection de la grandeur caractéristique d'incendie K_{F} en tant que grandeur caractéristique d'incendie de vérification K_{V} de la zone de surveillance d'alarme incendie (12) au moyen de l'unité de capteurs de véhicule (6) ; et
g) détermination d'un état d'incendie de vérification Z_{V} par le biais de l'analyse de la grandeur caractéristique d'incendie de vérification K_{V} au moyen du véhicule (2) ;
dans lequel le procédé est soit **caractérisé par** les étapes suivantes :
h1) transmission d'un signal de vérification S_{V} qui représente l'état d'incendie de vérification Z_{V} du véhicule (2) à l'unité centrale (22) ; et
i1) détermination de l'état d'incendie de référence Z_{R} en tant qu'état d'incendie de référence vérifié Z_{VR} au moyen de l'unité centrale (22), pour le cas où l'état d'incendie de référence Z_{R} et l'état d'incendie de vérification Z_{V} concordent au moins suffisamment ;
soit **caractérisé par** les étapes suivantes :
h2) détermination de l'état d'incendie de référence Z_{R} en tant qu'état d'incendie de référence vérifié Z_{VR} au moyen du véhicule (2), pour le cas où l'état d'incendie de référence Z_{R} et l'état d'incendie de vérification Z_{V} concordent au moins suffisamment, dans lequel le signal d'instruction S_{I} représente en outre l'état d'incendie de référence Z_{R} ; et
i2) transmission d'un signal de vérification S_{V} qui représente l'état d'incendie de référence Z_{VR} à l'unité centrale (22).

17. Procédé selon la revendication précédente, **caractérisé par** l'étape suivante : détermination d'un signal d'alerte S_{A} au moyen du véhicule (2) respectivement au moyen de l'unité centrale (22), dans lequel le signal d'alerte S_{A} représente l'état d'incendie de référence vérifié Z_{VR}, pour le cas où l'état d'incendie de référence Z_{R} a été déterminé en tant qu'état de référence vérifié Z_{VR}.

18. Procédé selon l'une des revendications précédentes 16 et 17, **caractérisé par** l'étape suivante : détermination d'un signal de fausse alerte S_{F} au moyen du véhicule (2) respectivement de l'unité centrale (22), dans lequel le signal de fausse alerte S_{F} représente une détermination incorrecte d'un état d'incendie de référence Z_{R} et/ou un état d'incendie de référence non vérifié, pour le cas où l'état d'incendie de référence Z_{R} n'a pas été déterminé en tant qu'état d'incendie de référence vérifié Z_{VR}.

19. Procédé selon l'une des revendications précédentes 16 à 18, **caractérisé par** l'étape supplémentaire suivante :
détermination d'un lieu d'incendie (84) au moyen de l'unité de capteurs de véhicule (6) du véhicule (2) lorsque le véhicule (2) est sur le lieu de destination (16).

20. Procédé selon la revendication précédente, **caractérisé par** l'étape supplémentaire suivante :
orientation de l'unité de capteurs de véhicule (6) dans la direction du lieu d'incendie (4).

21. Procédé selon l'une des revendications 16 à 20, dans lequel le véhicule présente un dispositif de d'orientation pouvant tourner et/ou pivoter (86) auquel l'unité de capteurs de véhicule (6) est fixée, et dans lequel le procédé est en outre **caractérisé par** l'étape suivante : orientation de l'unité de capteurs de véhicule (6) au moyen du dispositif d'orientation (86), de préférence dans la direction du lieu d'incendie (84).
